# EUROPEAN PATENT APPLICATION

(11) **EP 4 212 256 A1**
(43) Date of publication of application: **19.07.2023**
(21) Application number: 21866869.7
(22) Date of filing: 10.09.2021
(51) Int. Cl.: B05D 7/24, B32B 27/00, C08F 20/10, C08F 290/06, C08G 77/48, C08K 5/541, C08K 5/5415, C08L 33/10, C08L 33/12, C08L 83/06, C09D 183/04, C09K 3/18

(54) **RESIN COMPOSITION, CURED PRODUCT AND MANUFACTURING METHOD THEREFOR, AND LAMINATE**

(30) Priority: 11.09.2020 JP 2020153163; 30.11.2020 JP 2020198572; 30.11.2020 JP 2020199028; 30.11.2020 JP 2020199037
(71) Applicant: Mitsubishi Chemical Corporation, Chiyoda-ku Tokyo 100-8251 (JP)
(72) Inventor: SANADA, Miki, Tokyo 100-8251 (JP); SATO, Yoshihide, Tokyo 100-8251 (JP)
(74) Representative: Hoffmann Eitle
(86) International application number: PCT/JP2021/033338
(87) International publication number: WO 2022/054912

(57) **Abstract**

There is provided a resin composition containing a copolymer (A) containing a constitutional unit based on a silicone macromonomer (X) that contains a polyalkylsiloxane unit and a constitutional unit based on a monomer (Y) having a group represented by Formula (1) and a component (B) consisting of a silane compound or a partially hydrolyzed condensate thereof, in which with respect to the total mass of all constitutional units that constitute the copolymer (A), the total of a proportion of the constitutional unit based on the silicone macromonomer (X) and a proportion of the constitutional unit based on the monomer (Y) is 55% by mass or more.

-R¹-M(R²)ᵣ(OR³)ₘ₋ᵣ (1)

## Description

### [Technical Field]

The present invention relates to a resin composition, a cured product and a manufacturing method therefor, and a laminate.

Priority is claimed on Japanese Patent Application No. 2020-153163 filed in Japan on September 11, 2020, and Japanese Patent Application No. 2020-198572, Japanese Patent Application No. 2020-199028, and Japanese Patent Application No. 2020-199037, filed in Japan on November 30, 2020, the contents of which are incorporated herein by reference.

### [Background Art]

A polymethyl methacrylate resin, a polymethacrylimide resin, a polycarbonate resin, a polystyrene resin, an acrylonitrile styrene resin, and the like are used in members such as various lamp lenses for automobiles and covers and the like for grazing, exteriors, and instruments. Resin molded articles produced from these resins are lightweight, have excellent impact resistance, and have favorable transparency.

In recent years, with the miniaturization of various parts, the use of permeable glass, which is excellent in durability, has also increased for cover members.

In recent years, vehicles such as automobiles are sometimes equipped with an advanced driver assistance system (ADAS) including an inter-vehicle distance control system in order to ensure the safety of drivers, pedestrians, and oncoming vehicles. Examples of the inter-vehicle distance control system include a sensor device (sometimes referred to as a millimeter wave radar) using radio waves (millimeter waves) in the frequency band of about 30 to 300 GHz, and a sensor device that measures the properties and distance of an object using laser irradiation (may be referred to as LiDAR).

The sensor device is often arranged on the front emblem of the vehicle or the back side of the front grill in consideration of compatibility with design. However, electromagnetic waves are likely to be attenuated or scattered due to raindrops or snow, and in a case where raindrops or snow adhere to the outermost surface of the emblem, the front grill, and the like, through which the electromagnetic waves pass, a problem may occur in the measurement of the distance to an object. As a result, a surface member of the emblem or the front grill is required to have a function called water slippability that allows water droplets to slip off easily.

As a method of imparting water slippability to a base material surface, there is known a method of coating a base material surface with a coating composition containing a resin having a polydimethylsiloxane structure.

Patent Document 1 proposes a coating composition that contains a silicone composition containing a tetrafunctional alkoxysilane and a trifunctional alkoxysilane or a partially hydrolyzed condensate thereof; a reactive silicone having a specific structure including a polydimethylsiloxane structure; an acid or base catalyst; and water.

### [Citation List]

### [Patent Document]

[Patent Document 1]
Japanese Unexamined Patent Application, First Publication No. 2011-132486

### [Summary of Invention]

### [Technical Problem]

However, according to the studies of the inventors of the present invention, the coating composition described in Patent Document 1 has a high curing temperature, and thus, it is not suitable for, for example, a resin base material. In addition, the compatibility between the component that contributes to water slippability and other components is poor, and the appearance of the formed coating layer is likely to be impaired. Further, the durability of the coating layer is insufficient, and the appearance and the water slippability may be deteriorated in a moisture resistance test.

An object of the present invention is to provide a resin composition that makes it possible to form a cured product excellent in appearance, water slippability and durability, a cured product excellent in appearance, water slippability, weather fastness, and durability, and a manufacturing method therefor, and a laminate having a cured product layer excellent in appearance, water slippability, weather fastness, and durability.

### [Solution to Problem]

The present invention has the following aspects.
[1] A resin composition containing:
   a copolymer (A) containing a constitutional unit based on a silicone macromonomer (X) that contains a polyalkylsiloxane unit and a constitutional unit based on a monomer (Y) having a group represented by Formula (1); and
   a component (B) consisting of a silane compound or a partially hydrolyzed condensate thereof,
   in which with respect to the total mass of all constitutional units that constitute the copolymer (A), the total of a proportion of the constitutional unit based on the silicone macromonomer (X) and a proportion of the constitutional unit based on the monomer (Y) is 55% by mass or more,

      -R¹-M(R²)ᵣ(OR³)ₘ₋ᵣ (1)
   where M represents Al, Fe, In, Ge, Hf, Si, Ti, Sn, Zr, or Ta, R¹ represents a hydrocarbon group having 1 to 5 carbon atoms, R² represents an alkyl group having 1 to 5 carbon atoms, an alkenyl group having 2 to 5 carbon atoms, or an aryl group, R³ represents a hydrogen atom, an alkyl group having 1 to 5 carbon atoms, an alkenyl group having 2 to 5 carbon atoms, an aryl group, or an acyl group, m represents an integer of 3 to 4 depending on M, r represents an integer of 0 to 3, when r is 2 or more, r pieces of R²'s may be different from each other, and when m - r is 2 or more, (m - r) pieces of OR³'s may be different from each other.
[2] The resin composition according to [1], in which the component (B) consists of at least one silane compound represented by Formula (b) or a partially hydrolyzed condensate thereof,

   R⁴₄₋ₙSi(OR⁵)ₕ (b)

   where R⁴ represents a hydrogen atom, an alkyl group, an aryl group, or an aralkyl group, R⁵ represents an alkyl group or a phenyl group, n represents an integer of 2 to 4, n pieces of OR⁵'s may be different from each other, and when n is 2, (4 - n) pieces of R⁴'s may be different from each other.
[3] The resin composition according to [1] or [2], in which the silicone macromonomer (X) has a weight average molecular weight of 500 to 40,000.
[4] The resin composition according to any one of [1] to [3], in which with respect to the total mass of all constitutional units that constitute the copolymer (A), the proportion of the constitutional unit based on the silicone macromonomer (X) is 15% to 60% by mass, and the proportion of the constitutional unit based on the monomer (Y) is 40% to 85% by mass.
[5] The resin composition according to any one of [1] to [4], in which the copolymer (A) has a weight average molecular weight of 3,000 to 400,000.
[6] The resin composition according to any one of [1] to [5], in which the component (B) has a weight average molecular weight of 500 or more.
[7] The resin composition according to any one of [1] to [6], in which the component (B) is a partially hydrolyzed condensate of tetraalkoxysilane.
[8] The resin composition according to any one of [1] to [7], in which the component (B) is a secondary reactant obtained by further subjecting a partially hydrolyzed condensate of at least one kind of the silane compound, the partially hydrolyzed condensate having a weight average molecular weight of 300 to 3,000, to a hydrolytic condensation reaction in a presence of a catalyst.
[9] The resin composition according to any one of [1] to [8], further containing an initiator (C).
[10] The resin composition according to [9], in which the initiator (C) is a photopolymerization initiator.
[11] The resin composition according to [9] or [10], in which the initiator (C) contains at least one selected from the group consisting of a photoacid generator and a photobase generator.
[12] The resin composition according to any one of [1] to [11], which the resin composition is used in a use application for a sensing member.
[13] A cured product of the resin composition according to any one of [1] to [12].
[14] A cured product containing:
   a copolymer (A) containing a constitutional unit based on a silicone macromonomer (X) containing a polyalkylsiloxane unit and a constitutional unit based on a monomer (Y) having a group represented by Formula (1); and
   a component (B) consisting of a silane compound or a partially hydrolyzed condensate thereof,
   in which the cured product has a surface on which 20 µL of distilled water at 23°C has a slipping angle of 60° or less, the slipping angle being measured by tilting a base material according to intermittent tilting in which a tilt angle is intermittently changed by 1°, after carrying out a durability test for 96 hours under conditions of a tank temperature of 50°C and a tank humidity of 99% RH or more and subsequently,

      -R¹-M(R²)ᵣ(OR³)ₘ₋ᵣ (1)
   where M represents Al, Fe, In, Ge, Hf, Si, Ti, Sn, Zr, or Ta, R¹ represents a hydrocarbon
   group having 1 to 5 carbon atoms, R² represents an alkyl group having 1 to 5 carbon atoms, an
   alkenyl group having 2 to 5 carbon atoms, or an aryl group, R³ represents a hydrogen atom, an alkyl
   group having 1 to 5 carbon atoms, an alkenyl group having 2 to 5 carbon atoms, an aryl group, or an
   acyl group, m represents an integer of 3 to 4 depending on M, r represents an integer of 0 to 3, when r
   is 2 or more, r pieces of R²'s may be different from each other, and when m - r is 2 or more, (m - r)
   pieces of OR³'s may be different from each other.
[15] A laminate including a base material and a layer consisting of the cured product according to [14].
[16] A laminate including a primer layer provided on a base material and a layer consisting of the cured product according to [14] provided on the primer layer.
[17] A resin composition containing:
   a copolymer (A) containing a constitutional unit based on a silicone macromonomer (X) that contains a polyalkylsiloxane unit and a constitutional unit based on a monomer (Y) having a group represented by Formula (1);
   a component (B) consisting of a silane compound or a partially hydrolyzed condensate thereof; and
   a photopolymerization initiator,

      -R¹-M(R²)ᵣ(OR³)ₘ₋ᵣ (1)
   where M represents Al, Fe, In, Ge, Hf, Si, Ti, Sn, Zr, or Ta, R¹ represents a hydrocarbon group having 1 to 5 carbon atoms, R² represents an alkyl group having 1 to 5 carbon atoms, an alkenyl group having 2 to 5 carbon atoms, or an aryl group, R³ represents a hydrogen atom, an alkyl group having 1 to 5 carbon atoms, an alkenyl group having 2 to 5 carbon atoms, an aryl group, or an acyl group, m represents an integer of 3 to 4 depending on M, r represents an integer of 0 to 3, when r is 2 or more, r pieces of R²'s may be different from each other, and when m - r is 2 or more, (m - r) pieces of OR³'s may be different from each other.
[18] A cured product containing:
   a copolymer (A) containing a constitutional unit based on a silicone macromonomer (X) that contains a polyalkylsiloxane unit and a constitutional unit based on a monomer (Y) having a group represented by Formula (1);
   a component (B) consisting of a silane compound or a partially hydrolyzed condensate thereof, and
   a photopolymerization initiator,

      -R¹-M(R²)ᵣ(OR³)ₘ₋ᵣ (1)
   where M represents Al, Fe, In, Ge, Hf, Si, Ti, Sn, Zr, or Ta, R¹ represents a hydrocarbon group having 1 to 5 carbon atoms, R² represents an alkyl group having 1 to 5 carbon atoms, an alkenyl group having 2 to 5 carbon atoms, or an aryl group, R³ represents a hydrogen atom, an alkyl group having 1 to 5 carbon atoms, an alkenyl group having 2 to 5 carbon atoms, an aryl group, or an acyl group, m represents an integer of 3 to 4 depending on M, r represents an integer of 0 to 3, when r is 2 or more, r pieces of R²'s may be different from each other, and when m - r is 2 or more, (m - r) pieces of OR³'s may be different from each other.
[19] A manufacturing method for cured product including:
   curing a resin composition containing a copolymer (A) containing a constitutional unit based on a silicone macromonomer (X) that contains a polyalkylsiloxane unit and a constitutional unit based on a monomer (Y) having a group represented by Formula (1) and a component (B) containing a silane compound or a partially hydrolyzed condensate thereof, by heating treatment or active energy ray irradiation,

      -R¹-M(R²)ᵣ(OR³)ₘ₋ᵣ (1)
   where M represents Al, Fe, In, Ge, Hf, Si, Ti, Sn, Zr, or Ta, R¹ represents a hydrocarbon group having 1 to 5 carbon atoms, R² represents an alkyl group having 1 to 5 carbon atoms, an alkenyl group having 2 to 5 carbon atoms, or an aryl group, R³ represents a hydrogen atom, an alkyl group having 1 to 5 carbon atoms, an alkenyl group having 2 to 5 carbon atoms, an aryl group, or an acyl group, m represents an integer of 3 to 4 depending on M, r represents an integer of 0 to 3, when r is 2 or more, r pieces of R²'s may be different from each other, and when m - r is 2 or more, (m - r) pieces of OR³'s may be different from each other.

### [Advantageous Effects of Invention]

According to the present invention, it is possible to provide a resin composition that makes it possible to form a cured product excellent in curability and excellent in appearance, water slippability, weather fastness, and durability, a cured product excellent in appearance, water slippability, weather fastness, and durability, and a manufacturing method therefor, and a laminate having a cured product layer excellent in appearance, water slippability, weather fastness, and durability.

### [Description of Embodiments]

Hereinafter, the embodiments of the present invention will be described in detail. However, the following description is an example of embodiments of the present invention, and the present invention is not limited to the following description as long as it does not exceed the gist of the present invention.

In addition, in a case where the expression "to" is used in this specification, it shall be used as an expression including numerical values or physical property values before and after "to". In addition, in the present invention, in a case where the expression "(meth)acryl" is used, it shall be one or both of "acryl" and "methacryl". The same applies to "(meth)acrylate" and "(meth)acryloyl".

### [Resin composition]

A resin composition according to one aspect of the present invention (hereinafter, also denoted as "the present resin composition") contains a copolymer (A) containing a polydimethylsiloxane unit and a component (B) consisting of at least one specific silane compound or a partially hydrolyzed condensate thereof.

The present resin composition may further contain an initiator (C) and a diluent, as necessary.

The present resin composition may further contain other components than those described above, as necessary.

### <Copolymer (A)>

Copolymer (A) contains a polyalkylsiloxane unit. Since the copolymer (A) contains a polyalkylsiloxane unit, a cured product of the present resin composition exhibits water slippability.

The polyalkylsiloxane unit contains two or more alkylsiloxane units. Examples of the type of polyalkylsiloxane unit include a linear type, a branched type, and a dendrimer type, and among them, it is preferable to include a linear polyalkylsiloxane unit represented by -(Si(R¹⁸)₂O)ₙ-. R¹⁸ represents a hydrocarbon group having 1 to 10 carbon atoms, and it is preferably a hydrocarbon group having 1 to 5 carbon atoms and more preferably a methyl group. n indicates the average degree of polymerization of the polyalkylsiloxane unit.

The average degree of polymerization of the polyalkylsiloxane unit is preferably 5 to 1,000, more preferably 10 to 500, still more preferably 30 to 300, and particularly preferably 50 to 200. In a case where the average degree of polymerization is equal to or larger than the above-described lower limit value, the cured product of the present resin composition is more excellent in water slippability, and in a case where it is equal to or smaller than the above-described upper limit value, a monomer (a silicone macromonomer (X) described later) having a polyalkylsiloxane unit tends to be compatible with other monomers, which makes it easier to produce the copolymer (A).

The copolymer (A) may contain a polyalkylsiloxane unit in the main chain, may contain it in the side chain, or may contain it in both the main chain and the side chain. From the viewpoint of the water slippability and the ease of production of the copolymer (A), it is preferable that at least the side chain contains a polydimethylsiloxane unit.

Considering the ease of introduction of the polyalkylsiloxane unit and the ease of controlling performance such as slippability, the copolymer (A) containing a polyalkylsiloxane unit at least in the side chain is preferably a copolymer containing a constitutional unit (hereinafter, also denoted as a "constitutional unit (X)") based on a silicone macromonomer (X) (hereinafter, also denoted as a "macromonomer (X)") containing a polyalkylsiloxane unit.

From the viewpoint of improving performance such as water slippability, it is preferable that the copolymer (A) further contains a constitutional unit (hereinafter, denoted as a "constitutional unit (Y)") based on a monomer (Y) having a group represented by specific Formula (1).

Within a range in which the performance is not impaired, the copolymer (A) may further contain, as necessary, a constitutional unit (hereinafter, also denoted as a "constitutional unit (Z)") based on a monomer (Z) other than the macromonomer (X) and the monomer (Y).

### (Silicone macromonomer (X))

Examples of the silicone macromonomer (X) include a compound containing a polyalkylsiloxane unit and a polymerizable functional group.

The polymerizable functional group may be any group containing a polymerizable unsaturated bond such as a polymerizable carbon-carbon double bond, and examples thereof include a (meth)acryloyl group, a vinyl group, and a (meth)acrylamide group. Among these, a (meth)acryloyl group is preferable from the viewpoint of ease of copolymerization with other monomers.

The polyalkylsiloxane unit and the polymerizable functional group may be bonded through a linking group. Examples of the linking group include a hydrocarbon group such as an alkylene group having 1 to 6 carbon atoms.

Examples of the (meth)acryloyl group having the silicone macromonomer (X) include a compound represented by Formula (2).

CH₂=CR¹⁹-CO-O-R²⁰-(Si(R¹⁸)₂O)ₙ-R²¹ (2)

Here, R¹⁸ represents a hydrocarbon group having 1 to 10 carbon atoms, n represents the average degree of polymerization, R¹⁹ represents a hydrogen atom or a methyl group, R²⁰ represents a hydrocarbon group having 1 to 10 carbon atoms, and R²¹ represents a hydrogen atom, a hydrocarbon group having 1 to 10 carbon atoms, or an aryl group.

The preferred range of n is the same as the above-described preferred range of the average degree of polymerization of the polyalkylsiloxane unit.

Among the above, R¹⁸ represents a hydrocarbon group having 1 to 10 carbon atoms, where it is preferably a hydrocarbon group having 1 to 5 carbon atoms and more preferably a methyl group, R¹⁹ is preferably a methyl group, R²⁰ is preferably a hydrocarbon group having 1 to 6 carbon atoms, more preferably a hydrocarbon group having 2 to 4 carbon atoms, and R²¹ is preferably a hydrocarbon group of 1 to 6 carbon atoms and more preferably a hydrocarbon group of 1 to 4 carbon atoms.

The weight average molecular weight (hereinafter, also denoted as "Mw") of the silicone macromonomer (X) is preferably 500 to 40,000, more preferably 700 to 30,000, still more preferably 800 to 20,000, particularly preferably 1,000 to 18,000, and most preferably 2,000 to 15,000. In a case where the Mw of the silicone macromonomer (X) is equal to or larger than the above-described lower limit value, the cured product of the present resin composition has excellent water slippability. On the other hand, in a case where it is equal to or smaller than the above-described upper limit value, the silicone macromonomer (X) tends to be compatible with the monomer (Y) or the monomer (Z), which makes it easier to produce the copolymer (A).

The Mw of the silicone macromonomer (X) is a standard polystyrene-equivalent value measured by gel permeation chromatography (GPC).

A commercially available product can be used as the silicone macromonomer (X). Examples of the commercially available linear silicone macromonomers (X) include Silaplane (registered trade name) FM-0711 (catalog value of number average molecular weight: 1,000), Silaplane FM-0721 (catalog value of number average molecular weight: 5,000), and Silaplane FM-0725 (catalog value of number average molecular weight: 10,000), all of which are manufactured by JNC Corporation; and X-22-174ASX (catalog value of number average molecular weight: 900), X-22-174BX (catalog value of number average molecular weight: 2,300), KF-2012 (catalog value of number average molecular weight: 4,600), and X-22-2426 (catalog value of number average molecular weight: 12,000), all of which are manufactured by Shin-Etsu Chemical Co., Ltd. Examples of the dendrimer-type silicone macromonomer (X) include HGO-3002, manufactured by KZK Corporation.

One kind of silicone macromonomer (X) may be used singly, or a combination of two or more kinds thereof may be used.

### (Monomer (Y))

The monomer (Y) has a group represented by Formula (1) (hereinafter, also denoted as a "group (1)"). In a case where the group (1) is introduced into the copolymer (A) by the monomer (Y), the group (1) in the copolymer (A) reacts with the component (B), whereby bleeding-out of the polydimethylsiloxane unit on the surface of the cured product of the present resin composition can be suppressed and the durability is improved.

-R¹-M(R²)ᵣ(OR³)ₘ₋ᵣ (1)

Here, M represents Al, Fe, In, Ge, Hf, Si, Ti, Sn, Zr, or Ta, R¹ represents a hydrocarbon group having 1 to 5 carbon atoms, R² represents an alkyl group having 1 to 5 carbon atoms, an alkenyl group having 2 to 5 carbon atoms, or an aryl group, R³ represents a hydrogen atom, an alkyl group having 1 to 5 carbon atoms, an alkenyl group having 2 to 5 carbon atoms, an aryl group, or an acyl group, m represents an integer of 3 to 4 depending on M, r represents an integer of 0 to 3, when r is 2 or more, r pieces of R²'s may be different from each other, and when m - r is 2 or more, (m - r) pieces of R³'s may be different from each other.

In Formula (1), M may be any one of aluminum (Al), iron (Fe), indium (In), germanium (Ge), hafnium (Hf), silicon (Si), titanium (Ti), tin (Sn), zirconium (Zr), or tantalum (Ta); it is preferably Al, Si, Ti, or Zr from the viewpoint of reactivity and availability, and it is particularly preferably Si since it is inexpensive and easy to use.

Examples of the aryl group as R² and R³ include a phenyl group, a tolyl group, and a naphthyl group.

Each of the alkyl group, the alkenyl group, and the aryl group, as R² and R³, may have a substituent. Examples of the substituent include a halogen atom such as a chlorine atom, and an alkoxy group such as a methoxy group or an ethoxy group.

Examples of the acyl group as R³ include a (meth)acryl group, an acetyl group, an acetoimidoyl group, an aldehyde group, a thioacetyl group, a propionyl group, a benzenesulfonyl group, and a benzoyl group.

OR³ can be subdivided into an alkoxy group, an alkenyloxy group, an aryloxy group, an acyloxy group, a ketoximate group, and a hydroxy group. Among these, an alkoxy group, an alkenyloxy group, an acyloxy group, or a hydroxy group is preferable due to high reactivity, and an alkoxy group such as a methoxy group or an ethoxy group, or a hydroxy group is particularly preferable since the hydrolyzability is easily controlled and handled.

Examples of the group (1) (also referred to as a hydrolyzable silyl group) in a case where M in Formula (1) is Si include a trimethoxysilyl group, a triethoxysilyl group, a triisopropoxysilyl group, a dimethoxymethylsilyl group, a diethoxymethylsilyl group, a diisopropoxymethylsilyl group, a tris(2-propenyloxy)silyl group, a (chloromethyl)dimethoxysilyl group, a (methoxymethyl)dimethoxysilyl group, a (methoxymethyl)diethoxysilyl group, and an (ethoxymethyl)dimethoxysilyl group.

Among the above, a trimethoxysilyl group, a triethoxysilyl group, or a dimethoxymethylsilyl group is preferable, and a dimethoxymethylsilyl group is more preferable, since it is versatile and has high activity and favorable curability is obtained. From the viewpoint of storage stability, a dimethoxymethylsilyl group or a triethoxysilyl group is preferable. A (chloromethyl)dimethoxysilyl group and a (methoxymethyl)dimethoxysilyl group are preferable from the point of exhibiting particularly high curability. A trifunctional silyl group such as a trimethoxysilyl group or a triethoxysilyl group is preferable in that the restorability of the cured product tends to be high.

Examples of the monomer (Y) include a compound having the group (1) and a reactive group capable of being added (capable of undergoing a polymerization reaction with) to a polymerizable functional group or a polymer.

Examples of the polymerizable functional group include the same ones as those described above, and the same applies to the preferred aspect thereof.

Examples of the reactive group include a vinyl group, a (meth)acryloyl group, a (meth)acrylamide group, an epoxy group, a cyclic epoxy group, a mercapto group, an amino group, a diamino group, an acid anhydride group, and an isocyanate group.

The group (1) and the polymerizable functional group or reactive group may be bonded through a linking group. Examples of the linking group include a hydrocarbon group such as an alkylene group having 1 to 6 carbon atoms.

Examples of the monomer (Y) include the following silane coupling agents: vinyl silane compounds such as vinyltrimethoxysilane, vinyltriethoxysilane, vinyl-tris(β-methoxyethoxy)silane, (3-trimethoxysilyl)propyl (meth)acrylate, (3-dimethoxymethylsilyl)propyl (meth)acrylate, (2-trimethoxysilyl)ethyl (meth)acrylate, (2-dimethoxymethylsilyl)ethyl (meth)acrylate, trimethoxysilylmethyl (meth)acrylate, and (dimethoxymethylsilyl)methyl (meth)acrylate; amino silane compounds such as γ-aminopropyltrimethoxysilane, N-β-(aminoethyl) γ-aminopropyltrimethoxysilane, N-P-(aminoethyl) γ-aminopropylmethyldimethoxysilane, and γ-ureidopropyltriethoxysilane; epoxy silane compounds such as γ-glycidoxypropyltrimethoxysilane, β-(3,4-epoxycyclohexyl)ethyltrimethoxysilane, and γ-glycidoxypropylmethyldiethoxysilane; mercapto silane compounds such as γ-mercaptopropyltrimethoxysilane; and phenylamino silane compounds such as N-phenyl-γ-aminopropyltrimethoxysilane. These silane coupling agents are commercially available and are preferable from the viewpoint of price and handling.

However, the monomer (Y) is not limited to these. For example, a titanate-based coupling agent having a reactive group other than the group (1), which is capable of being added to a polymerizable functional group that can be copolymerized with other monomers or to a polymer, an aluminate-based coupling agent, or a zirconate-based coupling agent may be used.

One kind of monomer (Y) may be used singly, or a combination of two or more kinds thereof may be used.

In a case where the silicone macromonomer (X) and the monomer (Y) are copolymerized, the more favorable the copolymerizability of the silicone macromonomer (X) and the monomer (Y), the more unreacted monomers can be reduced, and the better the durability of the cured product of the present resin composition tends to be improved. From this point of view, in a case where the polymerizable functional group of the silicone macromonomer (X) is a (meth)acryloyl group, the monomer (Y) is particularly preferably a vinyl silane compound having a (meth)acryloyl group.

### (Monomer (Z))

It suffices that the monomer (Z) is copolymerizable with the silicone macromonomer (X), examples of the monomer (Z) include a compound having the polymerizable functional group described above (however, the silicone macromonomer (X) and monomer (Y) are excluded).

Specific examples of the monomer (Z) include the following monomers.

(Meth)acrylic acid-based monomers such as methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, n-pentyl (meth)acrylate, n-hexyl (meth)acrylate, cyclohexyl (meth)acrylate, n-heptyl (meth)acrylate, n-octyl (meth)acrylate, 2-ethylhexyl (meth)acrylate, nonyl (meth)acrylate, decyl (meth)acrylate, dodecyl (meth)acrylate, phenyl (meth)acrylate, tolyl (meth)acrylate, benzyl (meth)acrylate, 2-methoxyethyl (meth)acrylate, 3-methoxybutyl (meth)acrylate, 2-hydroxyethyl (meth)acrylate, 2-hydroxypropyl (meth)acrylate, stearyl (meth)acrylate, glycidyl (meth)acrylate, 2-aminoethyl (meth)acrylate, an ethylene oxide adduct of (meth)acrylic acid, trifluoromethylmethyl (meth)acrylate, 2-trifluoromethylethyl (meth)acrylate, 2-perfluoroethylethyl (meth)acrylate, 2-perfluoroethyl-2-perfluorobutylethyl (meth)acrylate, perfluoroethyl (meth)acrylate, trifluoromethyl (meth)acrylate, bis(trifluoromethyl)methyl (meth)acrylate, 2-trifluoromethyl-2-perfluoroethylethyl (meth)acrylate, 2-perfluorohexylethyl (meth)acrylate, 2-perfluorodecylethyl (meth)acrylate, and 2-perfluorohexadecylethyl (meth)acrylate.

(Meth)acrylamide-based monomers such as (meth)acrylamide, N-methyl (meth)acrylamide, N,N-dimethyl (meth)acrylamide, N-ethyl (meth)acrylamide, N,N-diethyl (meth)acrylamide, N-n-propyl (meth)acrylamide, N-isopropyl (meth)acrylamide, N-dimethylaminoethyl (meth)acrylamide, N-dimethylaminopropyl (meth)acrylamide, diacetone (meth)acrylamide, N-(meth)acryloylpiperidine, and (meth)acryloylmorpholine.

Styrene-based monomers such as styrene, vinyl toluene, α-methyl styrene, chlorostyrene, styrenesulfonic acid, and salts thereof.

Maleic acid anhydride, maleic acid, and a monoalkyl ester and a dialkyl ester of maleic acid; fumaric acid, and a monoalkyl ester and a dialkyl ester of fumaric acid.

Maleimide-based monomers such as maleimide, methyl maleimide, ethyl maleimide, propyl maleimide, butyl maleimide, hexyl maleimide, octyl maleimide, dodecyl maleimide, stearyl maleimide, phenyl maleimide, and cyclohexyl maleimide.

Nitrile group-containing vinyl monomers such as acrylonitrile and methacrylonitrile.

Amide group-containing vinyl monomers such as acrylamide and methacrylamide.

Vinyl esters such as vinyl acetate, vinyl propionate, vinyl pivalate, vinyl benzoate, and vinyl cinnamate.

Alkenes such as ethylene and propylene.

Conjugated dienes such as butadiene and isoprene.

Vinyl chloride, vinylidene chloride, allyl chloride, allyl alcohol, and the like.

One kind of monomer (Z) may be used singly, or a combination of two or more kinds thereof may be used.

In a case where the silicone macromonomer (X) and the monomer (Z) are copolymerized, the more favorable the copolymerizability of the silicone macromonomer (X) and the monomer (Z), the more unreacted monomers can be reduced, and the better the durability of the cured product of the present resin composition tends to be. From this point of view, in a case where the polymerizable functional group of the silicone macromonomer (X) is a (meth)acryloyl group, the monomer (Z) is preferably at least one selected from the group consisting of a styrene-based monomer and a (meth)acrylic acid-based monomer, and it is particularly preferably a (meth)acrylic acid-based monomer.

### (Proportion of each constitutional unit in copolymer (A))

The proportion of the constitutional unit (X) to the total mass of all constitutional units that constitute the copolymer (A) is preferably 15% to 60% by mass, more preferably 15% to 50% by mass, and still more preferably 20% to 50% by mass. In a case where the proportion of the constitutional unit (X) is equal to or larger than the above-described lower limit value, the water slippability of the cured product is more favorable water slippability, and in a case where it is equal to or smaller than the above-described upper limit value, the amount of the unpolymerized silicone macromonomer (X) can be reduced, whereby the transparency of the cured product tends to more favorable.

The proportion of the constitutional unit (Y) to the total mass of all constitutional units that constitute the copolymer (A) is preferably 40% to 85% by mass, more preferably 40% to 80% by mass, and still more preferably 40% to 75% by mass. In a case where the proportion of the constitutional unit (Y) is equal to or larger than the above-described lower limit value, the durability of the cured product is more favorable, and in a case where it is equal to or smaller than the above-described upper limit value, the proportion of the constitutional unit (X) can be sufficiently increased, whereby the water slippability of the cured product tends to be more favorable.

With respect to the total mass of all constitutional units that constitute the copolymer (A), the total of the proportion of the constitutional unit based on the silicone macromonomer (X) and the proportion of the constitutional unit based on the monomer (Y) is preferably 55% by mass or more, more preferably 70% by mass or more, still more preferably 80% by mass or more, particularly preferably 90% by mass or more, and most preferably 100% by mass. In a case where the total proportion of the constitutional unit (X) and the constitutional unit (Y) is equal to or larger than the above-described lower limit value, the durability of the cured product and the water slippability of the cured product tend to be more favorable.

The proportion of the constitutional unit (Z) to the total mass of all constitutional units that constitute the copolymer (A) is preferably 0% to 45% by mass, more preferably 0% to 40% by mass, still more preferably 0% to 30% by mass, particularly preferably 0% to 20% by mass, and most preferably 0% to 10% by mass. The lower the proportion of the constitutional unit (Z), the more favorable the water slippability of the cured product tends to be. On the other hand, the higher the proportion of the constitutional unit (Z), the more favorable the copolymerizability at the time of producing the copolymer (A) tends to be.

The proportion of each constitutional unit can be determined according to an analytical method such as infrared spectroscopic analysis by a nuclear magnetic resonance method or a total reflection measurement method.

### (Mw of copolymer (A))

The Mw of the copolymer (A) is preferably 3,000 to 400,000, more preferably 5,000 to 100,000, and particularly preferably 7,000 to 80,000. Furthermore, 8,000 to 40,000 is more preferable. In a case where the Mw of the copolymer (A) is equal to or larger than the above-described lower limit value, the copolymer (A) is firmly fixed in the cured product, and thus water slippability and durability tend to be improved. On the other hand, in a case where it is equal to or smaller than the above-described upper limit value, the compatibility with other components in the present resin composition is improved, and thus the appearance of the cured product tends to be improved.

The Mw of the copolymer (A) is a standard polystyrene-equivalent value measured by gel permeation chromatography (GPC).

### (Production method for copolymer (A))

A production method for the copolymer (A) is not particularly limited, and a known method can be appropriately employed.

For example, a copolymer having the constitutional unit (X) and the constitutional unit (Y) can be produced according to the following method (i) or (ii).
(i) A method of polymerizing a monomer mixture containing the silicone macromonomer (X), the monomer (Y) containing a polymerizable functional group, and the monomer (Z) as necessary.
(ii) A method of polymerizing a monomer mixture containing the silicone macromonomer (X) and the monomer (Z) as necessary, and then reacting the obtained polymer with the monomer (Y) containing a reactive group capable of being added to the polymer.

In the methods (i) and (ii), the proportion of the silicone macromonomer (X) to the total mass of the silicone macromonomer (X), the monomer (Y), and the monomer (Z) is preferably 15% to 60% by mass, more preferably 15% to 50% by mass, and still more preferably 20% to 50% by mass. In a case where the proportion of the silicone macromonomer (X) is equal to or larger than the above-described lower limit value, the water slippability of the cured product is more favorable water slippability, and in a case where it is equal to or smaller than the above-described upper limit value, the amount of the unpolymerized silicone macromonomer (X) can be reduced, whereby the transparency of the cured product tends to more favorable.
the proportion of the monomer (Y) to the total mass of the silicone macromonomer (X), the monomer (Y), and the monomer (Z) is preferably 40% to 85% by mass, more preferably 40% to 80% by mass, and still more preferably 40% to 75% by mass. In a case where the proportion of the monomer (Y) is equal to or larger than the above-described lower limit value, the durability of the cured product is more favorable, and in a case where it is equal to or smaller than the above-described upper limit value, the proportion of the silicone macromonomer (X) can be sufficiently increased, whereby the water slippability of the cured product tends to be more favorable.

The proportion of the monomer (Z) to the total mass of the silicone macromonomer (X), the monomer (Y), and the monomer (Z) is preferably 0% to 45% by mass, more preferably 0% to 40% by mass, still more preferably 0% to 30% by mass, particularly preferably 0% to 20% by mass, and most preferably 0% to 10% by mass. The lower the proportion of the monomer (Z), the more favorable the water slippability of the cured product. On the other hand, the higher the proportion of the monomer (Z) is, the more favorable the copolymerizability of the monomer mixture tends to be.

Particularly in use applications where water slippability is important, it is preferable not to contain the constitutional unit (Z) because it is preferable to increase the amount of the silicon atom-containing compound as much as possible.

In the methods (i) and (ii), the polymerization method for the monomer mixture is not particularly limited, and known polymerization methods such as a solution polymerization method, suspension polymerization, bulk polymerization, and emulsion polymerization can be used.

Polymerization conditions are not particularly limited; however, they can be set to, for example, 30°C to 180°C for 0.5 to 24 hours.

The monomer mixture is preferably polymerized in the presence of a polymerization initiator.

Various known polymerization initiators can be used as the polymerization initiator. Examples thereof include the following organic peroxides: azonitrile compounds such as 2,2-azobis(4-methoxy-2,4-dimethylvaleronitrile) (V-70, manufactured by FUJIFILM Wako Pure Chemical Corporation), 2,2'-azobis(2,4-dimethylvaleronitrile) (V-65, manufactured by FUJIFILM Wako Pure Chemical Corporation), 2,2'-azobisisobutyronitrile (V-60, manufactured by FUJIFILM Wako Pure Chemical Corporation), and 2,2'-azobis(2-methylbutyronitrile) (V-59, manufactured by FUJIFILM Wako Pure Chemical Corporation); diacyl peroxides such as octanoyl peroxide (PEROYL (registered trade name) O, manufactured by NOF Corporation), lauroyl peroxide (PEROYL L, manufactured by NOF Corporation), stearoyl peroxide (PEROYL S, manufactured by NOF Corporation), succinic acid peroxide (PEROYL SA, manufactured by NOF Corporation), benzoyl peroxide (NYPER (registered trade name) BW, manufactured by NOF Corporation), isobutyryl peroxide (PEROYL IB, manufactured by NOF Corporation), 2,4-dichlorobenzoyl peroxide (NYPER CS, manufactured by NOF Corporation), 3,5,5-trimethylhexanoyl peroxide (PEROYL 355, manufactured by NOF Corporation); peroxydicarbonates such as di-n-propyl peroxydicarbonate (PEROYL NPP-50M, manufactured by NOF Corporation), diisopropyl peroxydicarbonate (PEROYL IPP-50, manufactured by NOF Corporation), bis(4-t-butylcyclohexyl)peroxydicarbonate (PEROYL TCP, manufactured by NOF Corporation), di-2-ethoxyethyl peroxydicarbonate (PEROYL EEP, manufactured by NOF Corporation), di-2-ethoxyhexyl peroxydicarbonate (PEROYL OPP, manufactured by NOF Corporation), di-2-methoxybutyl peroxydicarbonate (PEROYL MBP, manufactured by NOF Corporation), and di(3-methyl-3-methoxybutyl)peroxydicarbonate (PEROYL SOP, manufactured by NOF Corporation); hydroperoxides such as t-butyl hydroperoxide (PERBUTYL (registered trade name) H-69, manufactured by NOF Corporation) and 1,1,3,3-tetramethylbutyl hydroperoxide (PEROCTA (registered trade name) H, manufactured by NOF Corporation); dialkyl peroxides such as di-t-butyl peroxide (PERBUTYL D, manufactured by NOF Corporation) and 2,5-dimethyl-2,5-bis(t-butylperoxy)hexane (PERHEXA (registered trade name) 25B, manufactured by NOF Corporation); peroxyesters such as α,α'-bis(neodecanoylperoxy)diisopropylbenzene (DYPER (registered trade name) ND, manufactured by NOF Corporation), cumyl peroxyneodecanoate (PERCUMYL (registered trade name) ND, manufactured by NOF Corporation), 1,1,3,3-tetramethylbutyl peroxyneodecanoate (PEROCTAND, manufactured by NOF Corporation), 1-cyclohexyl-1-methylethyl peroxyneodecanoate (PERCYCLO (registered trade name) ND, manufactured by NOF Corporation), t-hexyl peroxyneodecanoate (PERHEXYL (registered trade name) ND, manufactured by NOF Corporation), t-butyl peroxyneodecanoate (PERBUTYL ND, manufactured by NOF Corporation), t-hexyl peroxypivalate (PERHEXYL PV, manufactured by NOF Corporation), t-butyl peroxypivalate (PERBUTYL PV, manufactured by NOF Corporation), 1,1,3,3-tetramethylbutylperoxy-2-ethylhexanoate (PEROCTA O, manufactured by NOF Corporation), 2,5-dimethyl-2,5-bis(2-ethylhexanoylperoxy)hexane (PERHEXA 250, manufactured by NOF Corporation), 1-cyclohexyl-1-methylethylperoxy-2-ethylhexanoate (PERCYCLO O, manufactured by NOF Corporation), t-hexylperoxy 2-ethylhexanoate (PERHEXYL O, manufactured by NOF Corporation), t-butylperoxy 2-ethylhexanoate (PERBUTYL O, manufactured by NOF Corporation), t-butyl peroxyisobutyrate (PERBUTYL IB, manufactured by NOF Corporation), t-hexylperoxyisopropyl monocarbonate (PERHEXYL I, manufactured by NOF Corporation), and t-butylperoxymaleic acid (PERBUTYL MA, manufactured by NOF Corporation). However, the polymerization initiator is not particularly limited to these.

One kind of polymerization initiator may be used singly, or a combination of two or more kinds thereof may be used.

The using amount of the polymerization initiator is, for example, 0.01 to 10 parts by mass with respect to 100 parts by mass of the monomer mixture.

In the method (ii), examples of the method of reacting the polymer with the monomer (Y) include a method in which the silicone macromonomer (X) and the containing monomer (Z) containing a hydroxyl group are copolymerized, and then, a compound containing an isocyanate group and the group (1) is subjected to an addition reaction, which is not particularly limited.

### <Component (B)>

The component (B) consists of at least one silane compound (hereinafter, also denoted as a "silane compound (b)") represented by Formula (b) or a partially hydrolyzed condensate thereof.

R⁴₄₋ₙSi(OR⁵)ₙ (b)

where R⁴ represents a hydrogen atom, an alkyl group, an aryl group, or an aralkyl group, R⁵ represents an alkyl group or a phenyl group, n represents an integer of 2 to 4, n pieces of OR⁵'s may be different from each other, and when n is 2, (4 - n) pieces of R⁴'s may be different from each other.

In Formula (b), the alkyl group as R⁴ may be linear or branched. The alkyl group preferably has 1 to 20 carbon atoms and more preferably 1 to 4 carbon atoms.

Examples of the aryl group include a phenyl group, a tolyl group, and a naphthyl group.

Examples of the aralkyl group include a benzyl group and a phenethyl group.

The alkyl group as R⁵ may be linear or branched, and it is preferably linear from the viewpoint of the hydrolysis rate. The alkyl group preferably has 1 to 5 carbon atoms, more preferably 1 or 2 carbon atoms, and still more preferably 1 carbon atom, from the viewpoint of hydrolysis rate.

A silane compound when n in Formula (b) is 4 (hereinafter, also denoted as a "silane compound (b 1)") is represented by Formula (b 1).

Si(OR⁶)ₐ(OR⁷)_{b}(OR⁸)_{c}(OR⁹)_{d} (b 1)

Here, R⁶, R⁷, R⁸, and R⁹ each independently represent an alkyl group or a phenyl group. a, b, c, and d are integers satisfying the conditions 0 ≤ a ≤ 4, 0 ≤ b ≤ 4, 0 ≤ c ≤ 4, 0 ≤ d ≤ 4, and a + b + c + d = 4.

R⁶, R⁷, R⁸, and R⁹ are the same as R⁵ above.

A silane compound when n in Formula (b) is 3 (hereinafter, also denoted as a "silane compound (b2)") is represented by Formula (b2).

R¹⁰Si(OR¹¹)ₑ(OR¹²)_{f}(OR¹³)_{g} (b2)

Here, R¹⁰ represents a hydrogen atom, an alkyl group, an aryl group, or an aralkyl group. R¹¹, R¹², and R¹³ each independently represent an alkyl group or a phenyl group, e, f, and g are integers satisfying the conditions 0 ≤ e ≤ 3, 0 ≤ f ≤ 3, 0 ≤ g ≤ 3, and e + f + g = 3.

R¹⁰ is the same as R⁴ above. R¹¹, R¹², and R¹³ are the same as R⁵ above.

A silane compound when n in Formula (b) is 2 (hereinafter, also denoted as a "silane compound (b3)") is represented by Formula (b3).

R¹⁴R¹⁵Si(OR¹⁶)ₕOR¹⁷)ᵢ (b3)

Here, R¹⁴ and R¹⁵ each independently represent a hydrogen atom, an alkyl group, an aryl group, or an aralkyl group. R¹⁶ and R¹⁷ each independently represent an alkyl group or a phenyl group, h and i are integers satisfying the conditions of 0 ≤ h ≤ 2, 0 ≤ i ≤ 2, and h + i = 2.

R¹⁴ and R¹⁵ are the same as R⁴ above. R¹⁶ and R¹⁷ are the same as R⁵ above.

Specific examples of the silane compound (b1) include tetraalkoxysilanes such as tetramethoxysilane, tetraethoxysilane, tetrapropoxysilane, tetrabutoxysilane, tetrapentyloxysilane, tetraphenyloxysilane, trimethoxymonoethoxysilane, dimethoxydiethoxysilane, triethoxymonomethoxysilane, trimethoxymonopropoxysilane, monomethoxytributoxysilane, monomethoxytripentyloxysilane, monomethoxytriphenyloxysilane, dimethoxydipropoxysilane, tripropoxymonomethoxysilane, trimethoxymonobutoxysilane, dimethoxydibutoxysilane, triethoxymonopropoxysilane, diethoxydipropoxysilane, tributoxymonopropoxysilane, dimethoxymonoethoxymonobutoxysilane, diethoxymonomethoxymonobutoxysilane, diethoxymonopropoxymonobutoxysilane, dipropoxymonomethoxymonoethoxysilane, dipropoxymonomethoxymonobutoxysilane, dipropoxymonoethoxymonobutoxysilane, dibutoxymonomethoxymonoethoxysilane, dibutoxymonoethoxymonopropoxysilane, and monomethoxymonoethoxymonopropoxymonobutoxysilane, among which tetramethoxysilane or tetraethoxysilane is preferable.

Specific examples of the silane compound (b2) include the following compounds:
hydrosilane compounds such as trimethoxysilane, triethoxysilane, tripropoxysilane, tripentyloxysilane, triphenyloxysilane, dimethoxymonoethoxysilane, diethoxymonomethoxysilane, dipropoxymonomethoxysilane, dipropoxymonoethoxysilane, dipentyloxylmonomethoxysilane, dipentyloxymonoethoxysilane, dipentyloxymonopropoxysilane, diphenyloxylmonomethoxysilane, diphenyloxymonoethoxysilane, diphenyloxymonopropoxysilane, methoxyethoxypropoxysilane, monopropoxydimethoxysilane, monopropoxydiethoxysilane, monobutoxydimethoxysilane, monopentyloxydiethoxysilane, and monophenyloxydiethoxysilane;
methylsilane compounds such as methyltrimethoxysilane, methyltriethoxysilane, methyltripropoxysilane, methyltripentyloxysilane, methyltriphenyloxysilane, methylmonomethoxydiethoxysilane, methylmonomethoxydipropoxysilane, methylmonomethoxydipentyloxysilane, methylmonomethoxydiphenyloxysilane, methylmethoxyethoxypropoxysilane, and methylmonomethoxymonoethoxymonobutoxysilane;
ethylsilane compounds such as ethyltrimethoxysilane, ethyltriethoxysilane, ethyltripropoxysilane, ethyltripentyloxysilane, ethyltriphenyloxysilane, ethylmonomethoxydiethoxysilane, ethylmonomethoxydipropoxysilane, ethylmonomethoxydipentyloxysilane, ethylmonomethoxydiphenyloxysilane, ethylmethoxyethoxypropoxysilane, and ethylmonomethoxymonoethoxymonobutoxysilane;
propylsilane compounds such as propyltrimethoxysilane, propyltriethoxysilane, propyltripropoxysilane, propyltripentyloxysilane, and propyltriphenyloxysilane, propylmonomethoxydiethoxysilane, propylmonomethoxydipropoxysilane, propylmonomethoxydipentyloxysilane, propylmonomethoxydiphenyloxysilane, propylmethoxyethoxypropoxysilane, and propylmonomethoxymonoethoxymonobutoxysilane;
butylsilane compounds such as butyltrimethoxysilane, butyltriethoxysilane, butyltripropoxysilane, butyltripentyloxysilane, butyltriphenyloxysilane, butylmonomethoxydiethoxysilane, butylmonomethoxydipropoxysilane, butylmonomethoxydipentyloxysilane, butylmonomethoxydiphenyloxysilane, butylmethoxyethoxypropoxysilane, and butylmonomethoxymonoethoxymonobutoxysilane;
phenylsilane compounds such as phenyltrimethoxysilane, phenyltriethoxysilane, phenyltripropoxysilane, phenyltripentyloxysilane, phenyltriphenyloxysilane, phenylmonomethoxydiethoxysilane, phenylmonomethoxydipropoxysilane, phenylmonomethoxydipentyloxysilane, phenylmonomethoxydiphenyloxysilane, phenylmethoxyethoxypropoxysilane, and phenylmonomethoxymonoethoxymonobutoxysilane;
hydroxyphenylsilane compounds such as hydroxyphenyltrimethoxysilane, hydroxyphenyltriethoxysilane, hydroxyphenyltripropoxysilane, hydroxyphenyltripentyloxysilane, hydroxyphenyltriphenyloxysilane, hydroxyphenylmonomethoxydiethoxysilane, hydroxyphenylmonomethoxydipropoxysilane, hydroxyphenylmonomethoxydipentyloxysilane, hydroxyphenylmonomethoxydiphenyloxysilane, hydroxyphenylmethoxyethoxypropoxysilane, and hydroxyphenylmonomethoxymonoethoxymonobutoxysilane;
naphthylsilane compounds such as naphthyltrimethoxysilane, naphthyltriethoxysilane, naphthyltripropoxysilane, naphthyltripentyloxysilane, naphthyltriphenyloxysilane, naphthylmonomethoxydiethoxysilane, naphthylmonomethoxydipropoxysilane, naphthylmonomethoxydipentyloxysilane, naphthylmonomethoxydiphenyloxysilane, naphthylmethoxyethoxypropoxysilane, and naphthylmonomethoxymonoethoxymonobutoxysilane;
benzylsilane compounds such as benzyltrimethoxysilane, benzyltriethoxysilane, benzyltripropoxysilane, benzyltripentyloxysilane, benzyltriphenyloxysilane, benzylmonomethoxydiethoxysilane, benzylmonomethoxydipropoxysilane, benzylmonomethoxydipentyloxysilane, benzylmonomethoxydiphenyloxysilane, benzylmethoxyethoxypropoxysilane, and benzylmonomethoxymonoethoxymonobutoxysilane; and
hydroxybenzylsilane compounds such as hydroxybenzyltrimethoxysilane, hydroxybenzyltriethoxysilane, hydroxybenzyltripropoxysilane, hydroxybenzyltripentyloxysilane, hydroxybenzyltriphenyloxysilane, hydroxybenzylmonomethoxydiethoxysilane, hydroxybenzylmonomethoxydipropoxysilane, hydroxybenzylmonomethoxydipentyloxysilane, hydroxybenzylmonomethoxydiphenyloxysilane, hydroxybenzylmethoxyethoxypropoxysilane, and hydroxybenzylmonomethoxymonoethoxymonobutoxysilane.

Specific examples of the silane compound (b3) include the following compounds:
hydrosilane compounds such as dimethoxysilane, diethoxysilane, dipropoxysilane, dipentyloxysilane, diphenyloxysilane, methoxyethoxysilane, methoxypropoxysilane, methoxypentyloxysilane, methoxyphenyloxysilane, ethoxypropoxysilane, ethoxypentyloxysilane, and ethoxyphenyloxysilane;
methylhydrosilane compounds such as methyldimethoxysilane, methylmethoxyethoxysilane, methyldiethoxysilane, methylmethoxypropoxysilane, methylmethoxypentyloxysilane, methylethoxypropoxysilane, methyldipropoxysilane, methyldipentyloxysilane, methyldiphenyloxysilane, and methylmethoxyphenyloxysilane;
ethylhydrosilane compounds such as ethyldimethoxysilane, ethylmethoxyethoxysilane, ethyldiethoxysilane, ethylmethoxypropoxysilane, ethylmethoxypentyloxysilane, ethylethoxypropoxysilane, ethyldipropoxysilane, ethyldipentyloxysilane, ethyldiphenyloxysilane, and ethylmethoxyphenyloxysilane;
propylhydrosilane compounds such as propyldimethoxysilane, propylmethoxyethoxysilane, propyldiethoxysilane, propylmethoxypropoxysilane, propylmethoxypentyloxysilane, propylethoxypropoxysilane, propyldipropoxysilane, propyldipentyloxysilane, propyldiphenyloxysilane, and propylmethoxyphenyloxysilane;
butylhydrosilane compounds such as butyldimethoxysilane, butylmethoxyethoxysilane, butyldiethoxysilane, butylmethoxypropoxysilane, butylmethoxypentyloxysilane, butylethoxypropoxysilane, butyldipropoxysilane, butyldipentyloxysilane, butyldiphenyloxysilane, and butylmethoxyphenyloxysilane;
phenylhydrosilane compounds such as phenyldimethoxysilane, phenylmethoxyethoxysilane, phenyldiethoxysilane, phenylmethoxypropoxysilane, phenylmethoxypentyloxysilane, phenylethoxypropoxysilane, phenyldipropoxysilane, phenyldipentyloxysilane, phenyldiphenyloxysilane, and phenylmethoxyphenyloxysilane;
hydroxyphenylhydrosilane compounds such as hydroxyphenyldimethoxysilane, hydroxyphenylmethoxyethoxysilane, hydroxyphenyldiethoxysilane, hydroxyphenylmethoxypropoxysilane, hydroxyphenylmethoxypentyloxysilane, hydroxyphenylethoxypropoxysilane, hydroxyphenyldipropoxysilane, hydroxyphenyldipentyloxysilane, hydroxyphenyldiphenyloxysilane, and hydroxyphenylmethoxyphenyloxysilane;
naphthylhydrosilane compounds such as naphthyldimethoxysilane, naphthylmethoxyethoxysilane, naphthyldiethoxysilane, naphthylmethoxypropoxysilane, naphthylmethoxypentyloxysilane, naphthylethoxypropoxysilane, naphthyldipropoxysilane, naphthyldipentyloxysilane, naphthyldiphenyloxysilane, and naphthylmethoxyphenyloxysilane;
benzylhydrosilane compounds such as benzyldimethoxysilane, benzylmethoxyethoxysilane, benzyldiethoxysilane, benzylmethoxypropoxysilane, benzylmethoxypentyloxysilane, benzylethoxypropoxysilane, benzyldipropoxysilane, benzyldipentyloxysilane, benzyldiphenyloxysilane, and benzylmethoxyphenyloxysilane;
hydroxybenzylhydrosilane compounds such as hydroxybenzyldimethoxysilane, hydroxybenzylmethoxyethoxysilane, hydroxybenzyldiethoxysilane, hydroxybenzylmethoxypropoxysilane, hydroxybenzylmethoxypentyloxysilane, hydroxybenzylethoxypropoxysilane, hydroxybenzyldipropoxysilane, hydroxybenzyldipentyloxysilane, hydroxybenzyldiphenyloxysilane, and hydroxybenzylmethoxyphenyloxysilane;
dimethylsilane compounds such as dimethyldimethoxysilane, dimethylmethoxyethoxysilane, dimethylmethoxypropoxysilane, dimethyldiethoxysilane, dimethyldipentyloxysilane, dimethyldiphenyloxysilane, dimethylethoxypropoxysilane, and dimethyldipropoxysilane;
diethylsilane compounds such as diethyldimethoxysilane, diethylmethoxyethoxysilane, diethylmethoxypropoxysilane, diethyldiethoxysilane, diethyldipentyloxysilane, diethyldiphenyloxysilane, diethylethoxypropoxysilane, and diethyldipropoxysilane;
dipropoxysilane compounds such as dipropyldimethoxysilane, dipropylmethoxyethoxysilane, dipropylmethoxypropoxysilane, dipropyldiethoxysilane, dipropyldipentyloxysilane, dipropyldiphenyloxysilane, dipropylethoxypropoxysilane, and dipropyldipropoxysilane;
dibutylsilane compounds such as dibutyldimethoxysilane, dibutylmethoxyethoxysilane, dibutylmethoxypropoxysilane, dibutyldiethoxysilane, dibutyldipentyloxysilane, dibutyldiphenyloxysilane, dibutylethoxypropoxysilane, and dibutyldipropoxysilane;
diphenylsilane compounds such as diphenyldimethoxysilane, diphenylmethoxyethoxysilane, diphenylmethoxypropoxysilane, diphenyldiethoxysilane, diphenyldipentyloxysilane, diphenyldiphenyloxysilane, diphenylethoxypropoxysilane, and diphenyldipropoxysilane;
di(hydroxyphenyl)silane compounds such as di(hydroxyphenyl)dimethoxysilane, di(hydroxyphenyl)methoxyethoxysilane, di(hydroxyphenyl)methoxypropoxysilane, di(hydroxyphenyl)diethoxysilane, di(hydroxyphenyl)dipentyloxysilane, di(hydroxyphenyl)diphenyloxysilane, di(hydroxyphenyl)ethoxypropoxysilane, and di(hydroxyphenyl)dipropoxysilane;
dinaphthylsilane compounds such as dinaphthyldimethoxysilane, dinaphthylmethoxyethoxysilane, dinaphthylmethoxypropoxysilane, dinaphthyldiethoxysilane, dinaphthyldipentyloxysilane, dinaphthyldiphenyloxysilane, dinaphthylethoxypropoxysilane, and dinaphthyldipropoxysilane;
dibenzylsilane compounds such as dibenzyldimethoxysilane, dibenzylmethoxyethoxysilane, dibenzylmethoxypropoxysilane, dibenzyldiethoxysilane, dibenzyldipentyloxysilane, dibenzyldiphenyloxysilane, dibenzylethoxypropoxysilane, and dibenzyldipropoxysilane;
di(hydroxybenzyl)silane compounds such as di(hydroxybenzyl)dimethoxysilane, di(hydroxybenzyl)methoxyethoxysilane, di(hydroxybenzyl)methoxypropoxysilane, di(hydroxybenzyl)diethoxysilane, di(hydroxybenzyl)dipentyloxysilane, di(hydroxybenzyl)diphenyloxysilane, di(hydroxybenzyl)ethoxypropoxysilane, and di(hydroxybenzyl)dipropoxysilane;
methylethylsilane compounds such as methylethyldimethoxysilane, methylethylmethoxyethoxysilane, methylethylmethoxypropoxysilane, methylethyldiethoxysilane, methylethyldipentyloxysilane, methylethyldiphenyloxysilane, methylethylethoxypropoxysilane, and methyl ethyl dipropoxy silane;
methylpropylsilane compounds such as methylpropyldimethoxysilane, methylpropylmethoxyethoxysilane, methylpropylmethoxypropoxysilane, methylpropyldiethoxysilane, methylpropyldipentyloxysilane, methylpropyldiphenyloxysilane, methylpropylethoxypropoxysilane, and methylpropyldipropoxysilane;
methylbutylsilane compounds such as methylbutyldimethoxysilane, methylbutylmethoxyethoxysilane, methylbutylmethoxypropoxysilane, methylbutyldiethoxysilane, methylbutyldipentyloxysilane, methylbutyldiphenyloxysilane, methylbutylethoxypropoxysilane, and methylbutyl dipropoxy silane;
methyl(phenyl)silane compounds such as methyl(phenyl)dimethoxysilane, methyl(phenyl)methoxyethoxysilane, methyl(phenyl)methoxypropoxysilane, methyl(phenyl)diethoxysilane, methyl(phenyl)dipentyloxysilane, methyl(phenyl)diphenyloxysilane, methyl(phenyl)ethoxypropoxysilane, and methyl(phenyl)dipropoxysilane;
methyl(hydroxyphenyl)silane compounds such as methyl(hydroxyphenyl)dimethoxysilane, methyl(hydroxyphenyl)methoxyethoxysilane, methyl(hydroxyphenyl)methoxypropoxysilane, methyl(hydroxyphenyl)diethoxysilane, methyl(hydroxyphenyl)dipentyloxysilane, methyl(hydroxyphenyl)diphenyloxysilane, methyl(hydroxyphenyl)ethoxypropoxysilane, and methyl(hydroxyphenyl)dipropoxysilane;
methyl(naphthyl)silane compounds such as methyl(naphthyl)dimethoxysilane, methyl(naphthyl)methoxyethoxysilane, methyl(naphthyl)methoxypropoxysilane, methyl(naphthyl)diethoxysilane, methyl(naphthyl)dipentyloxysilane, methyl(naphthyl)diphenyloxysilane, methyl(naphthyl)ethoxypropoxysilane, and methyl(naphthyl)dipropoxysilane;
methyl(benzyl)silane compounds such as methyl(benzyl)dimethoxysilane, methyl(benzyl)methoxyethoxysilane, methyl(benzyl)methoxypropoxysilane, methyl(benzyl)diethoxysilane, methyl(benzyl)dipentyloxysilane, methyl(benzyl)diphenyloxysilane, methyl(benzyl)ethoxypropoxysilane, and methyl(benzyl)dipropoxysilane;
methyl(hydroxybenzyl)silane compounds such as methyl(hydroxybenzyl)dimethoxysilane, methyl(hydroxybenzyl)methoxyethoxysilane, methyl(hydroxybenzyl)methoxypropoxysilane, methyl(hydroxybenzyl)diethoxysilane, methyl(hydroxybenzyl)dipentyloxysilane, methyl(hydroxybenzyl)diphenyloxysilane, methyl(hydroxybenzyl)ethoxypropoxysilane, and methyl(hydroxybenzyl)dipropoxysilane;
ethylpropylsilane compounds such as ethylpropyldimethoxysilane, ethylpropylmethoxyethoxysilane, ethylpropylmethoxypropoxysilane, ethylpropyldiethoxysilane, ethylpropyldipentyloxysilane, ethylpropyldiphenyloxysilane, ethylpropylethoxypropoxysilane, and ethylpropyldipropoxysilane;
ethylbutylsilane compounds such as ethylbutyldimethoxysilane, ethylbutylmethoxyethoxysilane, ethylbutylmethoxypropoxysilane, ethylbutyldiethoxysilane, ethylbutyldipentyloxysilane, ethylbutyldiphenyloxysilane, ethylbutylethoxypropoxysilane, and ethylbutyldipropoxysilane;
ethyl(phenyl)silane compounds such as ethyl(phenyl)dimethoxysilane, ethyl(phenyl)methoxyethoxysilane, ethyl(phenyl)methoxypropoxysilane, ethyl(phenyl)diethoxysilane, ethyl(phenyl)dipentyloxysilane, ethyl(phenyl)diphenyloxysilane, ethyl(phenyl)ethoxypropoxysilane, and ethyl(phenyl)dipropoxysilane;
ethyl(hydroxyphenyl)silane compounds such as ethyl(hydroxyphenyl)dimethoxysilane, ethyl(hydroxyphenyl)methoxyethoxysilane, ethyl(hydroxyphenyl)methoxypropoxysilane, ethyl(hydroxyphenyl)diethoxysilane, ethyl(hydroxyphenyl)dipentyloxysilane, ethyl(hydroxyphenyl)diphenyloxysilane, ethyl(hydroxyphenyl)ethoxypropoxysilane, and ethyl(hydroxyphenyl)dipropoxysilane;
ethyl(naphthyl)silane compounds such as ethyl(naphthyl)dimethoxysilane, ethyl(naphthyl)methoxyethoxysilane, ethyl(naphthyl)methoxypropoxysilane, ethyl(naphthyl)diethoxysilane, ethyl(naphthyl)dipentyloxysilane, ethyl(naphthyl)diphenyloxysilane, ethyl(naphthyl)ethoxypropoxysilane, and ethyl(naphthyl)dipropoxysilane;
ethyl(benzyl)silane compounds such as ethyl(benzyl)dimethoxysilane, ethyl(benzyl)methoxyethoxysilane, ethyl(benzyl)methoxypropoxysilane, ethyl(benzyl)diethoxysilane, ethyl(benzyl)dipentyloxysilane, ethyl(benzyl)diphenyloxysilane, ethyl(benzyl)ethoxypropoxysilane, and ethyl(benzyl)dipropoxysilane;
ethyl(hydroxybenzyl)silane compounds such as ethyl(hydroxybenzyl)dimethoxysilane, ethyl(hydroxybenzyl)methoxyethoxysilane, ethyl(hydroxybenzyl)methoxypropoxysilane, ethyl(hydroxybenzyl)diethoxysilane, ethyl(hydroxybenzyl)dipentyloxysilane, ethyl(hydroxybenzyl)diphenyloxysilane, ethyl(hydroxybenzyl)ethoxypropoxysilane, and ethyl(hydroxybenzyl)dipropoxysilane;
propylbutylsilane compounds such as propylbutyldimethoxysilane, propylbutylmethoxyethoxysilane, propylbutylmethoxypropoxysilane, propylbutyldiethoxysilane, propylbutyldipentyloxysilane, propylbutyldiphenyloxysilane, propylbutylethoxypropoxysilane, and propylbutyldipropoxysilane;
propyl(phenyl)silane compounds such as propyl(phenyl)dimethoxysilane, propyl(phenyl)methoxyethoxysilane, propyl(phenyl)methoxypropoxysilane, propyl(phenyl)diethoxysilane, propyl(phenyl)dipentyloxysilane, propyl(phenyl)diphenyloxysilane, propyl(phenyl)ethoxypropoxysilane, andpropyl(phenyl)dipropoxysilane;
propyl(hydroxyphenyl)silane compounds such as propyl(hydroxyphenyl)dimethoxysilane, propyl(hydroxyphenyl)methoxyethoxysilane, propyl(hydroxyphenyl)methoxypropoxysilane, propyl(hydroxyphenyl)diethoxysilane, propyl(hydroxyphenyl)dipentyloxysilane, propyl(hydroxyphenyl)diphenyloxysilane, propyl(hydroxyphenyl)ethoxypropoxysilane, and propyl(hydroxyphenyl)dipropoxysilane;
propyl(naphthyl)silane compounds such as propyl(naphthyl)dimethoxysilane, propyl(naphthyl)methoxyethoxysilane, propyl(naphthyl)methoxypropoxysilane, propyl(naphthyl)diethoxysilane, propyl(naphthyl)dipentyloxysilane, propyl(naphthyl)diphenyloxysilane, propyl(naphthyl)ethoxypropoxysilane, and propyl(naphthyl)dipropoxysilane;
propyl(benzyl)silane compounds such as propyl(benzyl)dimethoxysilane, propyl(benzyl)methoxyethoxysilane, propyl(benzyl)methoxypropoxysilane, propyl(benzyl)diethoxysilane, propyl(benzyl)dipentyloxysilane, propyl(benzyl)diphenyloxysilane, propyl(benzyl)ethoxypropoxysilane, and propyl(benzyl)dipropoxysilane; and
propyl(hydroxybenzyl)silane compounds such as propyl(hydroxybenzyl)dimethoxysilane, propyl(hydroxybenzyl)methoxyethoxysilane, propyl(hydroxybenzyl)methoxypropoxysilane, propyl(hydroxybenzyl)diethoxysilane, propyl(hydroxybenzyl)dipentyloxysilane, propyl(hydroxybenzyl)diphenyloxysilane, propyl(hydroxybenzyl)ethoxypropoxysilane, and propyl(hydroxybenzyl)dipropoxysilane.

One kind of silane compound (b) may be used singly, or a combination of two or more kinds thereof may be used.

A partially hydrolyzed condensate of at least one silane compound (b) is obtained by subjecting the silane compound (b) or a mixture of two or more thereof to a hydrolytic condensation reaction according to a known method.

For example, a predetermined amount of water and, as necessary, an organic solvent are added to a tetramethoxysilane monomer and reacted generally at about room temperature to 100°C in the presence of a catalyst while distilling off the by-produced alcohol. As a result, the hydrolysis and condensation of tetramethoxysilane proceed to generate a liquid tetramethoxysilane partially hydrolyzed condensate (the average degree of polymerization is generally about 2 to 8 and mostly 3 to 7). The liquid tetramethoxysilane partially hydrolyzed condensate is represented by, for example, CH₃O-(Si(OCH₃)₂-O)ₛ-CH₃. s is a number from 2 to 8, indicating the average degree of polymerization. The degree of hydrolysis can be appropriately adjusted with the amount of water used.

The liquid tetramethoxysilane partially hydrolyzed condensate obtained as described above may be further subj ected to a hydrolytic condensation reaction. The method of further subjecting the liquid tetramethoxysilane partially hydrolyzed condensate to a hydrolytic condensation reaction is the same as the method of using a primary reactant as a secondary reactant, which will be described later.

A silane compound (b) other than tetramethoxysilane can also be formed into a partially hydrolyzed condensate in the same manner. A mixture of two or more kinds of silane compounds (b) may be used as the partially hydrolyzed condensate.

Examples of the catalysts include inorganic acids such as hydrochloric acid, acetic acid, nitric acid, sulfuric acid, and phosphoric acid, organic acids such as formic acid, acetic acid, propionic acid, oxalic acid, p-toluenesulfonic acid, benzoic acid, phthalic acid, and maleic acid, alkali catalysts such as potassium hydroxide, sodium hydroxide, calcium hydroxide, and ammonia, an organic metal, a metal alkoxide, organic tin compounds, for example, dibutyltin dilaurylate, dibutyltin dioctiate, and dibutyltin diacetate, metal chelate compounds such as aluminum tris(acetylacetonate), titanium tetrakis(acetylacetonate), titanium bis(butoxy)bis(acetylacetonate), titanium bis(isopropoxy)bis(acetylacetonate), zirconium tetrakis(acetylacetonate), zirconium bis(butoxy)bis(acetylacetonate), and zirconium bis(isopropoxy)bis(acetylacetonate), and boron compounds such as boric acid butoxide and boric acid. Among these, an organic acid or a metal chelate compound is preferable, and maleic acid or a metal acetylacetonates is particularly preferable in the production of the secondary reactant.

The using amount of the acid catalyst is not particularly limited as long as it is an amount which enables the function required as a catalyst to be exhibited; however, in general, it is selected from a range of about 0.001 to 10 parts by mass, which is preferably 0.003 to 5 parts by mass, with respect to 100 parts by mass of the silane compound (b).

From the viewpoint of reactivity, the component (B) preferably includes the silane compound (b1) in which R⁶, R⁷, R⁸, and R⁹ in Formula (b 1) are an alkyl group, that is, tetraalkoxysilane or a partially hydrolyzed condensate of tetraalkoxysilane, more preferably includes a partially hydrolyzed condensate of tetraalkoxysilane, and particularly preferably includes a partially hydrolyzed condensate of tetramethoxysilane.

From the viewpoint of the appearance of the cured product, the Mw of the component (B) is preferably 500 or more and more preferably 600 or more. The upper limit of Mw of the component (B) is, for example, 10,000.

The Mw of the component (B) is a standard polystyrene-equivalent value measured by gel permeation chromatography (GPC).

From the viewpoint of reactivity, the component (B) is preferably a compound (hereinafter, also referred to as a "secondary reactant") obtained by further subjecting a partially hydrolyzed condensate of at least one kind of the silane compound (b), the partially hydrolyzed condensate having Mw of 300 to 3,000 (hereinafter, also denoted as a "primary reactant") to a hydrolytic condensation reaction in the presence of a catalyst.

In a case of using the secondary reactant as the component (B), the curability of the present resin composition and the appearance of the cured product can be enhanced. Although the reason for this effect is not clear, it is conceived as follows. Since hydrolysis is accelerated in the secondary reactant, a large number of silanol groups (Si-OH) are present as compared in the primary reactant. The silanol group is more reactive than Si-OR⁵, and thus the curability is improved. In addition, the condensation reaction is accelerated, and thus the molecular weight increases and cracking is suppressed, whereby the appearance can be improved.

In a case where the Mw of the primary reactant is 300 or more, the appearance of the cured product tends to be favorable, and in a case where it is 3,000 or less, the reactivity tends to be favorable. The Mw of the primary reactant is preferably 400 to 2,000 and more preferably 500 to 1,000.

From the viewpoint of the hardness of the cured product, the silane compound (b) that forms the primary reactant is preferably the silane compound (b 1), more preferably tetraalkoxysilane, and still more preferably tetramethoxysilane.

As described above, the primary reactant is obtained by subjecting the silane compound (b) or a mixture of two or more thereof to a hydrolytic condensation reaction.

It is noted that a commercially available primary reactants can also be used, where examples thereof include MS51, MS53, MS57, and MS56S, manufactured by Mitsubishi Chemical Corporation, and Ethyl Silicate 40, Ethyl Silicate 48, Methyl Silicate 51, Methyl Silicate 53A, and EMS-485, manufactured by COLCOAT Co., Ltd.

A method of further subj ecting the primary reactant to a hydrolytic condensation reaction in the presence of a catalyst to make it the secondary reactant includes a method of adding water, a catalyst, and a solvent to the primary reactant and carrying out stirring at 25°C for 1 day or longer. Furthermore, the progress of the reaction can be accelerated by heating the primary reactant, and in such a case, it is also possible to adopt, for example, a method of carrying out stirring at 30°C to 100°C for 1 hour or longer.

Based on the empirical temperature and reaction time in the study of the inventors of the present invention, the Mw of the secondary reactant is preferably 400 to 50,000, more preferably 600 to 30,000, still more preferably 800 to 10,000, particularly preferably 900 to 5,000, and most preferably 1,000 to 2,000.

It is noted that due to the temporal progress of the reaction, it is difficult to specify the structure and characteristics (for example, a size such as a radius, a hydroxyl value, and the like) of the secondary reactant, excluding Mw, by general analytical methods. Although Mw can be measured, the reactivity of the present resin composition or the appearance of the cured product differs between a case of using the primary reactant and a case of using the secondary reactant as the component (B). That is, there are circumstances (impossible or impractical circumstances) where it is impossible or almost impractical to directly specify the secondary reactant based on the structure or characteristics. Therefore, it shall be suitable to define the secondary reactant as the one obtained by further subjecting a partially hydrolyzed condensate of at least one kind of the silane compound (b), the partially hydrolyzed condensate having an Mw of 300 to 3,000, to a hydrolytic condensation reaction in a presence of a catalyst".

### <Initiator (C)>

In a case where the present resin composition contains the initiator (C), the hydrolytic condensation reactions of the component (B) and the group (1) easily proceed, and the curability of the present resin composition is improved.

Examples of the initiator (C) include a photopolymerization initiator, a thermal polymerization initiator, a metal catalyst, and an acid catalyst.

Examples of the photopolymerization initiator include a photoradical polymerization initiator, a photoacid generator, and a photobase generator.

Examples of thermal polymerization initiator include a thermal radical polymerization initiator, a thermal acid generator, and a thermal base generator.

Examples of the metal catalyst or the acid catalyst include the same one as the catalyst that is used at the time of obtaining the partially hydrolyzed condensate of the silane compound (b). Any one of these may be used singly, or a combination of two or more kinds thereof may be used.

Among the above, the initiator (C) is preferably a photopolymerization initiator. In a case where the present resin composition contains a photopolymerization initiator, the curing of the present resin composition can be accelerated by irradiation with an active energy ray such as ultraviolet rays. In a case where the present resin composition is applied to a resin base material and then cured by heat, the resin base material may be deformed by heat; however, in a case of being cured by an active energy ray, the present resin composition can be applied to a resin base material having low heat resistance since the deformation due to the heat of the resin base material can be suppressed. In general, curing with an active energy ray can be expected to improve productivity because the curing time is short as compared with other curing methods such as heat curing and moisture curing.

Due to the reason that the hydrolytic condensation reaction of the component (B) or the group (1) can be initiated and the present resin composition can be efficiently cured, the photopolymerization initiator is preferably at least one selected from the group consisting of a photoradical polymerization initiator, a photoacid generator, and a photobase generator, more preferably at least one selected from the group consisting of a photoacid generator and a photobase generator, and still more preferably a photoacid generator.

Representative examples of the photoradical polymerization initiator (hereinafter, also simply denoted as the "photoinitiator") include acetophenones such as diethoxyacetophenone, 2-hydroxy-2-methyl-1-phenylpropan-1-one, a benzyl dimethyl ketal, 4-(2-hydroxyethoxy)phenyl-(2-hydroxy-2-propyl)ketone, 1-[4-(2-hydroxyethoxy)-phenyl]-2-hydroxy-2-methyl-1-propan-1-one, 2-hydroxy-1-{4-[4-(2-hydroxy-2-methyl-propionyl)-benzyl]-phenyl}-2-methyl-propan-1-one, 1-hydroxycyclohexylphenyl ketone, 2-methyl-2-morpholino(4-thiomethylphenyl)propan-1-one, 2-benzyl-2-dimethylamino-1-(4-morpholinophenyl)butanone, and a 2-hydroxy-2-methyl-1-[4-(1-methylvinyl)phenyl]propanone oligomer, and benzoins such as benzoin, benzoin methyl ether, benzoin ethyl ether, benzoin isopropyl ether, and benzoin isobutyl ether, benzophenones such as benzophenone, methyl o-benzoylbenzoate, 4-phenylbenzophenone, 4-benzoyl-4'-methyldiphenyl sulfide, 3,3',4,4'-tetra(t-butylperoxycarbonyl)benzophenone, 2,4,6-trimethylbenzophenone, 4-benzoyl-N,N-dimethyl-N-[2-(1-oxo-2-propenyloxy)ethyl]benzenemethanaminium bromide, and (4-benzoylbenzyl)trimethylammonium chloride; thioxanthones such as 2-isopropylthioxanthone, 4-isopropylthioxanthone, 2,4-diethylthioxanthone, 2,4-dichlorothioxanthone, 1-chloro-4-propoxythioxanthone, and 2-(3-dimethylamino-2-hydroxy)-3,4-dimethyl-9H-thioxanthone-9-one mesochloride; and acylphosphone oxides such as 2,4,6-trimethylbenzoyl-diphenylphosphine oxide, bis(2,6-dimethoxybenzoyl)-2,4,4-trimethyl-pentylphosphine oxide, and bis(2,4,6-trimethylbenzoyl)-phenylphosphine oxide. However, the photoradical polymerization initiator is not limited to the compounds above. One kind of photoradical polymerization initiator may be used singly, or a combination of two or more kinds thereof may be used.

Representative examples of the photoacid generator include sulfonium salts (particularly, triaryl sulfonium salts) such as triarylsulfonium hexafluorophosphate (for example, p-phenylthiophenyldiphenylsulfonium hexafluorophosphate) and triarylsulfonium hexafluoroantimonate; and iodonium salts such as diaryliodonium hexafluorophosphate, diaryliodonium hexafluoroantimonate, bis(dodecylphenyl)iodonium tetrakis(pentafluorophenyl)borate, and iodonium [4-(4-methylphenyl-2-methylpropyl)phenyl]hexafluorophosphate. However, the photoacid generator is not limited to the compounds above. One kind of photoacid generator may be used singly, or a combination of two or more kinds thereof may be used.

Representative examples of the photobase generator include 1-(anthraquinone-2-yl)ethyl N-cyclohexylcarbamate, 9-anthrylmethyl N,N-diethylcarbamate, 9-anthrylmethyl piperidine-1-carboxylate, 9-anthrylmethyl N,N-dicyclohexylcarbamate, 1-(anthraquinon-2-yl)ethyl N,N-dicyclohexylcarbamate, 1-(anthraquinon-2-yl)ethyl imidazole-1-carboxylate, a cyclohexylammonium 2-(3-benzoylphenyl)propionic acid salt, (E)-N-cyclohexyl-3-(2-hydroxyphenyl)acrylamide, a dicyclohexylammonium 2-(3-benzoylphenyl)propionic acid salt, 1,2-dicyclohexyl-4,4,5,5-tetramethylbiguanidinium = n-butyltriphenylborate, 1,2-diisopropyl 3-[bis(dimethylamino)methylene]guanidinium = 2-(3-benzoylphenyl)propionate, (2-nitrophenyl)methyl 4-hydroxypiperidine-1-carboxylate, (2-nitrophenyl)methyl 4-(methacryloyloxy)piperidine-1-carboxylate, a guanidinium 2-(3-benzoylphenyl)propionic acid salt, and (E)-1-piperidino-3-(2-hydroxyphenyl)-2-propene-1-one. However, the photobase generator is not limited to the compounds above. One kind of photobase generator may be used singly, or a combination of two or more kinds thereof may be used.

### <Diluent>

In a case where the present resin composition contains a diluent, the coating workability at the time of applying the present resin composition to a base material, the smoothness and uniformity of the formed coating film and the cured film of the coating film, and the adhesiveness of the cured film to the base material is improved.

Examples of the diluent include water and an organic solvent, where an organic solvent is preferable.

In a case where the component (B) is a hydrolyzed condensate of the silane compound (b), the diluent may contain water blended for subjecting the silane compound (b) to a hydrolytic condensation reaction.

Examples of the organic solvent include an alcohol-based solvent, a glycol-based solvent, a hydrocarbon-based solvent, an ester-based solvent, a ketone-based solvent, and an ether-based solvent.

Examples of the alcohol-based solvent include methanol, ethanol, isopropyl alcohol, n-butanol, isobutanol, octanol, n-propyl alcohol, and acetylacetone alcohol.

Examples of the glycol-based solvent include ethylene glycol, ethylene glycol monomethyl ether, ethylene glycol monoethyl ether, ethylene glycol mono-n-propyl ether, ethylene glycol mono-n-butyl ether, diethylene glycol monomethyl ether, diethylene glycol monoethyl ether, propylene glycol monomethyl ether, propylene glycol monoethyl ether, propylene glycol monobutyl ether, ethylene glycol monoethyl ether acetate, ethylene glycol monomethyl ether acetate, propylene glycol monoethyl ether acetate, and propylene glycol monomethyl ether acetate.

Examples of the hydrocarbon-based solvent include benzene, kerosene, toluene, and xylene.

Examples of the ester-based solvent include methyl acetate, ethyl acetate, butyl acetate, methyl acetoacetate, and ethyl acetoacetate.

Examples of the ketone-based solvent include acetone, methyl ethyl ketone, methyl isobutyl ketone, and acetylacetone.

Examples of the ether-based solvent include ethyl ether, butyl ether, methyl cellosolve, ethyl cellosolve, dioxane, furan, and tetrahydrofuran.

One kind of organic solvent may be used singly, or a combination of two or more kinds thereof may be used.

Due to the reason that handling is easy, storage stability as a liquid is good, and a cured product to be obtained has excellent properties, the diluent is preferably an alcohol-based solvent and more preferably methanol, ethanol, isopropanol, or n-propanol.

### <Other components>

Examples of the other components include a polymer other than the copolymer (A), an ultraviolet absorbing agent, a light stabilizer, a silane coupling agent, an inorganic fine particle, an antioxidant, an anti-yellowing agent, a bluing agent, a pigment, a leveling agent, an antifoaming agent, a thickener, an anti-settling agent, an antistatic agent, and an anti-fogging agent.

### <Amount of each component>

The amount of the copolymer (A) is preferably 1% to 95% by mass, more preferably 10% to 90% by mass, still more preferably 20% to 85% by mass, particularly preferably 25% to 85% by mass, and most preferably 30% to 70% by mass, with respect to the total 100% by mass of the nonvolatile component in the resin composition. In a case where the amount of the copolymer (A) is equal to or larger than the above-described lower limit value, the water slippability and appearance of the cured product are more excellent, and in a case where it is equal to or smaller than the above-described upper limit value, the appearance and strength of the cured product are more excellent.

It is noted that the nonvolatile component represents a fraction excluding the organic solvent.

The amount of component (B) is preferably 1% to 90% by mass, more preferably 5% to 80% by mass, still more preferably 10% to 75% by mass, particularly preferably 20% to 70% by mass, and most preferably 30% to 65% by mass, with respect to the total 100% by mass of the nonvolatile component in the resin composition. In a case where the amount of the component (B) is equal to or larger than the above-described lower limit value, the strength of the cured product is more excellent, and in a case where it is equal to or smaller than the above-described upper limit value, the appearance of the cured product is more excellent.

The amount of the initiator (C) is preferably 0.01% to 10% by mass, more preferably 0.05% to 9% by mass, still more preferably 0.1% to 8% by mass, particularly preferably 0.2% to 5% by mass, and most preferably 0.2% to 3% by mass, with respect to the total 100% by mass of the nonvolatile component in the resin composition. In a case where the amount of the initiator (C) is equal to or larger than the above-described lower limit value, the curability (reactivity) of the present resin composition and the productivity of the cured product are more excellent, and in a case where it is equal to or smaller than the above-described upper limit value, the water slippability of the cured product are more excellent.

In a case where the present resin composition contains a diluent, the concentration of the nonvolatile component in the present resin composition is not particularly limited as long as the concentration is suitable for the coating method. The lower the concentration of the nonvolatile component, the more favorable the smoothness and uniformity of the formed coating film (cured product layer) or the cured film thereof, and the more favorable the adhesiveness between the base material and the cured film tends to be. On the other hand, the higher the concentration of the nonvolatile component, the more favorable the anti-dripping effect at the time of applying the present resin composition onto the base material tends to be.

The concentration of the nonvolatile component in the entire resin composition is not particularly limited; however, it is preferably 80% by mass or less, more preferably 0.1% to 60% by mass, still more preferably 1% to 40% by mass, particularly preferably 1% to 30% by mass, and most preferably in a range 1% to 20% by mass. In a case of being used within the above range, a resin composition having excellent coatability can be obtained.

The slipping angle of 20 µL of water at 23°C on the surface of the cured film (cured film in the early stage) formed by subjecting a base material to spray coating with the present resin composition and curing the present resin composition is preferably 60° or less, more preferably 50° or less, still more preferably 40° or less, particularly preferably 30° or less, and most preferably 20° or less. The lower limit of the slipping angle of water is not particularly limited, and it is, for example, 1° or more. In a case where the slipping angle of water in the cured film in the early stage is equal to or smaller than the above-described upper limit value, raindrops or snow that has adhered to the surface easily slips off.

The slipping angle is measured while intermittently changing the tilt angle by 1°. The details thereof are as described in Examples to be described later. It is noted that in the related art, the slipping angle is often measured while continuously changing the tilt angle. The slipping angle measured while intermittently changing the tilt angle by 1° tends to be larger than the slipping angle measured while continuously changing the tilt angle.

The slipping angle can be adjusted by the content and kind of the polyalkylsiloxane unit in the resin composition. Specifically, the slipping angle of water in the cured film in the early stage tends to be small in a case where the amount of the copolymer (A) is increased, in a case where the proportion of the silicone macromonomer (X) that is copolymerized in the copolymer (A) is increased, or in a case where the one containing a longer-chain polyalkylsiloxane unit is selected as the silicone macromonomer (X).

In addition, the slipping angle after the durability test is particularly important in the development in a wide range of use applications, where the smaller the slipping angle is, the more preferable it is, and the smaller the change from the early stage is, the more preferable it is.

After forming a cured film as described above and carrying out a durability test for 96 hours under the conditions of 50°C and 99% RH or more, the slipping angle of 20 µL of water at 23°C on the surface of the cured film (the cured film after the durability test) is preferably 60° or less, more preferably 50° or less, still more preferably 40° or less, particularly preferably 30° or less, and most preferably 20° or less. The lower limit of the slipping angle of water is not particularly limited, and it is, for example, 1° or more.

The amount of change in the slipping angle of water of the cured film after the durability test from the water slipping angle in the early stage (slipping angle of water of cured film after durability test - slipping angle of water of cured film in early stage) is preferably 40° or less, more preferably 30° or less, still more preferably 20° or less, and most preferably 15° or less. Although there is no particular lower limit, it is preferably 0°. With a setting in the above range, it is possible to exhibit the same level of performance as that in the early stage over a long period of time, and it becomes easy to design products.

The slipping angle after the weather fastness test is particularly important in the development in a wide range of use applications, where the smaller the slipping angle is, the more preferable it is, and the smaller the change from the early stage is, the more preferable it is.

After forming a cured film as described above and carrying out a weather fastness test for 500 hours under the conditions of a rainfall for 12 minutes out of 60 minutes, an irradiation intensity of 180 W/m² (300 to 400 nm), a black panel temperature of 63°C, a tank temperature of 50°C, and a tank humidity of 50%, the slipping angle of 20 µL of water at 23°C on the surface of the cured film (the cured film after the durability test) is preferably 60° or less, more preferably 50° or less, still more preferably 40° or less, particularly preferably 30° or less, and most preferably 20° or less. The lower limit of the slipping angle of water is not particularly limited, and it is, for example, 1° or more.

The amount of change in the slipping angle of water of the cured film after the weather fastness test from the water slipping angle in the early stage (slipping angle of water of cured film after weather fastness test - slipping angle of water of cured film in early stage) is preferably 40° or less, more preferably 30° or less, still more preferably 20° or less, and most preferably 15° or less. Although there is no particular lower limit, it is preferably 0°. With a setting in the above range, it is possible to exhibit the same level of performance as that in the early stage over a long period of time, and it becomes easy to design products.

<Production method for resin composition>

The present resin composition can be produced by mixing the copolymer (A), the component (B), and, as necessary, the initiator (C), a diluent, and other components.

In a case where the diluent contains water, the water may be blended at the time of the preparation of the hydrolyzed condensate of the silane compound (b), may be blended at the time of the production of the present resin composition, or may be blended both at the time of the preparation of the hydrolyzed condensate of the silane compound (b) and at the time of the production of the present resin composition.

Since the present resin composition described above contains the copolymer (A), the component (B), and the initiator (C), it is possible to form a cured product excellent in appearance, water slippability, weather fastness, and durability.

The present resin composition can be used in use applications for sensing members, such as surface materials of members through which electromagnetic waves of sensing members (millimeter wave radar, LiDAR, and the like) pass; and can be used in various automotive lamp lenses (vehicle lamps), hard coating agents for resin grazing, road signs, traffic signals, camera lenses, 5G-related members, antennas, solar panels, window glass, resin glass, automotive glass.

Among the above-described use applications, the present resin composition is suitable for the use application for a sensing member. For example, in a case where the surface material of the emblem or the front grill located on the front side of the millimeter wave radar or LiDAR in the vehicle is composed of the cured product of the present resin composition, raindrops or snow easily slips off even in a case of adhering to the outermost surface of the emblem or the like, and it is possible to suppress the attenuation or scattering of electromagnetic waves of the millimeter wave radar or LiDAR.

### [Cured product]

The cured product according to one aspect of the present invention (hereinafter, also denoted as the "present cured product") is a cured product of the present resin composition.

The present cured product is obtained by curing the present resin composition.

Examples of the curing method include a method of irradiating the present resin composition with an active energy ray, a method of carrying out curing with heating, and a method of carrying out curing using moisture in the air, where a method of irradiating the present resin composition with an active energy ray is preferable from the viewpoint of the temperature applied to the base material and productivity.

Examples of the active energy ray include an ultraviolet ray and an electron beam. An ultraviolet ray is preferable due to the reason that it is easily available and has excellent polymerizability.

In a case of curing the present resin composition by ultraviolet irradiation, it is possible to use, as a light source, a high-pressure mercury lamp, an ultra-high-pressure mercury lamp, a metal halide lamp, UV-LED, a low-pressure mercury lamp, a xenon excimer lamp, or the like. From the viewpoint of productivity, it is preferable to use a light source that exhibits the maximum irradiation intensity at a wavelength of 150 to 420 nm. In addition, the cumulative irradiation amount of ultraviolet rays is preferably 50 to 3,000 mJ/cm² and more preferably 100 to 2,000 mJ/cm².

The active energy ray may be applied in an air atmosphere or may be in an inert gas atmosphere such as nitrogen or argon.

In terms of the appearance or strength of the cured product, the irradiation time of the active energy ray is preferably 1 minute or less, more preferably 30 seconds or less, and still more preferably within a range of 15 seconds or less. Although there is no particular lower limit, it is, for example, 0.1 seconds. The method of carrying out curing by irradiating an active energy ray enables curing in a shorter time as compared with a method using heat curing, and thus it is a preferable aspect in consideration of productivity and cost.

In a case where the present resin composition contains a diluent, the present resin composition may be subjected to a heating treatment in order to remove the diluent before irradiating the present resin composition with an active energy ray. This heating treatment can be carried out by irradiation using a near-infrared lamp, circulation of warm air, or the like.

Further, the heating treatment may be carried out after irradiating the present resin composition with an active energy ray. This heating treatment can be carried out by irradiation using a near-infrared lamp, circulation of warm air, or the like. The cured product obtained by a heating treatment after curing by irradiation with an active energy ray has a high condensation reaction rate as compared with a cured product which has not been subjected to the heating treatment, and thus hardness or durability tends to be excellent.

The smaller, the slipping angle of 20 µL of water at 23°C on the surface of the cured product (the cured product in the early stage) formed as described above is, the more preferable it is, where the slipping angle thereof is preferably 60° or less, more preferably 50° or less, still more preferably 40° or less, particularly preferably 30° or less, and most preferably 20° or less. The lower limit of the slipping angle of water is not particularly limited, and it is 0° or more. In a case where the slipping angle of water is equal to or smaller than the above-described upper limit value, raindrops or snow that has adhered to the surface easily slips off.

In addition, the slipping angle of water after the durability test is particularly important in the development in a wide range of use applications, where the smaller the slipping angle is, the more preferable it is, and the smaller the change from the early stage is, the more preferable it is.

After forming a cured product as described above and carrying out a durability test for 96 hours under the conditions of 50°C and 99% RH or more, the slipping angle of 20 µL of water at 23°C on the surface of the cured product (the cured product after the durability test) is preferably 60° or less, more preferably 50° or less, still more preferably 40° or less, particularly preferably 30° or less, and most preferably 20° or less. The lower limit of the slipping angle of water is not particularly limited, and it is, for example, 1° or more.

The amount of change in the slipping angle of water of the cured product after the durability test from the water slipping angle in the early stage (slipping angle of water of cured product after durability test - early stage slipping angle of water of cured product) is 40° or less is preferable, 30° or less is more preferable, 20° or less is still more preferable, and 15° or less is most preferable. Although there is no particular lower limit, it is preferably -40°. With a setting in the above range, it is possible to exhibit the same level of performance as that in the early stage over a long period of time, and it becomes easy to design products.

Since the present cured product described above is a cured product of a resin composition containing the copolymer (A) and the component (B), it is excellent in productivity, appearance, water slippability, and durability.

The present cured product can be used in use applications for sensing members, such as surface materials of members through which electromagnetic waves of sensing members (millimeter wave radar, LiDAR, and the like) pass; and can be used in various automotive lamp lenses (vehicle lamps), hard coats for resin grazing, road signs, traffic signals, camera lenses, 5G-related members, antennas, solar panels, window glass, resin glass, automotive glass. Among the above-described use applications, the present cured product is suitable for the use application for a sensing member.

### [Manufacturing method for cured product]

The cured product can be manufactured, for example, by applying a curable composition containing the copolymer (A) and the component (B) consisting of at least one silane compound (b) or a partially hydrolyzed condensate thereof onto a base material and curing the curable composition (a cured product forming step).

After the cured product forming step, the formed cured product and the base material may be peeled off, as necessary.

### <Curable composition>

The curable composition contains the copolymer (A) and the component (B).

The curable composition typically contains a diluent.

The curable composition preferably contains the initiator (C).

The curable composition may contain a component other than those described above, as necessary.

The copolymer (A), the initiator (C), and the other components are as described above.

### (Component (B))

The component (B) consists of at least one silane compound (b) or a partially hydrolyzed condensate thereof. The silane compound (b) is as described above.

A partially hydrolyzed condensate of at least one silane compound (b) is obtained by subjecting the silane compound (b) or a mixture of two or more thereof to a hydrolytic condensation reaction according to a known method.

For example, a predetermined amount of water and, as necessary, an organic solvent are added to a tetramethoxysilane monomer and reacted generally at about room temperature to 100°C in the presence of a catalyst while distilling off the by-produced alcohol. As a result, the hydrolysis and condensation of tetramethoxysilane proceed to generate a liquid tetramethoxysilane partially hydrolyzed condensate (the average degree of polymerization is generally about 2 to 8 and mostly 3 to 7). The liquid tetramethoxysilane partially hydrolyzed condensate is represented by, for example, CH₃O-(Si(OCH₃)₂-O)ₛ-CH₃. s is a number from 2 to 8, indicating the average degree of polymerization. The degree of hydrolysis can be appropriately adjusted with the amount of water used.

The liquid tetramethoxysilane partially hydrolyzed condensate obtained as described above may be further subj ected to a hydrolytic condensation reaction. The method of further subj ecting the liquid tetramethoxysilane partially hydrolyzed condensate to a hydrolytic condensation reaction is the same as the method of using a primary reactant as a secondary reactant, which will be described later.

A silane compound (b) other than tetramethoxysilane can also be formed into a partially hydrolyzed condensate in the same manner. A mixture of two or more kinds of silane compounds (b) may be used as the partially hydrolyzed condensate.

Examples of the catalysts include inorganic acids such as hydrochloric acid, acetic acid, nitric acid, sulfuric acid, and phosphoric acid, organic acids such as formic acid, acetic acid, propionic acid, oxalic acid, p-toluenesulfonic acid, benzoic acid, phthalic acid, and maleic acid, alkali catalysts such as potassium hydroxide, sodium hydroxide, calcium hydroxide, and ammonia, an organic metal, a metal alkoxide, organic tin compounds, for example, dibutyltin dilaurylate, dibutyltin dioctiate, and dibutyltin diacetate, metal chelate compounds such as aluminum tris(acetylacetonate), titanium tetrakis(acetylacetonate), titanium bis(butoxy)bis(acetylacetonate), titanium bis(isopropoxy)bis(acetylacetonate), zirconium tetrakis(acetylacetonate), zirconium bis(butoxy)bis(acetylacetonate), and zirconium bis(isopropoxy)bis(acetylacetonate), and boron compounds such as boric acid butoxide and boric acid.

The using amount of the acid catalyst is not particularly limited as long as it is an amount which enables the function required as a catalyst to be exhibited; however, in general, it is selected from a range of about 0.001 to 10 parts by mass, which is preferably 0.003 to 5 parts by mass, with respect to 100 parts by mass of the silane compound (b).

From the viewpoint of the hardness of the cured product, the component (B) is preferably the silane compound (b1) in which R⁶, R⁷, R⁸, and R⁹ in Formula (b1) are an alkyl group, that is, tetraalkoxysilane or a partially hydrolyzed condensate of tetraalkoxysilane, and from the viewpoint of the slipping angle of water, the component (B) is more preferably a partially hydrolyzed condensate of tetraalkoxysilane and is particularly preferably a partially hydrolyzed condensate of tetramethoxysilane.

From the viewpoint of appearance, the Mw of component (B) is preferably 500 or more and more preferably 600 or more. The upper limit of Mw of the component (B) is, for example, 10,000.

The Mw of the component (B) is a standard polystyrene-equivalent value measured by gel permeation chromatography (GPC).

From the viewpoint of reactivity, the component (B) is preferably a compound (hereinafter, also referred to as a "secondary reactant") obtained by subjecting a partially hydrolyzed condensate of at least one kind of the silane compound (b), the partially hydrolyzed condensate having Mw of 300 to 3,000 (hereinafter, also denoted as a "primary reactant") to a hydrolytic condensation reaction in the presence of a catalyst.

In a case of using the secondary reactant as the component (B), it is possible to make the curability and appearance of the curable composition excellent while sufficiently maintaining the storage stability of the curable composition. Although the reason for this effect is not clear, it is conceived as follows. Since hydrolysis is accelerated in the secondary reactant, a large number of silanol groups (Si-OH) can be stably present as compared in the primary reactant. The silanol group is more reactive than Si-OR⁵, and thus the curability is improved. In addition, the condensation reaction is accelerated, and thus the molecular weight increases and cracking is suppressed, whereby the appearance can be improved.

In a case where the Mw of the primary reactant is 300 or more, the appearance of the cured product tends to be favorable, and in a case where it is 3,000 or less, the reactivity tends to be favorable. The Mw of the primary reactant is preferably 400 to 2,000 and more preferably 500 to 1,000.

From the viewpoint of the hardness of the cured layer, the silane compound (b) that forms the primary reactant is preferably the silane compound (b 1), more preferably tetraalkoxysilane, and still more preferably tetramethoxysilane.

As described above, the primary reactant is obtained by subjecting the silane compound (b) or a mixture of two or more thereof to a hydrolytic condensation reaction.

It is noted that a commercially available primary reactants can also be used, where examples thereof include MS51, MS53, MS57, and MS56S, manufactured by Mitsubishi Chemical Corporation, and Ethyl Silicate 40, Ethyl Silicate 48, Methyl Silicate 51, Methyl Silicate 53A, and EMS-485, manufactured by COLCOAT Co., Ltd.

A method of subjecting the primary reactant to a hydrolytic condensation reaction in the presence of a catalyst includes a method of adding water, a catalyst, and a solvent to the primary reactant and carrying out stirring at 25°C for 1 day or longer. Furthermore, the progress of the reaction can be accelerated by heating the primary reactant, and in such a case, it is also possible to adopt a method of carrying out stirring at 30°C to 100°C for 1 hour or longer.

Based on the empirical temperature and reaction time in the study of the inventors of the present invention, the Mw of the secondary reactant is preferably 400 to 50,000, more preferably 600 to 30,000, still more preferably 800 to 10,000, particularly preferably 900 to 5,000, and most preferably 1,000 to 2,000.

It is noted that due to the temporal progress of the reaction, it is difficult to specify the structure and characteristics (for example, a size such as a radius, a hydroxyl value, and the like) of the secondary reactant, excluding Mw, by general analytical methods. Although Mw can be measured, the reactivity of the curable composition or the appearance of the cured product differs between a case of using the primary reactant and a case of using the secondary reactant as the component (B). That is, there are circumstances (impossible or impractical circumstances) where it is impossible or almost impractical to directly specify the secondary reactant based on the structure or characteristics. Therefore, it shall be suitable to define the secondary reactant as the one obtained by subjecting a partially hydrolyzed condensate of at least one kind of the silane compound (b), the partially hydrolyzed condensate having an Mw of 300 to 3,000, to a hydrolytic condensation reaction in a presence of a catalyst".

### (Diluent)

In a case where the curable composition contains a diluent, the coating workability at the time of applying the curable composition, the smoothness and uniformity of the cured product formed, and the adhesiveness between the base material and the cured product are improved.

Examples of the diluent include water and an organic solvent, where an organic solvent is preferable.

Examples of the organic solvent include an alcohol-based solvent, a glycol-based solvent, a hydrocarbon-based solvent, an ester-based solvent, a ketone-based solvent, and an ether-based solvent.

Examples of the alcohol-based solvent include methanol, ethanol, isopropyl alcohol, n-butanol, isobutanol, octanol, n-propyl alcohol, and acetylacetone alcohol.

Examples of the glycol-based solvent include ethylene glycol, ethylene glycol monomethyl ether, ethylene glycol monoethyl ether, ethylene glycol mono-n-propyl ether, ethylene glycol mono-n-butyl ether, diethylene glycol monomethyl ether, diethylene glycol monoethyl ether, propylene glycol monomethyl ether, propylene glycol monoethyl ether, propylene glycol monobutyl ether, ethylene glycol monoethyl ether acetate, ethylene glycol monomethyl ether acetate, propylene glycol monoethyl ether acetate, and propylene glycol monomethyl ether acetate.

Examples of the hydrocarbon-based solvent include benzene, kerosene, toluene, and xylene.

Examples of the ester-based solvent include methyl acetate, ethyl acetate, butyl acetate, methyl acetoacetate, and ethyl acetoacetate.

Examples of the ketone-based solvent include acetone, methyl ethyl ketone, methyl isobutyl ketone, and acetylacetone.

Examples of the ether-based solvent include ethyl ether, butyl ether, methyl cellosolve, ethyl cellosolve, dioxane, furan, and tetrahydrofuran.

One kind of organic solvent may be used singly, or a combination of two or more kinds thereof may be used.

Due to the reason that handling is easy, storage stability as a liquid is good, and a cured product to be obtained has excellent properties, the diluent is preferably an alcohol-based solvent and more preferably methanol, ethanol, isopropanol, or n-propanol.

In a case where the component (B) is a hydrolyzed condensate of the silane compound (b), the diluent may contain water blended for subjecting the silane compound (b) to a hydrolytic condensation reaction.

In the curable composition, the amount of the copolymer (A) is preferably 1% to 95% by mass, more preferably 10% to 90% by mass, still more preferably 20% to 85% by mass, particularly preferably 25% to 85% by mass, and most preferably 30% to 65% by mass, with respect to 100% by mass of the nonvolatile component in the curable composition. In a case where the amount of the copolymer (A) is equal to or larger than the above-described lower limit value, the water slippability and appearance of the cured product are more excellent, and in a case where it is equal to or smaller than the above-described upper limit value, the appearance and strength of the cured product are more excellent.

The amount of component (B) is preferably 1% to 90% by mass, more preferably 5% to 80% by mass, still more preferably 10% to 75% by mass, particularly preferably 18% to 70% by mass, and most preferably 30% to 65% by mass, with respect to 100% by mass of the nonvolatile component in the curable composition. In a case where the amount of the component (B) is equal to or larger than the above-described lower limit value, the durability and strength of the cured product are more excellent, and in a case where it is equal to or smaller than the above-described upper limit value, the appearance of the cured product are more excellent.

The amount of the initiator (C) is preferably 10% by mass or less, more preferably 5% by mass or less, and still more preferably 3% by mass or less, with respect to 100% by mass of the nonvolatile component in the curable composition. The lower limit is not particularly limited; however, in a case of a cured product cured by active energy ray irradiation, it is preferably 0.01% by mass or more, more preferably 0.05% by mass or more, and still more preferably 0.2% by mass or more.

The concentration of the nonvolatile component in the entire curable composition is not particularly limited; however, it is preferably 80% by mass or less, more preferably 0.1% to 60% by mass, still more preferably 1% to 40% by mass, particularly preferably 1% to 30% by mass, and most preferably in a range 1% to 20% by mass. In a case of being used within the above range, a composition having excellent coatability can be obtained.

It is noted that the nonvolatile component indicates a component excluding a diluent.

The amount of the other components is not particularly limited; however, it can be set to, for example, about 0% to 30% by mass with respect to 100% by mass of the nonvolatile component in the curable composition. However, in a case of being used in use applications where water slippability is particularly important, it is preferable to increase the amount of the silicon atomcontaining compound as much as possible from the viewpoint of the slipping angle, and it is preferable not to contain other components.

The curable composition can be prepared by mixing the copolymer (A), the component (B), and, as necessary, a diluent, the initiator (C), and other components.

In a case where the diluent contains water, the water may be blended at the time of the preparation of the hydrolyzed condensate of the silane compound (b), may be blended at the time of the production of the curable composition, or may be blended both at the time of the preparation of the hydrolyzed condensate of the silane compound (b) and at the time of the production of the present composition.

### <Cured product forming step>

As a coating method for the curable composition, it is possible to use a known method such as brush coating, a gravure coater method, a die coater method, a bar coater method, a spray coating method, a flow coating method, a dip coating method, a spin coating method, or a curtain coating method.

Examples of the curing method include a method of irradiating the curable composition with an active energy ray, a method of carrying out curing with heating, and a method of carrying out curing using moisture in the air. When the base material is a resin base material, when the base material is weak against heat, or when it is desired to improve the hardness or productivity of the cured product, a method of irradiating the curable composition with an active energy ray may be preferable.

In a case where the curable composition is cured by heating, the heating method includes irradiation with a near-infrared lamp, circulation of warm air, and the like. The heating conditions are preferably heating at 60°C to 200°C for 10 minutes to 3 hours and more preferably heating at 80°C to 150°C for 30 minutes to 2 hours. The curable composition may be heated in an air atmosphere or may be heated in an inert gas atmosphere such as nitrogen or argon.

In a case where the curable composition is cured by being irradiated with an active energy ray, examples of the active energy ray include an ultraviolet ray and an electron beam. An ultraviolet ray is preferable from the viewpoint of ease of introduction of equipment or cost.

In a case of curing the curable composition by ultraviolet irradiation, it is possible to use, as a light source, a high-pressure mercury lamp, an ultra-high-pressure mercury lamp, a metal halide lamp, UV-LED, a low-pressure mercury lamp, a xenon excimer lamp, or the like. From the viewpoint of productivity, it is preferable to use a light source that exhibits the maximum irradiation intensity at a wavelength of 150 to 420 nm. In addition, the cumulative irradiation amount of ultraviolet rays is preferably 50 to 3,000 mJ/cm² and more preferably 100 to 2,000 mJ/cm².

The active energy ray may be applied in an air atmosphere or may be in an inert gas atmosphere such as nitrogen or argon.

In a case where the curable composition contains a diluent, after applying the curable composition, the curable composition may be subjected to a heating treatment to remove the diluent before irradiating the curable composition with an active energy ray for drying. This heating treatment can be carried out by irradiation using a near-infrared lamp, circulation of warm air, or the like.

In the cured product obtained by being subjected to a heating treatment and then irradiated with an active energy ray, a diluent does not easily remain in the inside of the cured product, and thus the adhesiveness over a long period of time outdoors tends to be improved as compared with a case where the heating treatment has not been carried out. Regarding the conditions for the heating treatment for drying, the surface temperature of the base material (hereinafter, referred to as the heating temperature) is preferably 40°C to 90°C and more preferably 50°C to 70°C, and the drying time is preferably 60 to 180 seconds and more preferably 90 to 150 seconds, from the viewpoint of the appearance or adhesiveness of the cured product.

The heating treatment may be carried out after irradiating the curable composition with an active energy ray. This heating treatment can be carried out by irradiation using a near-infrared lamp, circulation of warm air, or the like. The cured product obtained by a heating treatment after curing by irradiation with an active energy ray has a high condensation reaction rate as compared with a cured product which has not been subjected to the heating treatment, and thus hardness or durability tends to be excellent.

The contact angle of 1 µL of distilled water at 23°C on the surface of the cured layer in the early stage (hereinafter, also denoted as the "contact angle of water") is preferably 70° or more, more preferably 80° or more, still more preferably 90° or more, particularly preferably 95° or more, and most preferably 100° or more. In a case where the contact angle is equal to or larger than the above-described lower limit value, the antifouling property is more excellent. The upper limit is not particularly limited; however, it is preferably 150°.

The contact angle of water can be adjusted by the amount of the copolymer (A), the amount of the silicone macromonomer (X) in the copolymer (A), and the like. Specifically, in a case of increasing the amount of the copolymer (A) or increasing the amount of the silicone macromonomer (X) in the copolymer (A), the above-described contact angle tends to increase.

The thickness of the cured product formed on the base material is preferably 10 nm to 4 µm and more preferably 20 nm to 3 µm. In a case where the thickness of the cured product is equal to or larger than the above-described upper limit value, the cured product is more excellent in water slippability and scratch resistance, and in a case where it is equal to or smaller than the above-described upper limit value, there is a tendency that cracking is less likely to occur in the cured product.

Since the cured product described above contains the copolymer (A) and the component (B), it is excellent in water slippability, appearance, and durability.

The cured product can be used in use applications for sensing members, such as members through which electromagnetic waves of sensing members (millimeter wave radar, LiDAR, and the like) pass; and can be used in various automotive lamp lenses (vehicle lamps), resin grazing, road signs, traffic signals, camera lenses, 5G-related members, antennas, solar panels, window glass, resin glass, automotive glass. Among the above-described use applications, the cured product is suitable for the use application for a sensing member.

### [Laminate]

A laminate according to one aspect of the present invention (hereinafter, also denoted as the "present laminate") has a base material and a layer consisting of a cured product (hereinafter, also denoted as a "cured product layer").

The cured product layer is preferably located on the outermost layer of the present laminate.

A primer layer may be provided between the base material and the cured product layer.

In a case where a resin base material is used as a base material, the present laminate preferably contains at least one selected from the group consisting of an ultraviolet absorbing agent and a light stabilizer. In a case where a laminate contains an ultraviolet absorbing agent or a light stabilizer, the deterioration of the laminate itself or a member serving as a base of the laminate due to ultraviolet rays or the like is suppressed, and weather fastness and durability are improved. The ultraviolet absorbing agents and the light stabilizer will be described in detail later.

The ultraviolet absorbing agent or the light stabilizer may be contained in any layer of the laminate. However, from the viewpoint of the member protection, the ease of curing of the cured layer of the laminate, and the retention of water slippability, the ultraviolet absorbing agent or the light stabilizer is preferably contained in the base material or the primer layer, and it is more preferably contained in the primer layer in consideration of the ease of designing the entire laminate.

In the laminate, in particular, it is preferable that the light stabilizer is contained in the base material or the primer layer, and it is more preferable that the light stabilizer is contained in the primer layer in consideration of the ease of designing the entire laminate. Since the light stabilizer can capture radicals generated by light, it is possible to improve resistance to light (particularly ultraviolet rays). In particular, it is preferable that an ultraviolet absorbing agent is contained together with the light stabilizer.

The amount of the ultraviolet absorbing agent or light stabilizer cannot be unconditionally determined since it depends on the layers used in the laminate and the film thickness of the layers. For example, in a case where an ultraviolet absorbing agent or light stabilizer is contained in the base material, the amount of each of the ultraviolet absorbing agent and the light stabilizer is generally in a range of 10% by mass or less, preferably 0.01% to 5% by mass, and more preferably 0.1% to 3% by mass, with respect to the total mass of the base material. In a case where an ultraviolet absorbing agent or a light stabilizer is contained in the primer layer, the amount of each of the ultraviolet absorbing agent and the light stabilizer is preferably in a range of 30% by mass or less, more preferably 0.01% to 20% by mass, still more preferably 0.1% to 15% by mass, and particularly preferably 0.3% to 15% by mass, with respect to the total mass of the primer layer. In a case of being used in the above range, it is possible to improve the weather fastness of the base material or member while maintaining other characteristics, which enables the prevention of deterioration.

### [Base material]

Examples of the base materials include glass base materials; metal base materials such as a zinc-plated steel plate, a zinc alloy-plated steel plate, a stainless steel plate, and a tin-plated steel plate; and resin base materials such as a polymethyl methacrylate resin, a polycarbonate resin, a polyester resin, a polystyrene resin, an ABS resin, an AS resin, a polyamide resin, a polyarylate resin, a polyurethane resin, a polyvinyl resin, triacetyl cellulose, a polymethacrylimide resin, and a polyallyl diglycol carbonate resin. Considering that the laminate is used in various members, the resin that constitutes a resin base material is preferably glass, a polycarbonate resin, a polyester resin, triacetyl cellulose, a polyurethane resin, or a polyvinyl resin, and it is preferably a polycarbonate resin or a polyester resin, from the viewpoint of transparency and mechanical strength. In addition to the resin, the resin base material may contain additives such as an ultraviolet absorbing agent, a light stabilizer, a plasticizer, an antistatic agent, a flame retardant, a reinforcing material, a filler, a coloring agent, a lubricant, a foaming agent, a lubrication aid, and a curing catalyst.

As necessary, a primer layer may be present on the base material to improve adhesiveness or the like, and a functional layer such as a pressure sensitive adhesive layer, an anti-fogging layer, an antireflection layer, or the like can be provided on a side of the base material opposite to a side where the cured product layer is present. In addition, a heater may be mounted on a side opposite to the outermost surface of the laminate or inside the laminate.

### [Primer layer]

The primer layer contributes to the improvement of the adhesiveness between the base material and the cured layer and the coatability at the time of laminating the cured layer. In the course of continuing the study, it was found that in a case where a resin base material in the related art is used, the adhesiveness (the attachability between the base material and the cured layer) tends to deteriorate due to the large difference with respect to the component of the cured layer. It was found that, for this reason, in a case where a resin base material is used as a base material, the problem of adhesiveness can be solved in a case where a primer layer is provided between the base material and the cured layer in order to achieve both the adhesiveness to the base material and the adhesiveness to the cured layer.

The primer layer typically contains a resin component.

The primer layer preferably contains at least one selected from the group consisting of an ultraviolet absorbing agent and a light stabilizer.

As necessary, the primer layer may contain additives other than the ultraviolet absorbing agent and the light stabilizer within a range in which the effect of the present invention is not impaired.

### <Resin component>

Examples of the resin component include an acrylic resin, a polyester resin, a urethane resin, and a vinyl resin. Among these, acrylic resin or a urethane resin is particularly preferable from the viewpoint of improving adhesiveness. One kind of these resin components may be used singly, or a combination of two or more kinds thereof may be used. In addition, the resin component may be a non-curable resin or may be a compound derived from a curable compound (a monomer, an oligomer, or the like). Examples of the compound derived from a curable compound include a cured product of a curable compound.

A compound derived from a curable compound is preferable from the viewpoint of further improving the adhesiveness to the cured layer and improving the durability of the cured layer. A primer layer containing a compound derived from a curable compound is formed by incorporating the curable compound into a primer that forms a primer layer, applying the primer onto a base material, and curing the curable compound on the base material. Such a primer layer has excellent adhesiveness to the base material, and thus the attachability between the base material and the cured layer is improved as compared with a case where the resin component is only a non-curable resin. In addition, in a case of using a curable compound in the primer layer, the durability of the cured layer (the appearance after the durability test, the adhesiveness to the base material, the water slippability, and the like) tends to be excellent as compared with a case of using a non-curable compound.

Examples of the curable compound include an active energy ray-curable compound and a thermosetting compound, where an active energy ray-curable compound is preferable. In a case where the primer is applied to a resin base material and then cured by heat, the resin base material may be deformed by heat; however, in a case of being cured by an active energy ray, the present resin composition can be applied to a resin base material having low heat resistance since the deformation due to the heat of the resin base material can be suppressed. In general, curing with an active energy ray can be expected to improve productivity because the curing time is short as compared with other curing methods such as heat curing and moisture curing.

As the active energy ray-curable compound, an active energy ray-curable compound known in the related art can be used, and examples thereof include a compound having a radically polymerizable group such as a (meth)acryloyl group.

As the compound having a radically polymerizable group, various compounds known in the related art can be used, and examples thereof include (meth)acrylate and other monomers copolymerizable with (meth)acrylate. In addition, examples of the compound having a radically polymerizable group include a monofunctional compound having one radically polymerizable group, a difunctional compound having two radically polymerizable groups, and a polyfunctional compound which is trifunctional or higher functional and has three or more radically polymerizable groups. Among these, it is preferable to contain a polyfunctional compound in order to obtain a primer layer having an increased degree of curing in order to improve the adhesiveness to the cured layer.

Examples of the polyfunctional compound include a polyfunctional (meth)acrylate.

Examples of the polyfunctional (meth)acrylates include, but are not particularly limited to, pentaerythritol triacrylate, dipentaerythritol triacrylate, pentaerythritol tetraacrylate, dipentaerythritol pentaacrylate, dipentaerythritol hexaacrylate, trimethylolpropane triacrylate, a (meth)acrylate having a trimethylolpropane-derived skeleton, such as neopentyl glycol-modified trimethylolpropane di(meth)acrylate, ditrimethylolpropane tetraacrylate, and a (meth)acrylate having an isocyanurate skeleton, such as bis(2-acryloyloxyethyl)-2-hydroxyethyl isocyanurate; polyfunctional acrylates such as a pentaerythritol triacrylate adduct to succinic acid anhydride and a dipentaerythritol pentaacrylate adduct to succinic acid anhydride; polyester (meth)acrylates such as polyester oligomer (specifically, M8030, M7100, or the like, manufactured by Toagosei Co., Ltd.) having an acryloyl group in the side chain or in the side chain and the terminal; polyfunctional urethane (meth)acrylates such as an isocyanurate form of isophorone diisocyanate (IPDI), a reactant of polytetramethylene glycol (PTMG) and hydroxyethyl acrylate (HEA), a reactant of hexamethylene diisocyanate (HDI) and pentaerythritol triacrylate to a PTMG reactant; polyester (meth)acrylates having a carbonate bond, such as a reactant between an oligoester using a polycarbonate diol and pentaerythritol triacrylate; polyurethane (meth)acrylates such as a reactant of diisocyanate and a trifunctional or higher functional polyol and a reactant of a hydroxyl group-containing (meth)acrylate; triethoxy(meth)acrylates having an isocyanurate ring, such as triethoxyisocyanuric acid triacrylate; alkylene oxide-modified product thereof; and polycaprolactone-modified products thereof.

Among these, from the viewpoint of viscosity and curability and viewpoint of the hardness of the cured film, the following compounds are preferably included: pentaerythritol triacrylate, pentaerythritol tetraacrylate, dipentaerythritol pentaacrylate, dipentaerythritol hexaacrylate, trimethylolpropane triacrylate, ditrimethylolpropane tetraacrylate, and dipentaerythritol triacrylate; alkylene oxide-modified product thereof; and caprolactone-modified products thereof.

One kind of (meth)acrylate may be used alone, or a combination of two or more kinds thereof may be used.

Examples of the monofunctional compound include a monofunctional (meth)acrylate and (meth)acrylic acid. Examples of the monofunctional (meth)acrylates include, but are not particularly limited to, alkyl (meth)acrylates such as methyl (meth)acrylate, n-butyl (meth)acrylate, 2-ethylhexyl (meth)acrylate, lauryl (meth)acrylate, stearyl (meth)acrylate, cyclohexyl (meth)acrylate, and isobomyl (meth)acrylate, hydroxyalkyl (meth)acrylates such as hydroxyethyl (meth)acrylate, hydroxypropyl (meth)acrylate, and hydroxybutyl (meth)acrylate, alkoxyalkyl (meth)acrylates such as methoxyethyl (meth)acrylate, ethoxyethyl (meth)acrylate, methoxypropyl (meth)acrylate, and ethoxypropyl (meth)acrylate, aromatic (meth)acrylates such as benzyl (meth)acrylate and phenoxyethyl (meth)acrylate, amino group-containing (meth)acrylates such as diaminoethyl (meth)acrylate and diethylaminoethyl (meth)acrylate, methoxyethylene glycol (meth)acrylate, phenoxypolyethylene glycol (meth)acrylate, ethylene oxide-modified (meth)acrylate such as phenylphenol ethylene oxide-modified (meth)acrylate, glycidyl (meth)acrylate, and tetrahydrofurfuryl (meth)acrylate.

Examples of the polyfunctional (meth)acrylate which is difunctional include, but are not limited to, alkanediol di(meth)acrylates such as 1,4-butanediol di(meth)acrylate, neopentyl glycol di(meth)acrylate, 1,6-hexanediol di(meth)acrylate, 1,9-nonanediol di(meth)acrylate, and tricyclodecanedimethylol di(meth)acrylate, bisphenol-modified di(meth)acrylates such as bisphenol A ethylene oxide-modified di(meth)acrylate and bisphenol F ethylene oxide-modified di(meth)acrylate, polyethylene glycol di(meth)acrylate, polypropylene glycol di(meth)acrylate, urethane di(meth)acrylate, epoxy di(meth)acrylate, and alkylene oxide-modified product thereof; and polycaprolactone-modified products thereof.

As the thermosetting compound, a thermosetting compound known in the related art can be used. For example, various polyols and various polyisocyanates are used in combination.

Examples of the polyol include those known in the related art, which include, for example, polymers such as a polycarbonate polyol, a polyester polyol, an acrylic polyol, a polyurethane polyol, a polyolefin polyol, a polyether polyol, and a polyvinyl alcohol, polymers having a dendritic branched structure, such as a dendrimer and a hyperbranched polymer, in which the terminal is a hydroxyl group, polyhydric alcohols such as ethylene glycol, 1,2-propylene glycol, 1,3-propylene glycol, 1,2-butanediol, 1,3-butanediol, 1,4-butanediol, 1,5-pentanediol, 1,6-hexanediol, 1,4-cyclohexanediol, 1,4-cyclohexanedimethanol, 1,7-heptanediol, 1,8-octanediol, 1,9-nonanediol, 1,10-decanediol, neopentyl glycol, 3-methyl-1,5-pentanediol, 3,3-dimethylolheptane, trimethylolethane, trimethylolpropane, glycerol, polycaprolactone triol, erythritol, pentaerythritol, polycaprolactone tetraol, and diglycerin.

Among these, a polyol of a polymer type a polyol having a branched structure is preferable due to the reason that crosslinking density is high and curability or durability is excellent, and among them, a dendrimer or a hyperbranched polymer is more preferable from the viewpoint that a highly branched structure is formed, crosslinking density is effectively increased, and durability is improved.

These polyols may be used singly or may be in a combination of two or more thereof.

Examples of the polyisocyanate include those known in the related art, where examples thereof include aromatic diisocyanates such as tolylene diisocyanate, xylylene diisocyanate, methylene diphenyl diisocyanate, phenylene diisocyanate, naphthalene diisocyanate, and tolidine diisocyanate, aliphatic diisocyanates having an aromatic ring, such as α,α,α',α'-tetramethylxylylene diisocyanate, aliphatic diisocyanates such as methylene diisocyanate, propylene diisocyanate, lysine diisocyanate, trimethylhexamethylene diisocyanate, and hexamethylene diisocyanate, and alicyclic diisocyanates such as cyclohexane diisocyanate, methylcyclohexane diisocyanate, isophorone diisocyanate, dicyclohexylmethane diisocyanate, and isopropylidene dicyclohexyl diisocyanate. In addition, examples thereof also include trifunctional or higher functional polyisocyanates such as a biuret form, a trimethylolpropane adduct form, an isocyanurate form, and an allophanate form, which are synthesized using these difunctional polyisocyanates as starting materials. These polyols may be used singly or may be in a combination of two or more thereof.

Among these, it is preferable to include a trifunctional or higher functional polyisocyanate, and it is more preferable to include an isocyanurate form due to the reason that crosslinking density is high and curability or durability is excellent. In addition, from the viewpoint of the durability of the cured layer, the one having an aromatic ring structure or an alicyclic structure is preferable, and from the viewpoint that yellowing is less likely to occur, the one having an aliphatic structure or an alicyclic structure is preferable.

In the primer layer, the amount of the resin component is preferably 30% by mass or more, more preferably 50% by mass or more, and still more preferably 70% by mass or more, and it may be 100% by mass, with respect to the total mass of the primer layer.

### <Ultraviolet absorbing agent>

Examples of the ultraviolet absorbing agents include an organic ultraviolet absorbing agent and an inorganic ultraviolet absorbing agent. From the viewpoint of transparency, an organic ultraviolet absorbing agent is preferable.

The organic ultraviolet absorbing agent is not particularly limited. However, examples thereof include a hydroxyphenyltriazine-based ultraviolet absorbing agent, a benzotriazole-based ultraviolet absorbing agent, a cyclic iminoester-based ultraviolet absorbing agent, a benzophenone-based ultraviolet absorbing agent, a salicylic acid ester-based ultraviolet absorbing agent, and a cyanoacrylate-based ultraviolet absorbing agent. Among these, from the viewpoint of weather fastness and durability, a hydroxyphenyltriazine-based ultraviolet absorbing agent, a benzotriazole-based ultraviolet absorbing agent, or a cyclic iminoester-based ultraviolet absorbing agent is more preferable, and a hydroxyphenyltriazine-based ultraviolet absorbing agent is still more preferable. One kind of these ultraviolet absorbing agents may be used singly, or a combination of two or more kinds thereof may be used. Further, it is also possible to use those in which these compounds are incorporated into polymers.

Examples of the hydroxyphenyltriazin-based ultraviolet absorbing agents include, but are not limited to, 2-[4-([2-hydroxy-3-dodecyloxypropyl]oxy)-2-hydroxyphenyl]-4,6-bis(2,4-dimethylphenyl)-1,3,5-triazine and 2-[4-([2-hydroxy-3-tridecyloxypropyl]oxy)-2-hydroxyphenyl]-4,6--bis(2,4-dimethylphenyl)-1,3,5-triazine (Tinuvin (registered trade name) 400 manufactured by BASF SE), 2-[4,6-bis(2,4-dimethylphenyl)-1,3,5-triazin-2-yl]-5-[3-(dodecyloxy)-2-hydroxypropoxy]phenol), a reaction product of 2-(2,4-dihydroxyphenyl)-4,6-bis-(2,4-dimethylphenyl)-1,3,5-triazine and (2-ethylhexyl)-glycidic acid ester (Tinuvin (registered trade name) 405, manufactured by BASF SE), 2,4-bis"2-hydroxy-4-butoxyphenyl"-6-(2,4-dibutoxyphenyl)-1,3-5-triazine (Tinuvin (registered trade name) 460, manufactured by BASF SE), 2-(4,6-diphenyl-1,3,5-triazin-2-yl)-5-[(hexyl)oxy]-phenol (Tinuvin (registered trade name) 1577, manufactured by BASF SE), 2-(4,6-diphenyl-1,3,5-triazin-2-yl)-5-[2-(2-ethylhexanoyloxy)ethoxy]-phenol (ADK STAB LA46, manufactured by ADEKA Corporation), and 2-(2-hydroxy-4-[1-octyloxycarbonylethoxy]phenyl)-4,6-bis(4-phenylphenyl)-1,3,5-triazine (Tinuvin (registered trade name) 479, manufactured by BASF SE).

Examples of the benzotriazole-based ultraviolet absorbing agent include, but are not limited to, 2-[2'-hydroxy-5'-(methacryloyloxymethyl)phenyl]-2H-benzotriazole, 2-[2'-hydroxy-5'-(methacryloyloxyethyl)phenyl]-2H-benzotriazole, 2-[2'-hydroxy-5'-(methacryloyloxypropyl)phenyl]-2H-benzotriazole, 2-[2'-hydroxy-5'-(methacryloyloxyhexyl)phenyl]-2H-benzotriazole, 2-[2'-hydroxy-3'-tert-butyl-5'-(methacryloyloxyethyl)phenyl]-2H-benzotriazole, 2-[2'-hydroxy-5'-tert-butyl-3'-(methacryloyloxyethyl)phenyl]-2H-benzotriazole, 2-[2'-hydroxy-5'-(methacryloyloxyethyl)phenyl]-5-chloro-2H-benzotriazole, 2-[2'-hydroxy-5'-(methacryloyloxyethyl)phenyl]-5-methoxy-2H-benzotriazole, 2-[2'-hydroxy-5'-(methacryloyloxyethyl)phenyl]-5-cyano-2H-benzotriazole, 2-[2'-hydroxy-5'-(methacryloyloxyethyl)phenyl]-5-tert-butyl-2H-benzotriazole, and 2-[2'-hydroxy-5'-(methacryloyloxyethyl)phenyl]-5-nitro-2H-benzotriazole.

Examples of the cyclic iminoester-based ultraviolet absorbing agent include, but are not limited to, 2-methyl-3,1-benzoxazin-4-one, 2-butyl-3,1-benzoxazin-4-one, 2-phenyl-3,1-benzoxazin-4-one, 2-(1- or 2-naphthyl)-3,1-benzoxazin-4-one, 2-(4-biphenyl)-3,1-benzoxazin-4-one, 2-p-nitrophenyl-3,1-benzoxazin-4-one, 2-m-nitrophenyl-3,1-benzoxazin-4-one, 2-p-benzoylphenyl-3,1-benzoxazin-4-one, 2-p-methoxyphenyl-3,1-benzoxazin-4-one, 2-o-methoxyphenyl-3,1-benzoxazin-4-one, 2-cyclohexyl-3,1-benzoxazin-4-one, 2-p-(or m-)phthalimidophenyl-3,1-benzoxazin-4-one, N-phenyl-4-(3,1-benzoxazin-4-one-2-yl)phthalimide, N-benzoyl-4-(3,1-benzoxazin-4-one-2-yl)aniline, N-benzoyl-N-methyl-4-(3,1-benzoxazin-4-one-2-yl)aniline, 2-(p-(N-methylcarbonyl)phenyl)-3,1-benzoxazine-4-one, 2,2'-bis(3,1-benzoxazin-4-one), 2,2'-ethylenebis(3,1-benzoxazin-4-one), 2,2'-tetramethylenebis(3,1-benzoxazin-4-one), 2,2'-decamethylenebis(3,1-benzoxazine-one, 2,2'-p-phenylenebis(3,1-benzoxazin-4-one), 2,2'-m-phenylenebis(3,1-benzoxazin-4-one), 2,2'-(4,4'-diphenylene)bis(3,1-benzoxazine-one), 2,2'-(2,6- or 1,5-naphthylene)bis(3,1-benzoxazin-4-one), 2,2'-(2-methyl-p-phenylene)bis(3,1-benzoxazin-4-one), 2,2'-(2-nitro-p-phenylene)bis(3,1-benzoxazin-4-one), 2,2'-(2-chloro-p-phenylene)bis(3,1-benzoxazin-4-one), 2,2'-(1,4-cyclohexylene)bis(3,1-benzoxazin-4-one), 1,3,5-tri(3,1-benzoxazine-one-2-yl)benzene, 1,3,5-tri(3,1-benzoxazin-4-one-2-yl)naphthalene, 2,4,6-tri(3,1-benzoxazin-4-one-2-yl)naphthalene, 2,8-dimethyl-4H,6H-benzo(1,2-d;5,4-d')bis(1,3)-oxazine-4,6-dione, 2,7-dimethyl-4H,9H-benzo(1,2-d;4,5-d')bis(1,3)-oxazine-4,9-dione, 2,8-diphenyl-4H,8H-benzo(1,2-d;5,4-d')bis(1,3)-oxazine-4,6-dione, 2,7-diphenyl-4H,9H-benzo(1,2-d;4,5-d')bis(1,3)-oxazine-4,6-dione, 6,6'-bis(2-methyl-4H,3,1-benzoxazin-4-one), 6,6'-bis(2-ethyl-4H,3,1-benzoxazin-4-one), 6,6'-bis(2-phenyl-4H,3,1-benzoxazin-4-one), 6,6'-methylenebis(2-methyl-4H,3,1 -benzoxazin-4-one), 6,6'-methylenebis(2-phenyl-4H,3,1 - benzoxazin-4-one), 6,6'-ethylenebis(2-methyl-4H,3,1-benzoxazin-4-one), 6,6'-ethylenebis(2-phenyl-4H,3,1 -benzoxazin-4-one), 6,6'-butylenebis(2-methyl-4H,3,1 -benzoxazin-4-one), 6,6'-butylenebis(2-phenyl-4H,3,1-benzoxazin-4-one), 6,6'-oxybis(2-methyl-4H,3,1-benzoxazin-4-one), 6,6'-oxybis(2-phenyl-4H,3,1-benzoxazin-4-one), 6,6'-sulfonylbis(2-methyl-4H,3,1-benzoxazin-4-one), 6,6'-sulfonylbis(2-phenyl-4H,3,1-benzoxazin-4-one), 6,6'-carbonylbis(2-methyl-4H,3,1-benzoxazin-4-one), 6,6'-carbonylbis(2-phenyl-4H,3,1-benzoxazin-4-one), 7,7'-methylenebis(2-methyl-4H,3,1-benzoxazin-4-one), 7,7'-methylenebis(2-phenyl-4H,3,1-benzoxazine-one), 7,7'-bis(2-methyl-4H,3,1-benzoxazin-4-one), 7,7'-ethylenebis(2-methyl-4H,3,1 -benzoxazin-4-one), 7,7'-oxybis(2-methyl-4H,3,1-benzoxazine-one), 7,7'-sulfonylbis(2-methyl-4H,3,1-benzoxazine-one), 7,7'-carbonylbis(2-methyl-4H,3,1-benzoxazin-4-one), 6,7'-bis(2-methyl-4H,3,1-benzoxazin-4-one), 6,7'-bis(2-phenyl-4H,3,1-benzoxazin-4-one, 6,7'-methylenebis(2-methyl-4H,3,1-benzoxazin-4-one), and 6,7'-methylenebis(2-phenyl-4H,3,1-benzoxazin-4-one).

Examples of the benzophenone-based ultraviolet absorbing agent (the benzophenone-based compound) and the oxybenzophenone-based ultraviolet absorbing agent (the oxybenzophenone-based compound) include 2,4-dihydroxybenzophenone, 2-hydroxy-4-methoxybenzophenone, 2-hydroxy-4-methoxybenzophenone-5-sulfonic acid (anhydrite and trihydrate), 2-hydroxy-4-octyloxybenzophenone, 4-dodecyloxy-2-hydroxybenzophenone, 4-benzyloxy-2-hydroxybenzophenone, 2,2'-dihydroxy-4-methoxybenzophenone (product name "KEMISORB 111", manufactured by Chemipro Kasei Kaisha, Ltd.), 2,2',4,4'-tetrahydroxybenzophenone (product name "SEESORB106", manufactured by SHIPRO KASEI KAISHA, Ltd.), and 2,2'-dihydroxy-4,4-dimethoxybenzophenone.

Examples of the salicylic acid ester-based ultraviolet absorbing agent (the salicylic acid ester-based compound) include phenyl-2-acryloyloxybenzoate, phenyl-2-acryloyloxy-3-methylbenzoate, phenyl-2-acryloyloxy-4-methylbenzoate, phenyl-2-acryloyloxy-5-methylbenzoate, phenyl-2-acryloyloxy-3-methoxybenzoate, phenyl-2-hydroxybenzoate, phenyl-2-hydroxy-3-methylbenzoate, phenyl-2-hydroxy-4-methylbenzoate, phenyl-2-hydroxy-5-methylbenzoate, phenyl 2-hydroxy-3-methoxybenzoate, and 2,4-di-tert-butyl phenyl-3,5-di-tert-butyl-4-hydroxybenzoate (Tinuvin (registered trade name) 120, manufactured by BASF SE).

Examples of the cyanoacrylate-based ultraviolet absorbing agent (the cyanoacrylate compound) include an alkyl-2-cyanoacrylate, a cycloalkyl-2-cyanoacrylate, an alkoxyalkyl-2-cyanoacrylate, an alkenyl-2-cyanoacrylate, and an alkynyl-2-cyanoacrylate.

### <Light stabilizer>

The light stabilizer is not particularly limited. However, examples thereof include an amine-based light stabilizer, a phenol-based light stabilizer, a phosphorus-based light stabilizer, and a thioether-based light stabilizer, among which an amine-based light stabilizer, a phenol-based-based light stabilizer, or a phosphorus-based-based light stabilizer is preferable, and, in particular, an amine-based-based light stabilizer is more preferable in consideration of small yellowing. One kind of these light stabilizers may be used singly, or two or more kinds thereof can be used in combination. In addition, it is also possible to use those in which these compounds are incorporated into polymers.

Examples of the amine-based light stabilizer include a polymerized substance (Tinuvin (registered trade name) 622, manufactured by BASF SE) between dimethyl succinate and 4-hydroxy-2,2,6,6-tetramethyl-1-piperidineethanol; a 1 to 1 reaction product (Tinuvin (registered trade name) 119, manufactured by BASF SE) between a polymerized substance between dimethyl succinate and 4-hydroxy-2,2,6,6-tetramethyl-1-piperidineethanol, and N,N,N",N"-tetrakis-(4,6-bis-(butyl-(N-methyl-2,2,6,6-tetramethylpiperidin-4-yl)amino)-triazin-2-yl)-4,7-diazadecane-1,10-diamine; a polycondensate (Tinuvin (registered trade name) 2020, manufactured by BASF SE) between dibutylamine/1,3-triazine/N,N-bis(2,2,6,6-tetramethyl-4-piperidyl-1,6-hexamethylenediamine and N-(2,2,6,6-tetramethyl-4-piperidyl)butylamine; poly[{6-(1,1,3,3-tetramethylbutyl)amino-1,3,5-triazin-2-4-diyl} {2,2,6,6-tetramethyl-4-piperidyl}imino]hexamethylene f (2,2,6,6-tetramethyl-4-piperidyl)imino}) (Tinuvin (registered trade name) 944, manufactured by BASF SE); a mixture (Tinuvin (registered trade name) 765, manufactured by BASF SE) of bis(1,2,2,6,6-pentamethyl-4-piperidyl)sebacate and methyl 1,2,2,6,6-pentamethyl-4-piperidyl sebacate; bis(2,2,6,6-tetramethyl-4-piperidyl)sebacate (Tinuvin (registered trade name) 770, manufactured by BASF SE); decanedioic acid bis(2,2,6,6-tetramethyl-1-(octyloxy)-4-piperidinyl) ester; a reaction product (Tinuvin (registered trade name) 123, manufactured by BASF SE) between 1,1-dimethylethyl hydroperoxide and octane; bis(1,2,2,6,6-pentamethyl-4-piperidyl)[[3,5-bis(1,1 -dimethyl ethyl)-4-hydroxyphenyl]methyl]butylmalonate (Tinuvin (registered trade name) 144, manufactured by BASF SE); a reaction product (Tinuvin (registered trade name) 152, manufactured by BASF SE) between a reaction product between cyclohexane and N-butyl 2,2,6,6-tetramethyl-4-piperidineamin-2,4,6-trichloro 1,3,5-triazine peroxide and 2-aminoethanol; a mixture (Tinuvin (registered trade name) 292, manufactured by BASF SE) of bis(1,2,2,6,6-pentamethyl-4-piperidyl)sebacate and methyl 1,2,2,6,6-pentamethyl-4-piperidyl sebacate; and a mixed ester compound (ADK STAB LA63P, manufactured by ADEKA Corporation) of 1,2,3,4-butanetetracarboxylic acid, 1,2,2,6,6-pentamethyl-4-piperidinol, and 3,9-bis(2-hydroxy-1,1-dimethylethyl)-2,4,8,10-tetraoxaspiro[5.5]undecane.Among these amine-based light stabilizers, hindered amine-based stabilizers are particularly preferred because of their excellent performance.

Examples of the phenol-based light stabilizer include 2,6-di-tertiary-butyl-4-methylphenol, 4-hydroxymethyl-2,6-di-tertiary-butylphenol, 2,6-di-tertiary butyl-4-ethylphenol, butylated hydroxyanisole, n-octadecyl-3-(4-hydroxy-3,5-di-tert-butylphenyl)propionate, distearyl-(4-hydroxy-3-methyl-5-tertiary-butyl)benzylmalonate, tocopherol, 2,2'-methylenebis(4-methyl-6-tertiary-butylphenol), 2,2'-methylenebis(4-ethyl-6-tertiary-butylphenol), 4,4'-methylenebis(2,6-di-tertiary butylphenol), 4,4'-butylidenebis(6-tertiary butyl-m-cresol), 4,4'-thiobis(6-tertiary butyl-m-cresol), styrenated phenol, N,N-hexamethylenebis(3,5-di-tertiary-butyl-4-hydroxyhydrocinnamide, bis(3,5-di-tertiary butyl-4-hydroxybenzylphosphonic acid ethyl ester) calcium, 1,1,3-tris(2-methyl-4-hydroxy-5-tert-butylphenyl)butane, 1,3,5-trimethyl-2,4,6-tris(3,5-di-tert-butyl-4-hydroxybenzyl)benzene, tetrakis[3-(3,5-di-tert-butyl-4-hydroxyphenyl)propionyloxymethyl]methane, 1,6-hexanediol-bis[3-(3,5-di-tert-butyl-4-hydroxyphenyl)propionate], 2,2'-methylenebis(4-methyl-6-cyclohexylphenol), 2,2'-methylenebis[6-(1-methylcyclohexyl)-p-cresol], 1,3,5-tris(4-tert-butyl-3-hydroxy-2,6-dimethylbenzyl)isocyanuric acid, 1,3,S-tris(3,S-di-tert-butyl-4-hydroxybenzyl)isocyanuric acid, triethylene glycol-bis[3-(3-tert-butyl-4-hydroxy-5-methylphenyl)propionate], 2,2'-oxamidebis[ethyl 3-(3,5-di-tert-butyl-4-hydroxyphenyl)propionate], 6-(4-hydroxy-3,5-di-tert-butylanilino)-2,4-dioctylthio-1,3,5-triazine, bis[2-tert-butyl-4-methyl-6-(2-hydroxy-3-tert-butyl-5-methylbenzyl)phenyl]terephthalate, 3,9-bis{2-[3-(3-tert-butyl-4-hydroxy-5-methylphenyl)propionyloxy]-1,1-dimethylethyl}-2,4,8,10-tetraoxaspiro[5.5]undecane, and 3,9-bis{2-[3-(3,5-di-tertiary butyl-4-hydroxyphenyl)propionyloxy]-1,1-dimethylethyl}-2,4,8,10-tetraoxaspiro[5.5]undecane.

Examples of the phosphorus-based light stabilizer include trisnonylphenyl phosphite, tris(2,4-di-tertiary butylphenyl)phosphite, tris[2-tertiary butyl-4-(3-tertiary butyl-4-hydroxy-5-methylphenylthio)-5-methylphenyl]phosphite, tridecyl phosphite, octyldiphenyl phosphite, di(decyl)monophenyl phosphite, di(tridecyl)pentaerythritol diphosphite, distearyl pentaerythritol diphosphite, di(nonylphenyl)pentaerythritol diphosphite, bis(2,4-di-tert-butylphenyl)pentaerythritol diphosphite, bis(2,6-di-tertiary butyl-4-methylphenyl)pentaerythritol diphosphite, bis(2,4,6-tritertiary-butylphenyl)pentaerythritol diphosphite, tetra(tridecyl)isopropylidene diphenol diphosphite, tetra(tridecyl)-4,4'-n-butylidenebis(2-tertiary-butyl-5-methylphenol)diphosphite, hexa(tridecyl)-1,1,3-tris(2-methyl-4-hydroxy-5-tertiary butylphenyl)butane triphosphite, tetrakis(2,4-di-tertiarybutylphenyl)biphenylene diphosphonite, 9,10-dihydro-9-oxa-10-phosphaphenanthrene-10-oxide, and tris(2-[(2,4,8,10-tetrakis-tertiary-butyldibenzo[d,f][1,3,2]dioxaphosphepin-6-yl)oxy]ethyl)amine.

Examples of the thioether-based light stabilizer include dialkylthiodipropionate compounds such as dilauryl thiodipropionate, dimyristyl thiodipropionate, and distearyl thiodipropionate; and β-alkylmercaptopropionic acid ester compounds of polyols such as tetrakis[methylene(3-dodecylthio)propionate]methane;

### <Other additives>

Examples of the other additives include a leveling agent, a silane coupling agent, an antifoaming agent, a thickener, an antistatic agent, an infrared absorbing agent, a foaming agent, an inorganic fine particle, an organic fine particle, a dye, a pigment, an antioxidant, anti-yellowing agent, a bluing agent, an anti-fogging agent, an anti-settling agent, and an adhesiveness-imparting agent.

The Martens hardness of the primer layer at 23°C is preferably 50 to 300 N/mm², more preferably 100 to 250 N/mm², and still more preferably 150 to 200 N/mm². In a case where the Martens hardness is equal to or larger than the above-described lower limit value, the adhesiveness to the upper layer tends to be improved, and in a case where it is equal to or smaller than the above-described upper limit value, the adhesiveness to the lower layer tends to be improved.

The method of measuring the Martens hardness is as described in Examples below.

The Martens hardness of the primer layer can be adjusted by the kind of resin component that constitutes the primer layer, the crosslinking density.

The contact angle of 1 µL of distilled water at 23°C on the surface of the primer layer (hereinafter, also denoted as the "contact angle of water") is preferably 100° or less, more preferably 95° or less, and still more preferably 90° or less. In a case where the contact angle of water is equal to or smaller than the above-described upper limit value, wettability is improved at the time of forming the cured layer on the primer layer, and the adhesiveness between the primer layer and the cured layer is also improved. Although the lower limit of the contact angle of water is not particularly limited, it is preferably 1° or more.

The method of measuring the contact angle of water is as described in Examples below.

The contact angle of water can be adjusted by adjusting the adding amount of the leveling agent, the amount of the raw material having a hydrophilic group (a hydroxyl group, an amino group, a sulfonyl group, a carboxyl group, a salt thereof, or the like), or the like. Specifically, in a case where the adding amount of the leveling agent is reduced, the leveling agent is changed to a leveling agent having a low ability to reduce surface tension, or the amount of the raw material having a hydrophilic group is increased, the contact angle of water tends to decrease.

The thickness of the primer layer is preferably 0.01 to 30 µm, more preferably 0.5 to 20 µm, and still more preferably 1 to 20 µm. In a case where the thickness of the primer layer is equal to or larger than the above-described upper limit value, the adhesiveness between the base material and the cured layer is more excellent, and in a case where it is equal to or smaller than the above-described upper limit value, the appearance tends to be more excellent.

### <Manufacturing method for laminate>

The present laminate can be manufactured, for example, by forming a primer layer on a base material (a primer layer forming step) and applying, on the primer layer, a curable composition containing the copolymer (A) and the component (B) consisting of at least one silane compound (b) or a partially hydrolyzed condensate thereof and curing the applied curable composition to form a cured layer (a cured layer forming step).

### <Primer layer forming step>

Examples of the method of forming a primer layer include a method of applying a primer containing a resin component and a diluent onto a base material and removing the diluent by drying.

The primer preferably contains at least one selected from the group consisting of an ultraviolet absorbing agent and a light stabilizer.

As necessary, the primer may contain additives other than the ultraviolet absorbing agent and the light stabilizer within a range in which the effect of the present invention is not impaired.

The resin component, the ultraviolet absorbing agent, the light stabilizer, and the other additives are as described above.

Examples of the diluent include water and an organic solvent.

Examples of the organic solvent include an alcohol-based solvent, a glycol-based solvent, a hydrocarbon-based solvent, an ester-based solvent, a ketone-based solvent, and an ether-based solvent. Examples of the alcohol-based solvent include methanol, ethanol, isopropyl alcohol, n-butanol, isobutanol, octanol, n-propyl alcohol, and acetylacetone alcohol. Examples of the glycol-based solvent include ethylene glycol, ethylene glycol monomethyl ether, ethylene glycol monoethyl ether, ethylene glycol mono-n-propyl ether, ethylene glycol mono-n-butyl ether, diethylene glycol monomethyl ether, diethylene glycol monoethyl ether, propylene glycol monomethyl ether, propylene glycol monoethyl ether, propylene glycol monobutyl ether, ethylene glycol monoethyl ether acetate, ethylene glycol monomethyl ether acetate, propylene glycol monoethyl ether acetate, and propylene glycol monomethyl ether acetate. Examples of the hydrocarbon-based solvent include benzene, kerosene, toluene, and xylene. Examples of the ester-based solvent include methyl acetate, ethyl acetate, butyl acetate, methyl acetoacetate, and ethyl acetoacetate. Examples of the ketone-based solvent include acetone, methyl ethyl ketone, methyl isobutyl ketone, and acetylacetone. Examples of the ether-based solvent include ethyl ether, butyl ether, methyl cellosolve, ethyl cellosolve, dioxane, furan, and tetrahydrofuran. One kind of organic solvent may be used singly, or a combination of two or more kinds thereof may be used.

In the primer, the amount of the resin component is preferably 30% by mass or more, more preferably 50% by mass or more, and still more preferably 70% by mass or more, and it may be 100% by mass, with respect to 100% by mass of the nonvolatile component of the primer.

The amount of the ultraviolet absorbing agent varies depending on the kind of ultraviolet absorbing agent; however, it is preferably 30% by mass or less, more preferably 0.01% to 20% by mass, still more preferably 0.1% to 15% by mass, and particularly preferably 0.3% to 15% by mass, with respect to 100% by mass of the nonvolatile component of the primer.

The amount of the light stabilizer varies depending on the kind of light stabilizer, however, it is preferably 30% by mass or less, more preferably 0.01% to 20% by mass, still more preferably 0.1% to 15% by mass, and particularly preferably 0.3% to 15% by mass, with respect to 100% by mass of the nonvolatile component of the primer.

The concentration of the nonvolatile component with respect to the entire primer is not particularly limited; however, it is preferably in a range of 80% by mass or less, more preferably 0.1% to 70% by mass, still more preferably 10% to 70%, and particularly preferably 20% to 60%. In a case of being used within the above range, a curable composition having excellent coatability can be obtained.

The primer can be prepared by mixing a resin component, a diluent, and, as necessary, an ultraviolet absorbing agent, a light stabilizer, and other additives.

As a coating method, it is possible to use a known method such as brush coating, a gravure coater method, a die coater method, a bar coater method, a spray coating method, a flow coating method, a dip coating method, a spin coating method, or a curtain coating method.

Examples of the curing method include the same methods as described above, and a method of irradiating the curable composition with an active energy ray is preferable.

In a case where the curable composition contains a diluent, after applying the curable composition on the base material, a heating treatment for drying may be carried out in order to remove the diluent before irradiating the curable composition with an active energy ray. The heating treatment for drying can be carried out by irradiation with a near-infrared lamp, circulation of warm air, or the like.

In the cured product layer obtained by being subjected to a heating treatment and then irradiated with an active energy ray, a diluent does not easily remain in the inside of the cured product layer, and thus the adhesiveness over a long period of time outdoors tends to be improved as compared with a case where the heating treatment has not been carried out. Regarding the drying conditions, the temperature is preferably 40°C to 90°C and more preferably 50°C to 70°C, and the drying time is preferably 60 to 180 seconds and more preferably 90 to 150 seconds, from the viewpoint of the appearance or adhesiveness of the cured product layer.

The heating treatment may be carried out after irradiating the curable composition with an active energy ray. This heating treatment can be carried out by irradiation using a near-infrared lamp, circulation of warm air, or the like. The cured product layer obtained by a heating treatment after curing by irradiation with an active energy ray has a high condensation reaction rate as compared with a cured product layer which has not been subjected to the heating treatment, and thus hardness or durability tends to be excellent.

The smaller, the slipping angle of 20 µL of water at 23°C on the surface of the cured product layer (the cured product layer in the early stage) formed as described above is, the more preferable it is, where the slipping angle thereof is preferably 60° or less, more preferably 50° or less, still more preferably 40° or less, particularly preferably 30° or less, and most preferably 20° or less. The lower limit of the slipping angle of water is not particularly limited, and it is 0° or more. In a case where the slipping angle of water is equal to or smaller than the above-described upper limit value, raindrops or snow that has adhered to the surface easily slips off.

In addition, the slipping angle of water after the durability test is particularly important in the development in a wide range of use applications, where the smaller the slipping angle is, the more preferable it is, and the smaller the change from the early stage is, the more preferable it is.

After forming a cured product layer as described above and carrying out a durability test for 96 hours under the conditions of 50°C and 99% RH or more, the slipping angle of 20 µL of water at 23°C on the surface of the cured product layer (the cured product layer after the durability test) is preferably 60° or less, more preferably 50° or less, still more preferably 40° or less, particularly preferably 30° or less, and most preferably 20° or less. The lower limit of the slipping angle of water is not particularly limited, and it is, for example, 1° or more.

The amount of change in the slipping angle of water of the cured product layer after the durability test from the early stage slipping angle of water of the cured product layer (slipping angle of water of cured product layer after durability test - early stage slipping angle of water of cured product layer) is 40° or less is preferable, 30° or less is more preferable, 20° or less is still more preferable, and 15° or less is most preferable. Although there is no particular lower limit, it is preferably 0°. With a setting in the above range, it is possible to exhibit the same level of performance as that in the early stage over a long period of time, and it becomes easy to design products.

In the present laminate described above, the cured product layer consists of a cured product of a resin composition containing the copolymer (A) and the component (B), and thus appearance, water slippability, and durability are excellent.

The present laminate can be used in use applications for sensing members, such as members through which electromagnetic waves of sensing members (millimeter wave radar, LiDAR, and the like) pass; and can be used in automotive lamp lenses (vehicle lamps), resin grazing, road signs, traffic signals, camera lenses, 5G-related members, antennas, solar panels, window glass, resin glass, automotive glass. Among the above-described use applications, the present laminate is suitable for the use application for a sensing member.

### [Examples]

Hereinafter, the present invention will be described in more detail with reference to Examples and Comparative Examples; however, the present invention is not limited to these. "Part" in the description means "mass part". Measurement and evaluation were carried out by the following methods.

### [Measurement and evaluation method]

### <Measurement of Mw>

The Mw of the copolymer and the partially hydrolyzed condensate of the silane compound produced in present Examples were measured by gel permeation chromatography (GPC) under the following conditions.
Instrument: "e2695" manufactured by Waters Corporation,
column: "TSKgel Super H3000 + H4000 + H6000" manufactured by Tosoh Corporation,
detector: differential refractive index detector (RI detector/built-in type),
solvent: tetrahydrofuran,
temperature: 40°C,
flow rate: 0.5 mL/min,
injection volume: 10 µL,
concentration: 0.2% by mass,
calibration sample: monodisperse polystyrene, and
calibration method: polystyrene conversion.

### <Appearance>

The appearance of the evaluation samples was visually evaluated. Determination criteria are as follows.

### (Determination criteria)

A: A transparent and smooth coating film has been formed without abnormalities such as whitening, cracking, and swelling.
B: Abnormalities such as whitening, cracking, and swelling have been slightly observed.
C: Abnormalities such as whitening, cracking, and swelling have been observed.

### <Coating film strength>

An evaluator strongly moved reciprocatingly his nail of the thumb of the dominant hand three times to scratch the cured film surface of the evaluation sample in an atmosphere of 23°C and 55% RH. The degree of scratching of the cured film was visually evaluated according to the following criteria.
A: No change in appearance.
B: Scratching has occurred.
C: The coating film has been peeled off.

### <Water slippability>

For the cured film surface of the evaluation sample, the slipping angle of 20 µL of water at 23°C was measured by tilting the base material according to intermittent tilting by the slipping method to evaluate water slippability. Specifically, using a contact angle meter (DM-500, manufactured by Kyowa Interface Science Co., Ltd.), 20 µL of distilled water was dropwise added on the cured film surface of the evaluation sample disposed horizontally on the sample fixing table, in an environment of 23°C and 50% RH, the evaluation sample was subsequently intermittently tilted by 1°, and the tilt angle at the time when the liquid droplet began to slip was taken as the slipping angle. The determination criteria for water slippability are as follows.

### (Determination criteria)

A: The slipping angle is more than 1° and 40° or less.
B: The slipping angle is more than 41° and 60° or less.
C: The water droplet does not slip off even in a case where the tilt angle is more than 60° or is 90°.

### <Martens hardness>

Using FISCHERSCOPE (registered trade name) HM2000 manufactured by Fischer Instruments K.K., the Martens hardness of the primer layer at 23°C was measured under the following test conditions.

### (Test conditions)

Indenter: Vickers indenter
Load increase parameter: dSQRT(F)/dt = constant
Maximum load: 1 mN
Load application time = 20 seconds
Creeping = 0 seconds
Load reduction parameter: dSQRT(F)/dt = constant

A primer layer to be tested for measurement of Martens hardness was produced under the following conditions.

### (Preparation method for test piece)

Base material: polycarbonate plate (PC, thickness: 3 mm),
coating: spray coating,
dry film thickness: 13 µm, and
curing conditions: 2,000 mJ/cm² with a high-pressure mercury lamp when the primer is active energy ray-curable, or 120°C × 30 minutes when the primer is a thermosetting primer.

It is noted that the Martens hardness value varies depending on the kind of base material and film thickness.

### <Contact angle>

The contact angle of water was measured according to the liquid droplet method. Specifically, using a contact angle meter (DM-500, manufactured by Kyowa Interface Science Co., Ltd.), 1 µL of distilled water was dropwise added on the surface of the cured layer of the evaluation sample (or on the surface of the primer layer before forming a cured layer) disposed horizontally, in an environment of 23°C and 50% RH, and the contact angle (static contact angle) was measured 5 seconds after the dropwise addition.

### <Attachability>

The attachability of the cured layer (the adhesiveness between the primer layer and the cured layer) was evaluated by cellophane tape peeling. Specifically, in an environment of 23°C and 50% RH, a cellophane tape was attached while applying pressure with a finger to the surface of the cured layer of the evaluation sample and quickly peeled off in a direction diagonally 45° to the front, and then the area of the peeled cured layer (the peeled area) was visually checked to evaluate attachability. The criteria for attachability evaluation are as follows.
A: No peeling is observed.
B: Although peeling is observed, the peeled area is less than 50% of the pressure-attached area of the cellophane tape.
C: The peeled area is 50% or more of the pressure-attached area of the cellophane tape.

### <Durability>

Using a humidity tester (device name: Humidity Tester, model: CT-3H, manufactured by Suga Test Instruments Co., Ltd.), the cured film of the evaluation sample was subj ected to a durability test for 96 hours under the conditions of a tank temperature of 50°C and a tank humidity of 99% RH or more.

After the durability test, the above-described appearance and the water slippability were evaluated.

### <Weather fastness>

Using a weather fastness tester (device name: Super Xenon Weather Meter, model: SX75, manufactured by Suga Test Instruments Co., Ltd.), a weather fastness test was carried out for 500 hours under the conditions of a rainfall for 12 minutes out of 60 minutes, an irradiation intensity of 180 W/m² (300 to 400 nm), a black panel temperature of 63°C, a tank temperature of 50°C, and a tank humidity of 50%. It is noted that the evaluation sample was disposed so that the laminated cured film surface was perpendicular to the light source side of the weather fastness tester.

### [Abbreviation]

Abbreviations to be used below have the following meanings.

KBM-5103: "KBM-5103" manufactured by Shin-Etsu Chemical Co., Ltd. (3-acryloxypropyltrimethoxysilane, nonvolatile component: 100%).

FM-0721: "Silaplane FM-0721" manufactured by JNC Corporation (polydimethylsiloxane having a methacryloyl group at one terminal, Mw: 4,200, nonvolatile component: 100%).

FM-0711: "Silaplane FM-0711" manufactured by JNC Corporation (polydimethylsiloxane having a methacryloyl group at one terminal, Mw: 900, nonvolatile component: 100%).

The structures of FM-0721 and FM-0711 are shown below.

CH₂=C(CH₃)-COO-C₃H₆-(Si(CH₃)₂O)ₙ-(CH₂)₃CH₃

Copolymer (A-1): a copolymer obtained in Synthesis Example 1 described later (FM-0721:KBM5103 = 30:70 (mass ratio), Mw: 16,200).

Copolymer (A-2): a copolymer obtained in Synthesis Example 2 described later (FM-0721:KBM5103 = 50:50 (mass ratio), Mw: 19,800).

Copolymer (A-3): a copolymer obtained in Synthesis Example 3 described later (FM-0711:KBM5103 = 30:70 (mass ratio), Mw: 15,500).

Copolymer (A-4): a copolymer obtained in Synthesis Example 4 described later (FM-0711:KBM5103 = 30:40 (mass ratio), Mw: 43,000).

Copolymer (E-1): a copolymer obtained in Synthesis Example 5 described later (FM-0721: KBM-5103 = 0:100 (mass ratio), Mw: 23,400).

Copolymer (E-2): a copolymer obtained in Synthesis Example 6 described later (FM-0721: KBM-5103 = 20:30 (mass ratio), Mw: 53,300).

Component (B-1): an alkoxysilane hydrolyzed condensate (Mw: 1,000) obtained in Synthesis Example 7 described later.

Component (B-2): an alkoxysilane hydrolyzed condensate (Mw: 1,600) obtained in Synthesis Example 8 described later.

MS51: "MS51" manufactured by Mitsubishi Chemical Corporation (tetramethoxysilane partially hydrolyzed condensate, Mw: 800 to 1,100, nonvolatile component: 100%).

Photoacid generator: "CPI-200K" (p-phenylthiophenyldiphenylsulfonium hexafluorophosphate, nonvolatile component: 50%) manufactured by San-Apro Ltd.

IPA: 2-propanol.

PGM: propylene glycol monomethyl ether.

PEROCTAO: "PEROCTAO" manufactured by NOF Corporation (1,1,3,3-tetramethylbutyl 2-ethylhexaneperoxyate).

### [Preparation method for polymer]

A preparation method for the copolymer and the partially hydrolyzed condensate of the silane compound used in each of Examples and Comparative Examples will be described. It is noted that copolymers (A-1) to (A-4) correspond to the copolymer (A), and copolymers (E-1) and (E-2) are comparative products that do not correspond to the copolymer (A).

### <Synthesis Example 1: Preparation of copolymer (A-1)>

73.0 g of KBM-5103, 41.7 g of FM-0721, 264.9 g of PGM, and 0.52 g of PEROCTA O were put into a 1,000 mL five-necked separable flask equipped with a stirrer, a dropping funnel, a cooling condenser, and a thermometer. In addition, 73.0 g ofKBM-5103, 20.9 g of FM-0721, 225.3 g of PGM, and 0.52 g of PEROCTA O were put into the dropping funnel. Next, the flask was set in an oil bath, stirring was started in a nitrogen atmosphere, and the internal temperature was raised to 85°C. 30 minutes after the internal temperature reached 85°C, the monomer mixture was dropwise added from the dropping funnel over 2 hours and held for 1 hour, 0.21 g of PEROCTA O was subsequently put thereinto, and 1 hour later, 0.21 g of PEROCTA O was further added thereto, and the reaction was carried out for 5 hours, followed by cooling. The obtained product was a polymer having a nonvolatile component of 30% and a weight average molecular weight (Mw) of 16,200.

### <Synthesis Example 2: Preparation of copolymer (A-2)>

50.0 g of KBM-5103, 60.0 g of FM-0721, 254.0 g of PGM, and 0.50 g of PEROCTA O were put into a 1,000 mL five-necked separable flask equipped with a stirrer, a dropping funnel, a cooling condenser, and a thermometer. In addition, 50.0 g ofKBM-5103, 40.0 g of FM-0721, 216.0 g of PGM, and 0.50 g of PEROCTA O were put into the dropping funnel. Next, the flask was set in an oil bath, stirring was started in a nitrogen atmosphere, and the internal temperature was raised to 85°C. 30 minutes after the internal temperature reached 85°C, the monomer mixture was dropwise added from the dropping funnel over 2 hours and held for 1 hour, 0.20 g of PEROCTA O was subsequently put thereinto, and 1 hour later, 0.20 g of PEROCTA O was further added thereto, and the reaction was carried out for 5 hours, followed by cooling. The obtained product was a polymer having a nonvolatile component of 30% and a weight average molecular weight (Mw) of 19,800.

### <Synthesis Example 3: Preparation of copolymer (A-3)>

73.0 g of KBM-5103, 41.7 g of FM-0711, 264.9 g of PGM, and 0.52 g of PEROCTA O were put into a 1,000 mL five-necked separable flask equipped with a stirrer, a dropping funnel, a cooling condenser, and a thermometer. In addition, 73.0 g ofKBM-5103, 20.9 g of FM-0711, 225.3 g of PGM, and 0.52 g of PEROCTA O were put into the dropping funnel. Next, the flask was set in an oil bath, stirring was started in a nitrogen atmosphere, and the internal temperature was raised to 85°C. 30 minutes after the internal temperature reached 85°C, the monomer mixture was dropwise added from the dropping funnel over 2 hours and held for 1 hour, 0.21 g of PEROCTA O was subsequently put thereinto, and 1 hour later, 0.21 g of PEROCTA O was further added thereto, and the reaction was carried out for 5 hours, followed by cooling. The obtained product was a polymer having a nonvolatile component of 30% and a weight average molecular weight (Mw) of 15,500.

### <Synthesis Example 4: Preparation of copolymer (A-4)>

41.7 g of KBM-5103, 41.7 g of FM-0721, 20.9 g of n-butyl methacrylate, 10.4 g of 2-hydroxyethyl methacrylate, 267.7 g of PGM, and 0.52 g of PEROCTA O were put into a 1,000 mL five-necked separable flask equipped with a stirrer, a dropping funnel, a cooling condenser, and a thermometer. In addition, 41.7 g of KBM-5103, 20.9 g of FM-0721, 20.9 g of n-butyl methacrylate, 10.4 g of 2-hydroxyethyl methacrylate, 222.2 g of PGM, and 0.52 g of PEROCTA O were put into the dropping funnel. Next, the flask was set in an oil bath, stirring was started in a nitrogen atmosphere, and the internal temperature was raised to 85°C. 30 minutes after the internal temperature reached 85°C, the monomer mixture was dropwise added from the dropping funnel over 2 hours and held for 1 hour, 0.21 g of PEROCTA O was subsequently put thereinto, and 1 hour later, 0.21 g of PEROCTA O was further added thereto, and the reaction was carried out for 5 hours, followed by cooling. The obtained product was a polymer having a nonvolatile component of 30% and a weight average molecular weight (Mw) of 43,000.

### <Synthesis Example 5: Preparation of copolymer (E-1)>

110.0 g of KBM-5103, 254.0 g of PGM, and 0.50 g of PEROCTA O were put into a 1,000 mL five-necked separable flask equipped with a stirrer, a dropping funnel, a cooling condenser, and a thermometer. In addition, 90.0 g of KBM-5103, 216.0 g of PGM, and 0.50 g of PEROCTA O were put into the dropping funnel. Next, the flask was set in an oil bath, stirring was started in a nitrogen atmosphere, and the internal temperature was raised to 85°C. 30 minutes after the internal temperature reached 85°C, the monomer mixture was dropwise added from the dropping funnel over 2 hours and held for 1 hour, 0.20 g of PEROCTA O was subsequently put thereinto, and 1 hour later, 0.20 g of PEROCTA O was further added thereto, and the reaction was carried out for 5 hours, followed by cooling. The obtained product was a polymer having a nonvolatile fraction of 30% and a weight average molecular weight (Mw) of 23,400.

### <Synthesis Example 6: Preparation of copolymer (E-2)>

31.3 g of KBM-5103, 12.5 g of FM-0721, 41.7 g of n-butyl methacrylate, 10.4 g of 2-hydroxyethyl methacrylate, 225.1 g of PGM, and 0.52 g of PEROCTA O were put into a 1,000 mL five-necked separable flask equipped with a stirrer, a dropping funnel, a cooling condenser, and a thermometer. In addition, 31.3 g of KBM-5103, 29.2 g of FM-0721, 41.7 g of n-butyl methacrylate, 10.4 g of 2-hydroxyethyl methacrylate, 264.8 g of PGM, and 0.52 g of PEROCTA O were put into the dropping funnel. Next, the flask was set in an oil bath, stirring was started in a nitrogen atmosphere, and the internal temperature was raised to 85°C. 30 minutes after the internal temperature reached 85°C, the monomer mixture was dropwise added from the dropping funnel over 2 hours and held for 1 hour, 0.21 g of PEROCTA O was subsequently put thereinto, and 1 hour later, 0.21 g of PEROCTA O was further added thereto, and the reaction was carried out for 5 hours, followed by cooling. The obtained product was a polymer having a nonvolatile component of 30% and a weight average molecular weight (Mw) of 53,300.

### <Synthesis Example 7: Preparation of Component (B-1)>

624 g of methanol, 65 g of water, and 3 g of acetylacetonate aluminum(III) were blended with 308 g of MS51 and stirred at room temperature for 3 days to obtain a colorless, transparent, and homogeneous liquid solution of a component (B-1) (the concentration of the component (B-1) in terms of SiO₂: 16 wt%)

### <Synthesis Example 8: Preparation of Component (B-2)>

624 g of methanol, 65 g of water, and 3 g of acetylacetonate aluminum(III) were blended with 308 g of MS51 and stirred at room temperature for 7 days to obtain a colorless, transparent, and homogeneous liquid solution of a component (B-2) (the concentration of the component (B-2) in terms of SiO₂: 16 wt%)

### [Example 1]

### <Preparation of resin composition>

3.5 parts of the copolymer (A-1), 4.2 parts of the component (B-1), 10 parts of IPA, 10 parts of PGM, and a photoacid generator CPI-200K (manufactured by San-Apro Ltd.) were mixed with 0.04 parts to prepare a resin composition.

### <Preparation of evaluation sample>

The obtained resin composition was applied by spray coating onto the surface of a polycarbonate resin plate (a PC plate) (manufactured by Mitsubishi Engineering-Plastics Corporation, product name: "IUPILON ML-300") having a thickness of 3 mm so that the thickness after drying was 0.7 µm, followed by drying (the solvent was volatilized) with heating for 120 seconds in a hot air dryer preheated to 60°C. Then, using a high-pressure mercury lamp (manufactured by EYE GRAPHICS CO., LTD., USX5-0902), the coating film after the drying was irradiated in an air atmosphere with ultraviolet rays of 1,000 mJ/cm² (the cumulative irradiation amount at a wavelength of 340 to 380 nm was measured using an ultraviolet photometer UV-351 (manufactured by ORC MANUFACTURING CO., LTD.)) to cure the coating film, thereby obtaining an evaluation sample in which a cured film of the resin composition was laminated on the PC plate.

### <Evaluation>

The curability of the obtained resin composition was evaluated. In addition, the obtained evaluation samples were evaluated for the appearance in the early stage (before the durability test) and water slippability, and for the appearance and water slippability after the durability test. Table 1 shows the results.

### [Examples 2 to 7, Comparative Examples 1 to 5, and Reference Example 1]

Each composition was prepared, and an evaluation sample was prepared in the same manner as in Example 1, except that the kinds and amounts (parts) of the components blended in the composition were as shown in Table 1 and Table 2. Table 1 and Table 2 show the evaluation results of the compositions and evaluation samples. It is noted that in Comparative Example 5, the compatibility of the composition in the liquid state was low, the composition could not be molded as a cured film, and thus the preparation and evaluation of the evaluation sample were not carried out.

### [Examples 8 to 10]

Each composition was prepared in the same manner as in Example 1, except that the kinds and amounts (parts) of the components blended in the composition were as shown in Table 1. Using this composition, an evaluation sample was prepared in the same manner as in Example 1, except that the base material was changed from the PC plate to a glass plate having a thickness of 5 mm. Table 1 shows the evaluation results of the compositions and evaluation samples.

### [Reference Example 2]

Each composition was prepared, and an evaluation sample was prepared in the same manner as in Reference Example 1, except that in the preparation of the evaluation sample, after the composition was subjected to spray coating, the resultant coating film was heated to be cured for 10 seconds in a hot air dryer preheated to 150°Cm, without carrying out ultraviolet irradiation. Table 2 shows the evaluation results of the compositions and evaluation samples.

### [Example 11]

### <Preparation of curable composition>

3.5 parts of a solution of the copolymer (A-1), 4.2 parts of a solution of the component (B-1), 10 parts of IPA, 10 parts of PGM, and a photoacid generator CPI-200K were mixed with 0.04 parts to prepare a curable composition.

### <Preparation of primer>

In a resin obtained by mixing 22 parts of a caprolactone-modified product of dipentaerythritol hexaacrylate (DPHA) ("DPCA-20" manufactured by Nippon Kayaku Co., Ltd.) and 16 parts of urethane acrylate, 0.9 parts of benzophenone as a photopolymerization initiator, 3 parts of Tinuvin 400 (manufactured by BASF SE) as an ultraviolet absorbing agent, and 0.15 parts of Tinuvin 123 (manufactured by BASF SE) as a light stabilizer were added, and then dilution was carried out with propylene glycol monomethyl ether so that the nonvolatile component was to be 32% by mass, whereby an active energy ray-curable primer (1) was prepared.

Here, the urethane acrylate was prepared as follows.

Into a flask equipped with a dropping funnel with a heat retaining function, a reflux condenser, a stirring blade, and a temperature sensor, 530 g (2 mol) of dicyclohexylmethane diisocyanate and 300 ppm of di-n-butyltin dilaurate were charged and heated to 40°C. Thereafter, 800 g (weight average molecular weight: 800) of 650 g (1 mol) of polycarbonate diol (product name: Kuraray Polyol C-770, manufactured by Kuraray Co., Ltd.) as a polyol compound was dropwise added thereto over 4 hours. After stirring at 40°C for 2 hours, the temperature was raised to 70°C over 1 hour. Thereafter, 232 g (2 mol) of 2-hydroxyethyl acrylate (HEA) was dropwise added thereto over 2 hours, followed by stirring for 2 hours to obtain urethane acrylate. The obtained product was a polymer having a nonvolatile component of 75% and a molecular weight (Mw) of 1,500.

### <Preparation of evaluation sample (laminate)>

The primer (1) was applied by spray coating onto a polycarbonate resin plate (a PC plate) (manufactured by Mitsubishi Engineering-Plastics Corporation, product name: "IUPILON ML-300") having a thickness of 3 mm, followed by drying (the solvent was volatilized) with heating for 90 seconds in a hot air dryer preheated to 70°C. Then, using the high-pressure mercury lamp, the coating film after the drying was cured by being irradiated in an air atmosphere with ultraviolet rays of 2,000 mJ/cm² (the cumulative irradiation amount at a wavelength of 340 to 380 nm was measured using an ultraviolet photometer UV-351 (manufactured by ORC MANUFACTURING CO., LTD.)) to form a primer layer having a thickness of 13 µm.

Next, the curable composition was applied onto the primer layer by spray coating so that the thickness after drying was 700 nm, followed by drying (the solvent was volatilized) with heating for 120 seconds in a hot air dryer preheated to 60°C. Then, using a high-pressure mercury lamp (manufactured by EYE GRAPHICS CO., LTD., USX5-0902), the coating film after the drying was irradiated in an air atmosphere with ultraviolet rays of 1,000 mJ/cm² (the cumulative irradiation amount at a wavelength of 340 to 380 nm was measured using an ultraviolet photometer UV-351 (manufactured by ORC MANUFACTURING CO., LTD.)) to cure the coating film. As a result, a laminate in which the primer layer and the cured layer were sequentially laminated on the PC plate was obtained.

### <Evaluation>

The obtained evaluation samples were evaluated for the appearance, attachability, contact angle, slipping angle, and appearance in the early stage (before the durability test), and the attachability, contact angle, and slipping angle after the durability test. Table 3 shows the results.

### [Examples 12, 13, and 16, and Comparative Examples 6 to 9]

Each composition was prepared, and an evaluation sample was prepared in the same manner as in Example 11, except that the kinds and amounts (parts) of the components blended in the composition were as shown in Table 3 and Table 4. Table 3 and Table 4 show the evaluation results of the compositions and evaluation samples.

### [Example 14]

100 parts of Basonol (registered trade name) HPE1170B (manufactured by BASF SE) as a polyol, 30 parts of Kuraray Polyol C-1090 (manufactured by Kuraray Co., Ltd.), 159 parts of DURANATE MHG-80B as an isocyanate (manufactured by Asahi Kasei Corporation), 70 parts of MEK-ST-40 (manufactured by Nissan Chemical Corporation) as inorganic fine particles, 30 parts of Tinuvin 405 (manufactured by BASF SE) as an ultraviolet absorbing agent, 0.5 parts of Tinuvin 152 (manufactured by BASF SE) as a light stabilizer, and 0.05 parts of dibutyltin dilaurate (DBTDL) as a curing acceleration catalyst were uniformly mixed, and the dilution was carried out using cyclohexanone and MIBK so that the concentration of the nonvolatile component was about 32%, thereby preparing a thermosetting primer (2).

An evaluation sample was prepared in the same manner as in Example 11, except that at the time of forming the primer layer, the primer (2) was applied by spray coating so that the thickness of the coating film after curing was 10 µm and that the cured film (the primer layer) was formed by a heating treatment at 120°C for 30 minutes. Table 3 shows the evaluation results.

### [Example 15]

16 parts of BR-83 (manufactured by Mitsubishi Chemical Corporation) as a non-curable acrylic resin, 2.2 parts of Tinuvin PS (manufactured by BASF SE) as an ultraviolet absorbing agent, and 1.8 parts of Tinuvin 123 (manufactured by BASF SE) as a light stabilizer were diluted using PGM and methyl ethyl ketone (MEK) so that the concentration of the nonvolatile component was 16 % and uniformly mixed to prepare a primer (3).

An evaluation sample was prepared in the same manner as in Example 11, except that at the time of forming the primer layer, the primer (3) was applied by spray coating so that the thickness of the coating film after drying was 10 µm and that the non-curable coating film (the primer layer) was formed by a heating treatment at 90°C for 30 minutes. Table 3 shows the evaluation results.

### [Example 17]

An evaluation sample was prepared in the same manner as in Example 11, except that a polycarbonate film (a PC film, FE-2000, manufactured by Mitsubishi Engineering-Plastics Corporation) having a thickness of 100 µm was used instead of the PC plate and that at the time of forming a primer layer and a cured layer, the primer (1) and the resin composition described in Example 12 were applied on the PC film using a bar coater so that the thicknesses after drying were each 10 µm and 700 nm. Table 3 shows the evaluation results.

### [Example 18]

An evaluation sample was prepared in the same manner as in Example 11, except that a polyethylene terephthalate film (a PET film, DIAFOIL T600E50 W07, manufactured by Mitsubishi Chemical Corporation) having a thickness of 50 µm was used instead of the PC plate and that at the time of forming a primer layer and a cured layer, the primer (1) and the resin composition described in Example 12 were applied on the PET film using a bar coater so that the thicknesses after drying were each 10 µm and 700 nm. Table 3 shows the evaluation results.

### [Example 19]

### <Preparation of curable composition>

3.5 parts of the copolymer (A-1), 4.2 parts of the component (B-1), 10 parts of IPA, and 10 parts of PGM were mixed to prepare a curable composition.

### <Preparation of evaluation sample>

A curable composition was applied by spray coating onto a glass plate having a thickness of 5 mm so that the thickness after curing was 0.7 µm and then cured by heating in a hot air dryer at 150°C for 1 hour to obtain an evaluation sample in which a cured film was laminated on the glass plate.

### <Evaluation>

The obtained evaluation samples were evaluated for the appearance in the early stage (before the weather fastness test) and water slippability, and for the appearance and water slippability after the weather fastness test. Table 5 shows the results.

### [Examples 20 and 21, and Comparative Examples 10 to 13]

Each curable composition was prepared, and an evaluation sample was prepared in the same manner as in Example 19, except that the kinds and amounts (parts) of the components blended in the curable composition were as shown in Table 5. Table 5 shows the evaluation results of the evaluation samples. However, since a cured film could not be formed in Comparative Example 13, evaluation was not carried out.

### [Example 22]

A curable composition was prepared in the same manner as in Example 1, except that the kinds and amounts (parts) of the components blended in the curable composition were as shown in Table 5.

The obtained curable composition was applied by spray coating onto a glass plate having a thickness of 5 mm so that the thickness after curing was 0.7 µm, followed by drying (the solvent was volatilized) with heating for 120 seconds in a hot air dryer preheated to 60°C. Then, using a highpressure mercury lamp (manufactured by EYE GRAPHICS CO., LTD., USX5-0902), the coating film after the drying was irradiated in an air atmosphere with ultraviolet rays of 1,000 mJ/cm² (the cumulative irradiation amount at a wavelength of 340 to 380 nm was measured using an ultraviolet photometer UV-3 51 (manufactured by ORC MANUFACTURING CO., LTD.)) to cure the coating film, thereby obtaining a laminate in which a cured film was laminated on the glass plate. Table 5 shows the evaluation results of the evaluation samples.

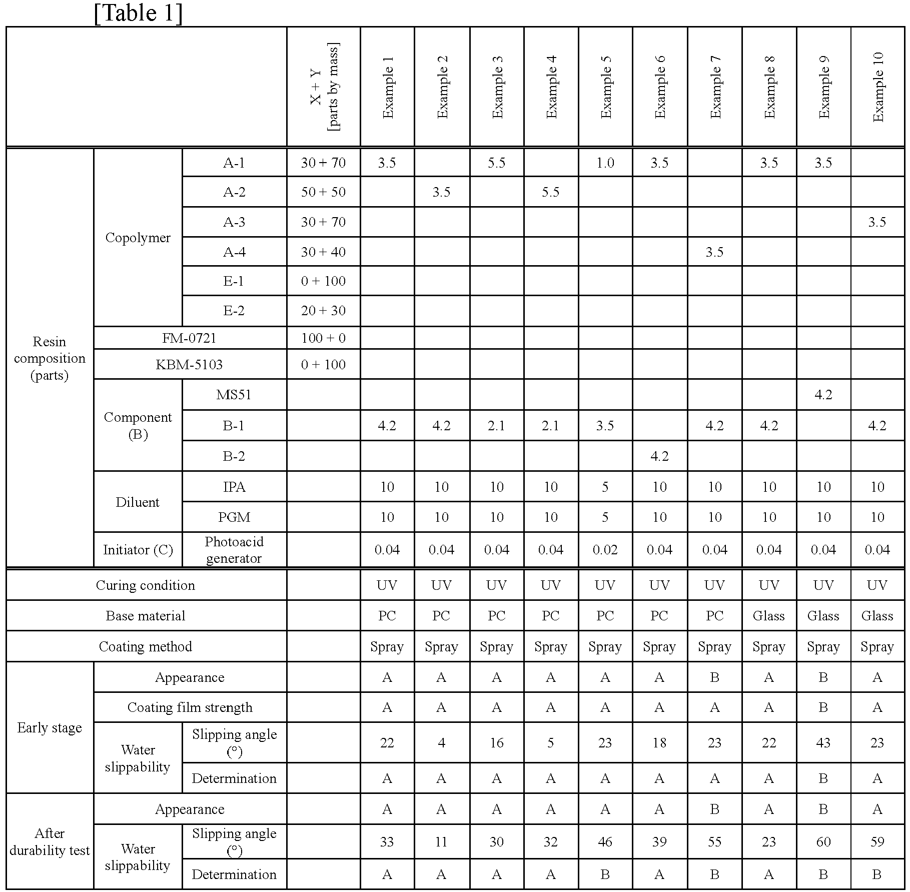

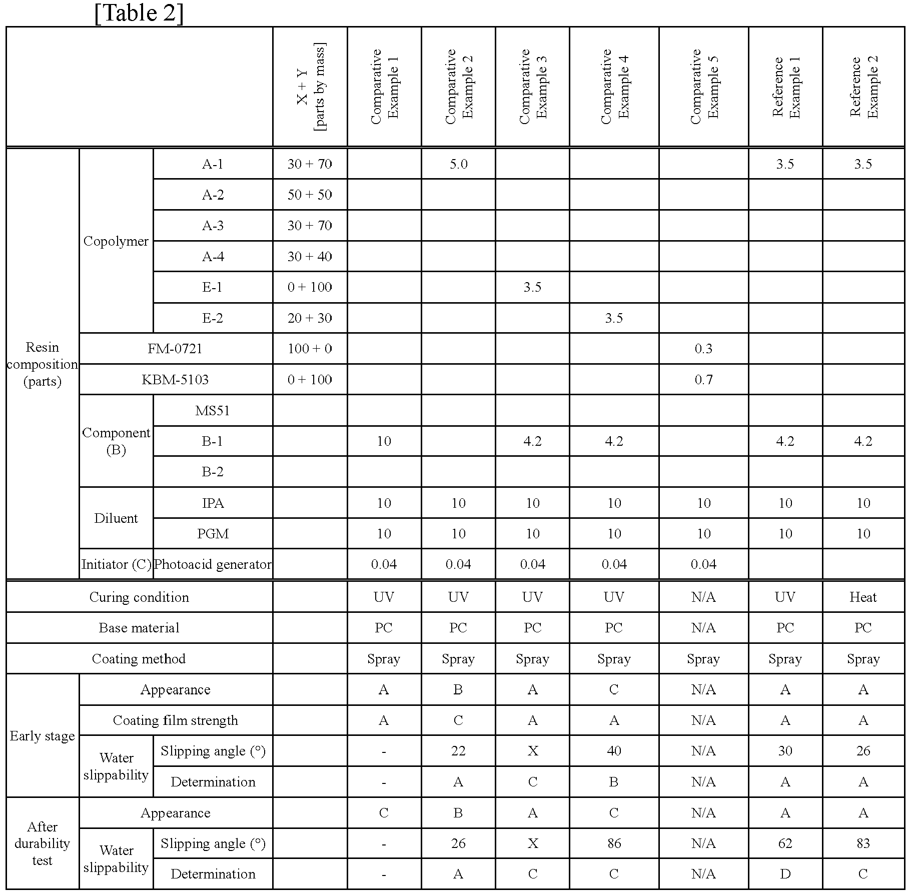

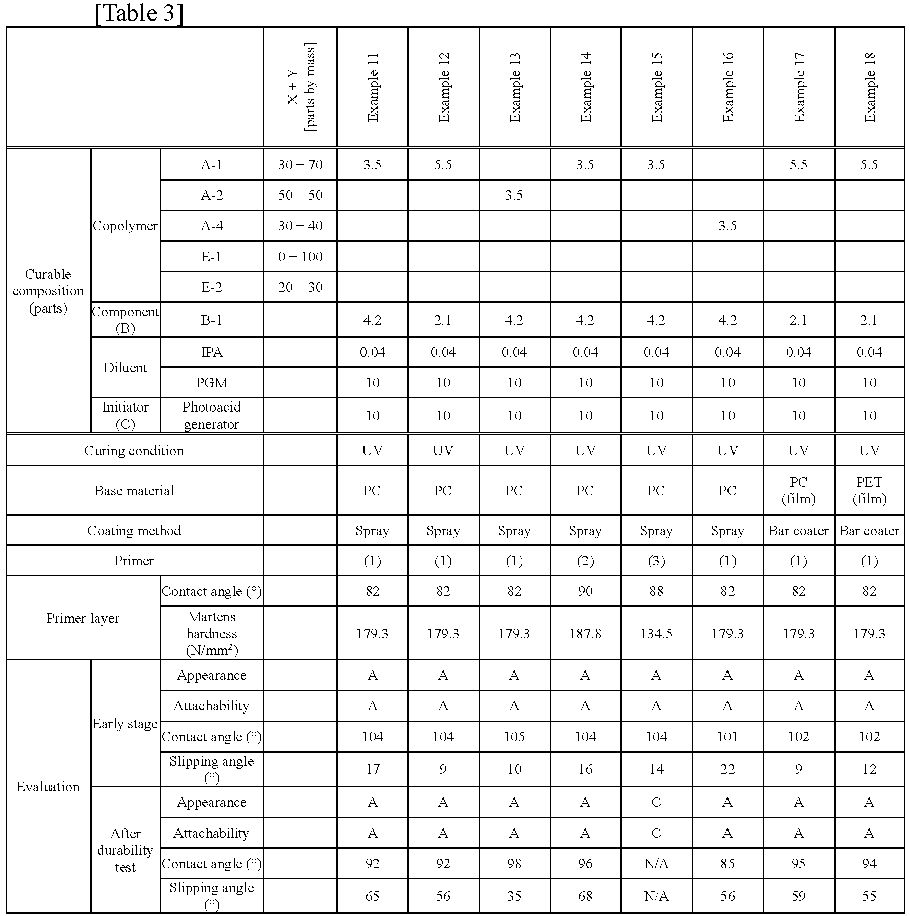

**[Table 4]**

| | | | X + Y [parts by mass] | Comparative Example 6 | Comparative Example 7 | Comparative Example 8 | Comparative Example 9 |
|---|---|---|---|---|---|---|---|
| Curable composition (parts) | Copolymer | A-1 | 30 + 70 | 10.0 | | | |
| | | A-2 | 50 + 50 | | | | |
| | | A-4 | 30 + 40 | | | | |
| | | E-1 | 0 + 100 | | | 3.5 | |
| | | E-2 | 20 + 30 | | | | 3.5 |
| | Component (B) | B-1 | | | 10 | 4.2 | 4.2 |
| | Diluent | IPA | | 0.04 | 0.04 | 0.04 | 0.04 |
| | | PGM | | 20 | 10 | 10 | 10 |
| | Initiator (C) | Photoacid generator | | 20 | 10 | 10 | 10 |
| Curing condition | | | | UV | UV | UV | UV |
| Base material | | | | PC | PC | PC | PC |
| Coating method | | | | Spray | Spray | Spray | Spray |
| Primer | | | | (1) | (1) | (1) | (1) |
| Primer layer | | Contact angle (°) | | 82 | 82 | 82 | 82 |
| | | Martens hardness (N/mm²) | | 179.3 | 179.3 | 179.3 | 179.3 |
| Evaluation | Early stage | Appearance | | B | A | A | C |
| | | Attachability | | B | C | A | A |
| | | Contact angle (°) | | 105 | 38 | 65 | 100 |
| | | Slipping angle (°) | | 22 | X | X | 40 |
| | After durability test | Appearance | | B | C | A | C |
| | | Attachability | | C | C | B | A |
| | | Contact angle (°) | | N/A | N/A | 50 | 84 |
| | | Slipping angle (°) | | N/A | N/A | X | 71 |

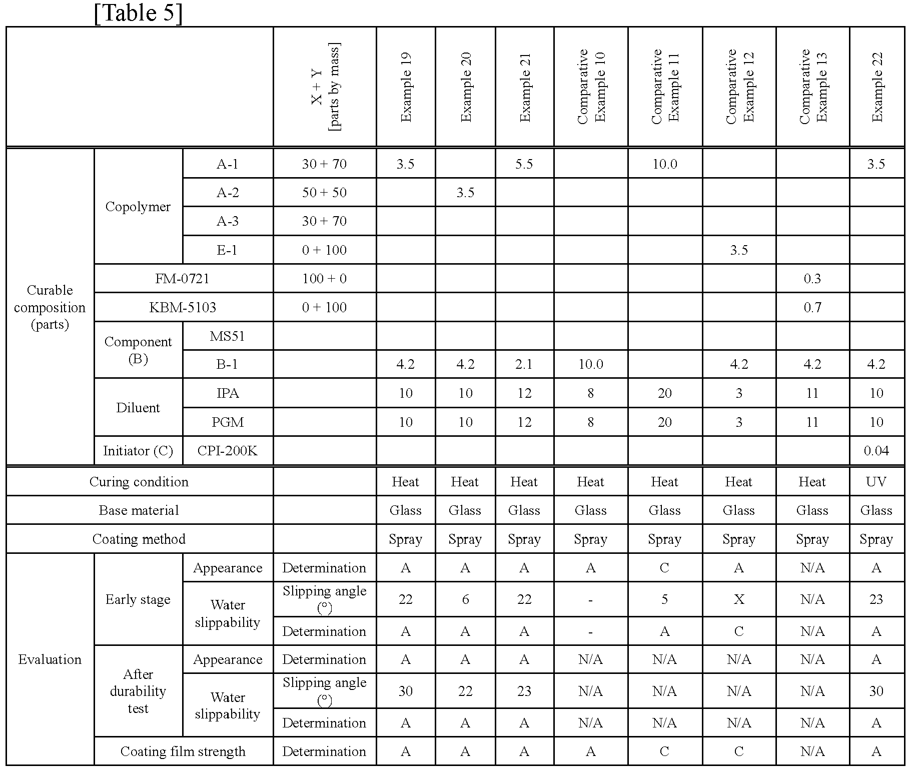

In Tables 1 to 5, the amount of each component is the amount including the volatile fraction. "×" in the evaluation of "Water slippability" means that the liquid droplet did not move on the surface of the cured film even in a case where the tilt angle was changed up to 90°, and thus the slipping angle could not be measured. "-" means that a liquid droplet was not formed and the slipping angle could not be measured because the surface of the cured film was hydrophilic. "N/A" means that measurement could not be carried out due to the influence of the surface state of the coating film.

As shown in Table 1, the cured products of the compositions of Examples 1 to 10 were excellent in appearance and water slippability both in the early stage and after the durability test.

On the other hand, since the composition of Comparative Example 1 did not contain a copolymer that imparts water slippability and the surface of the cured film was hydrophilic, it was not possible to determine water slippability as shown in Table 2.

Since the composition of Comparative Example 2 did not contain the component (B), the appearance of the cured film was inferior as shown in Table 2. Moreover, the hardness of the cured film was low.

In the composition of Comparative Example 3, a copolymer that does not contain a polydimethylsiloxane unit, which is a component that imparts water slippability, was used, and thus the water slippability was low as shown in Table 2.

In the composition of Comparative Example 4, a copolymer that has a small amount of the polydimethylsiloxane unit, which is a component that imparts water slippability, was used, and thus the water slippability was low as shown in Table 2.

In the composition of Comparative Example 5, the constitutional component of the copolymer (A-1) was added as a monomer without being copolymerized, and thus the compatibility in the liquid state was low and the composition could not be molded as a cured film as shown in Table 2.

As shown in Table 3, the laminates of Examples 11 to 18 were excellent in the adhesiveness between the base material and the cured layer, the appearance of the cured layer, the water slippability and the hardness. Further, in Examples 11 to 14 and 16 to 18, the appearance and water slippability of the cured layer after the durability test were favorable, and the durability was excellent.

On the other hand, since the laminate of Comparative Example 6 did not have the component (B), the appearance was inferior as shown in Table 4. In addition, the curability was also poor, the coating film strength was poor, and the function required as a cured film was not provided.

Since the laminate of Comparative Example 7 did not contain the copolymer (A), the water slippability was inferior as shown in Table 4.

In the laminate of Comparative Example 8, a copolymer that does not contain a polydimethylsiloxane unit, which is a component that imparts water slippability, was used, and thus the water slippability was low as shown in Table 4.

In the laminate of Comparative Example 9, a copolymer that has a small amount of the polydimethylsiloxane unit, which is a component that imparts water slippability, was used, and thus the water slippability and the appearance was inferior as shown in Table 4.

As shown in Table 5, the cured films of Examples 19 to 22 were excellent in appearance and water slippability in the early stage and after the weather fastness test.

On the other hand, since the cured film of Comparative Example 10 did not contain a copolymer that imparts water slippability, and the surface of the cured film was hydrophilic, it was not possible to determine water slippability as shown in Table 5.

Since the cured film of Comparative Example 11 did not contain the component (B), the appearance was inferior as shown in Table 5. In addition, the curability was also poor, the coating film strength was poor, and the function required as a cured film was not provided.

In the cured film of Comparative Example 12, a copolymer that does not contain a polyalkylsiloxane unit, which is a component that imparts water slippability, was used, and thus the water slippability was low as shown in Table 5.

In Comparative Example 13, since the constitutional component of the copolymer (A-1) was added as a monomer to the curable composition without being copolymerized, the compatibility in the liquid state was low and the composition could not be molded as a cured film as shown in Table 5.

## Claims

1. A resin composition comprising:
a copolymer (A) containing a constitutional unit based on a silicone macromonomer (X) that contains a polyalkylsiloxane unit and a constitutional unit based on a monomer (Y) having a group represented by Formula (1); and
a component (B) consisting of a silane compound or a partially hydrolyzed condensate thereof,
wherein with respect to a total mass of all constitutional units that constitute the copolymer (A), a total of a proportion of the constitutional unit based on the silicone macromonomer (X) and a proportion of the constitutional unit based on the monomer (Y) is 55% by mass or more,
-R¹-M(R²)ᵣ(OR³)ₘ₋ᵣ (1)
where M represents Al, Fe, In, Ge, Hf, Si, Ti, Sn, Zr, or Ta, R¹ represents a hydrocarbon group having 1 to 5 carbon atoms, R² represents an alkyl group having 1 to 5 carbon atoms, an alkenyl group having 2 to 5 carbon atoms, or an aryl group, R³ represents a hydrogen atom, an alkyl group having 1 to 5 carbon atoms, an alkenyl group having 2 to 5 carbon atoms, an aryl group, or an acyl group, m represents an integer of 3 to 4 depending on M, r represents an integer of 0 to 3, when r is 2 or more, r pieces of R²'s may be different from each other, and when m - r is 2 or more, (m - r) pieces of OR³'s may be different from each other.

2. The resin composition according to Claim 1,
wherein the component (B) consists of at least one silane compound represented by Formula (b) or a partially hydrolyzed condensate thereof,
R⁴₄₋ₙSi(OR⁵)ₙ (b)
where R⁴ represents a hydrogen atom, an alkyl group, an aryl group, or an aralkyl group, R⁵ represents an alkyl group or a phenyl group, n represents an integer of 2 to 4, n pieces of OR⁵'s may be different from each other, and when n is 2, (4 - n) pieces of R⁴'s may be different from each other.

3. The resin composition according to Claim 1 or 2,
wherein the silicone macromonomer (X) has a weight average molecular weight of 500 to 40,000.

4. The resin composition according to any one of Claims 1 to 3,
wherein with respect to the total mass of all constitutional units that constitute the copolymer (A), the proportion of the constitutional unit based on the silicone macromonomer (X) is 15% to 60% by mass, and the proportion of the constitutional unit based on the monomer (Y) is 40% to 85% by mass.

5. The resin composition according to any one of Claims 1 to 4,
wherein the copolymer (A) has a weight average molecular weight of 3,000 to 400,000.

6. The resin composition according to any one of Claims 1 to 5,
wherein the component (B) has a weight average molecular weight of 500 or more.

7. The resin composition according to any one of Claims 1 to 6,
wherein the component (B) is a partially hydrolyzed condensate of tetraalkoxysilane.

8. The resin composition according to any one of Claims 1 to 7,
wherein the component (B) is a secondary reactant obtained by further subjecting a partially hydrolyzed condensate of at least one kind of the silane compound, the partially hydrolyzed condensate having a weight average molecular weight of 300 to 3000, to a hydrolytic condensation reaction in a presence of a catalyst.

9. The resin composition according to any one of Claims 1 to 8, further comprising an initiator (C).

10. The resin composition according to Claim 9,
wherein the initiator (C) is a photopolymerization initiator.

11. The resin composition according to Claim 9 or 10,
wherein the initiator (C) contains at least one selected from the group consisting of a photoacid generator and a photobase generator.

12. The resin composition according to any one of Claims 1 to 11,
wherein the resin composition is used in a use application for a sensing member.

13. A cured product of the resin composition according to any one of Claims 1 to 12.

14. A cured product comprising:
a copolymer (A) containing a constitutional unit based on a silicone macromonomer (X) that contains a polyalkylsiloxane unit and a constitutional unit based on a monomer (Y) having a group represented by Formula (1); and
a component (B) consisting of a silane compound or a partially hydrolyzed condensate thereof,
wherein the cured product has a surface on which 20 µL of distilled water at 23°C has a slipping angle of 60° or less, the slipping angle being measured by tilting a base material according to intermittent tilting in which a tilt angle is intermittently changed by 1°, after carrying out a durability test for 96 hours under conditions of a tank temperature of 50°C and a tank humidity of 99% RH or more and subsequently,
-R¹-M(R²)ᵣ(OR³)ₘ₋ᵣ (1)
where M represents Al, Fe, In, Ge, Hf, Si, Ti, Sn, Zr, or Ta, R¹ represents a hydrocarbon group having 1 to 5 carbon atoms, R² represents an alkyl group having 1 to 5 carbon atoms, an alkenyl group having 2 to 5 carbon atoms, or an aryl group, R³ represents a hydrogen atom, an alkyl group having 1 to 5 carbon atoms, an alkenyl group having 2 to 5 carbon atoms, an aryl group, or an acyl group, m represents an integer of 3 to 4 depending on M, r represents an integer of 0 to 3, when r is 2 or more, r pieces of R²'s may be different from each other, and when m - r is 2 or more, (m - r) pieces of OR³'s may be different from each other.

15. A laminate comprising:
a base material; and
a layer consisting of the cured product according to Claim 14.

16. A laminate comprising:
a primer layer provided on a base material; and
a layer consisting of the cured product according to Claim 14 provided on the primer layer.

17. A resin composition comprising:
a copolymer (A) containing a constitutional unit based on a silicone macromonomer (X) that contains a polyalkylsiloxane unit and a constitutional unit based on a monomer (Y) having a group represented by Formula (1);
a component (B) consisting of a silane compound or a partially hydrolyzed condensate thereof; and
a photopolymerization initiator,
-R¹-M(R²)ᵣ(OR³)ₘ₋ᵣ (1)
where M represents Al, Fe, In, Ge, Hf, Si, Ti, Sn, Zr, or Ta, R¹ represents a hydrocarbon group having 1 to 5 carbon atoms, R² represents an alkyl group having 1 to 5 carbon atoms, an alkenyl group having 2 to 5 carbon atoms, or an aryl group, R³ represents a hydrogen atom, an alkyl group having 1 to 5 carbon atoms, an alkenyl group having 2 to 5 carbon atoms, an aryl group, or an acyl group, m represents an integer of 3 to 4 depending on M, r represents an integer of 0 to 3, when r is 2 or more, r pieces of R²'s may be different from each other, and when m - r is 2 or more, (m - r) pieces of OR³'s may be different from each other.

18. A cured product comprising:
a copolymer (A) containing a constitutional unit based on a silicone macromonomer (X) that contains a polyalkylsiloxane unit and a constitutional unit based on a monomer (Y) having a group represented by Formula (1);
a component (B) consisting of a silane compound or a partially hydrolyzed condensate thereof; and
a photopolymerization initiator,
-R¹-M(R²)ᵣ(OR³)ₘ₋ᵣ (1)
where M represents Al, Fe, In, Ge, Hf, Si, Ti, Sn, Zr, or Ta, R¹ represents a hydrocarbon group having 1 to 5 carbon atoms, R² represents an alkyl group having 1 to 5 carbon atoms, an alkenyl group having 2 to 5 carbon atoms, or an aryl group, R³ represents a hydrogen atom, an alkyl group having 1 to 5 carbon atoms, an alkenyl group having 2 to 5 carbon atoms, an aryl group, or an acyl group, m represents an integer of 3 to 4 depending on M, r represents an integer of 0 to 3, when r is 2 or more, r pieces of R²'s may be different from each other, and when m - r is 2 or more, (m - r) pieces of OR³'s may be different from each other.

19. A manufacturing method for cured product comprising:
curing a resin composition containing a copolymer (A) containing a constitutional unit based on a silicone macromonomer (X) that contains a polyalkylsiloxane unit and a constitutional unit based on a monomer (Y) having a group represented by Formula (1) and a component (B) containing a silane compound or a partially hydrolyzed condensate thereof, by heating treatment or active energy ray irradiation,
-R¹-M(R²)ᵣ(OR³)ₘ₋ᵣ (1)
where M represents Al, Fe, In, Ge, Hf, Si, Ti, Sn, Zr, or Ta, R¹ represents a hydrocarbon group having 1 to 5 carbon atoms, R² represents an alkyl group having 1 to 5 carbon atoms, an alkenyl group having 2 to 5 carbon atoms, or an aryl group, R³ represents a hydrogen atom, an alkyl group having 1 to 5 carbon atoms, an alkenyl group having 2 to 5 carbon atoms, an aryl group, or an acyl group, m represents an integer of 3 to 4 depending on M, r represents an integer of 0 to 3, when r is 2 or more, r pieces of R²'s may be different from each other, and when m - r is 2 or more, (m - r) pieces of OR³'s may be different from each other.
